# EUROPEAN PATENT APPLICATION

(11) **EP 3 777 563 A1**
(43) Date of publication of application: **17.02.2021**
(21) Application number: 19777049.8
(22) Date of filing: 29.03.2019
(51) Int. Cl.: A23L 27/00, A23L 5/00, A23L 33/10, A23L 33/20, A23L 33/29

(54) **SWEET COMPOSITION THAT ELICITS SWEET TASTE RESPONSE MEDIATED BY SWEET RECEPTORS OTHER THAN SWEET RECEPTOR (T1R2/T1R3)**

(30) Priority: 30.03.2018 JP 2018069160; 07.12.2018 JP 2018230083
(71) Applicant: Suntory Holdings Limited, Osaka 530-8203 (JP)
(72) Inventor: OHKURI, Tadahiro, Kawasaki-shi, Kanagawa 211-0067 (JP); FUJIE, Akiko, Kawasaki-shi, Kanagawa 211-0067 (JP); YOKOO, Yoshiaki, Kawasaki-shi, Kanagawa 211-0067 (JP); ASAMI, Yoji, Kawasaki-shi, Kanagawa 211-0067 (JP); NAGAO, Koji, Kawasaki-shi, Kanagawa 211-0067 (JP)
(74) Representative: Mewburn Ellis LLP
(86) International application number: PCT/JP2019/014357
(87) International publication number: WO 2019/189898

(57) **Abstract**

The present invention relates, for instance, to a food or beverage comprising: (a) a sweet substance that induces a response through a taste-related molecule other than the sweet taste receptor T1R2/T1R3; (b) a sodium source; and (c) a naturally occurring high-intensity sweet substance having a good taste quality, wherein the amount of the ingredient (b) is 11.5 to 46 mg/100 ml in terms of sodium and the amount of the ingredient (c) is at a sweetness threshold or more.

## Description

### Technical Field

The present invention relates to sweet foods or beverages having sweetness intrinsically close to that of sucrose, in particular, a low-calorie sweet food or beverage therewith, a process for producing the food or beverage, a sweetener composition for giving sweetness intrinsically close to that of sucrose, and a method of screening for a sweet substance having sweetness intrinsically close to that of sucrose.

### Background Art

Humans have five sensory systems, and the sense of taste is one of the sensory systems of humans. The taste receptor organ to receive tastes is called taste buds, which exist on the fungiform papillae existing over a wide area, mainly on the tip of the tongue, on the vallate papillae existing on a limited area of the back of the tongue, and on the foliate papillae. The taste buds are a cell assembly composed of elongate cells, called taste cells, and basal cells. The taste cells protrude microvilli toward the tongue surface, and form synapses at bottom of the cells with taste nerve fibers entering the taste buds. Stimuli from taste cells are transmitted as taste information via the taste nerves to the brain, where the tastes we usually sense are perceived. Known taste receptors of sweetness include T1R2 and T1R3. T1R2 and T1R3 are reported to form hetero-dimers (Non-patent Literatures 1 to 3).

Although various studies have been made on the sense of taste, little has been revealed yet in this field. We usually experience various tastes of foods. Foods that seem to be tasty have appropriately mixed and well-harmonized tastes. The taste of foods may be tasted as a single taste in some cases, but is often tasted as a mixed taste of various tastes, which are associated with one another.

Meanwhile, foods and beverages have been required to have lower calories in addition to a good taste in recent years. This relates to a fact that lifestyle-related diseases such as obesity and diabetes are regarded as a problem.

However, to reduce the calorie of foods and beverages, their sugar concentration has to be maintained low.

To date, various sweeteners have been developed as alternatives for sugars (also referred to as sucrose), which have held an important center position of sweetener since ancient times, and many kinds of sweetener can be used for foods. The sweeteners are largely grouped into two kinds: sugar-based sweeteners and non-sugar based sweeteners. The sugar-based sweeteners can be classified into sucrose, starch-derived sugars, other sugars, sugar alcohols, etc. The non-sugar based sweeteners can be classified into natural sweeteners and synthetic sweeteners or low-intensity sweeteners and high-intensity sweeteners.

When sucrose (with a degree of sweetness of 1.0) in a food or beverage is replaced by a low-calorie sweetener or is newly designed, part or all of the sucrose may be replaced by a sweetener, other than sucrose, selected from the group consisting of sugar-based sweeteners and/or non-sugar based sweeteners or a sweetener, other than sucrose, selected from the group consisting of low-intensity sweeteners and/or high-intensity sweeteners. However, the degree of sweetness of each sugar-based sweetener is about 0.1 to 1.5 and is low. Accordingly, primarily used are, in general, non-sugar based sweeteners with a high degree of sweetness several hundred times the degree of sweetness of sucrose. Unfortunately, the sweet taste exhibited by the high-intensity sweeteners is often followed by a distinct aftertaste, which prevents a good taste from being provided. Then, high-intensity-sweetener-containing lower-calorie beverages (beverages in which high-intensity sweeteners such as sucralose are blended and are further blended with brandy absolute or wine lees oil) have been being developed in which part or all of sucrose is replaced by a high-intensity sweetener and the sweetness quality of the high-intensity sweetener is improved to be like sucrose (Patent Literature 1).

Concerning the molecular mechanism of sweetness reception, it has been revealed that a sweetness inhibitor lactisole acts on the transmembrane domain of the human T1R3 of a sweet taste receptor (T1R2/T1R3 heterodimer) to inhibit sweetness signaling mediated by a sweet substance (Non-Patent Literatures 4 and 5). Meanwhile, sugar transporters SGLT1 (sodium-glucose cotransporter 1) and GLUTs (glucose transporters) are found to be expressed on mouse taste cells (Non-Patent Literature 6). In mice, the presence of a T1R-independent pathway, in which disaccharides are converted, by an enzyme expressed in each taste cell, into monosaccharides to be incorporated by sugar transporters on the taste cell, is suggested (Non-Patent Literature 7).

However, in humans, it is still unclear whether or not humans feel/sense sweet taste of sweeteners through a pathway other than the sweet taste receptor (T1R2/T1R3 heterodimer) or whether or not non-calorie sweeteners involve such a pathway.

As an example of a contrast effect, which is an interaction of tastes, there has been long known a phenomenon in which addition of salt to sweet red-bean soup enhances sweetness. There is an example that reports the interaction between saltiness and sweetness by focusing on this phenomenon, and it is concluded that the interaction between sweetness and saltiness requires sweetness that is strong to a certain degree (a 15% solution) and a salt concentration that is high to a certain degree (0.1 to 0.2%) (Non-patent Literature 8).

Here, Patent Literature 2 describes a turmeric extract-containing beverage in which given amounts of D-psicose, sodium citrate, acesulfame K, sucralose, etc., are blended. Patent Literature 3 describes a cola beverage in which given amounts of D-psicose, stevia, sodium citrate, etc., are blended. Patent Literature 4 describes a liquid sweetener in which given amounts of D-psicose, saccharin sodium, etc., are blended. Patent Literature 5 describes a beverage in which given amounts of sodium gluconate, erythritol, stevia, etc., are blended. Patent Literature 6 describes a cola concentrate in which given amounts of a non-sugar diet cola concentrate, rebaudioside M, D-psicose, erythritol, etc., are blended. Patent Literature 7 describes a diet cola beverage in which given amounts of sodium benzoate, rebaudioside M, D-psicose, erythritol, etc., are blended. Patent Literature 8 describes a sweetening formulation in which given amounts of thaumatin, stevia sweet substance, erythritol, and sodium chloride are blended. Patent Literature 9 describes acidified water in which given amounts of Reb X and erythritol are blended. Any of the literatures fails to describe the comparison between the sweetness quality of each beverage and that of sucrose.

### Citation List

### Patent Literature

Patent Literature 1: Japanese Patent No. 4548836
Patent Literature 2: Japanese Patent Laid-Open No. 2015-23803
Patent Literature 3: Japanese Patent Laid-Open No. 2012-70708
Patent Literature 4: Japanese Patent Laid-Open No. 2016-54651
Patent Literature 5: Japanese Patent Laid-Open No. 2000-300190
Patent Literature 6: National Publication of International Patent Application No. 2017-532027
Patent Literature 7: National Publication of International Patent Application No. 2016-518143
Patent Literature 8: Japanese Patent Laid-Open No. 08-89207
Patent Literature 9: National Publication of International Patent Application No. 2015-502404

### Non-patent Literature

Non-Patent Literature 1: Zhao et al., Cell. 2003; 115(3): 255-66
Non-Patent Literature 2: Li et al., Proc Natl Acad Sci U S A. 2002; 99(7): 4692-6
Non-Patent Literature 3 : Fernstrom et al., J Nutr. 2012; 142(6): 1134S-41S
Non-Patent Literature 4 : Jiang et al., J Biol Chem. 2005; 280(15): 15238-46
Non-Patent Literature 5 : Galindo-Cuspinera and Breslin, Chem Senses. 2006; 31(3): 221-5
Non-Patent Literature 6 : Swartz et al., Br J Nutr. 2012; 107(5): 621-30
Non-Patent Literature 7 : Sukumaran et al., Proc Natl Acad Sci U S A. 2016; 113(21): 6035-40
Non-Patent Literature 8: Uchida et al., Research bulletin of Otsuma Women's University for Home economics. 2013; 49: 71-6

### Summary of the Invention

### Technical Problem

Development of a lower-calorie food or beverage exhibiting sweetness intrinsically close to that of sucrose is awaited.

### Solution to the Problem

The present inventors have conducted intensive research so as to solve the above problem and have found that in the co-presence of lactisole, an inhibitor of a sweet taste receptor (T1R2/T1R3), humans can feel sweetness of not only caloric sweeteners such as glucose and fructose but also non-caloric sweeteners such as D-allulose and erythritol. Based on the finding, a lower-calorie composition exhibiting suitable sweetness and having sweetness intrinsically close to that of sucrose has been developed in which a naturally occurring high-intensity sweet substance having a good taste quality, such as rebaudioside D, and a sweet substance that can induce a response through a taste-related molecule other than the above T1R2/T1R3 are blended. Then, the research has continued, and a composition exhibiting sweetness intrinsically close to that of sucrose has been completed by adding sodium in such a low concentration that humans cannot sense it, thereby successfully increasing the sweetness of the former composition and making the sweetness much closer to the sweetness of sucrose.

One aspect of the present invention involves the following.
[1] A food or beverage comprising:
   (a) a sweet substance that induces a response through a taste-related molecule other than the sweet taste receptor T1R2/T1R3;
   (b) a sodium source; and
   (c) a naturally occurring high-intensity sweet substance having a good taste quality,
   wherein the amount of the ingredient (b) is 11.5 to 46 mg/100 ml in terms of sodium and the amount of the ingredient (c) is a sweetness threshold or more.
[2] The food or beverage according to [1], wherein the taste-related molecule other than the sweet taste receptor T1R2/T1R3 is selected from GLUTs, SGLTs, and Kir6.1/SUR1 complex.
[3] The food or beverage according to [1] or [2], wherein the ingredient (a) is a non-calorie sweetener.
[4] The food or beverage according to [3], wherein the non-calorie sweetener is selected from non-calorie hexoses, pentoses, tetroses, polysaccharides, a terminal sugar of which is aldose or ketose, sugar alcohols, and combinations thereof.
[5] The food or beverage according to [4], wherein the non-calorie sweetener is selected from erythritol, D-allulose, and combinations thereof.
[5-1] The food or beverage according to [4], wherein the non-calorie sweetener is selected from erythritol, D-allulose, sorbitol, D-xylose, xylitol, D-ribose, D-tagatose, and combinations thereof.
[6] The food or beverage according to [1] or [2], wherein the ingredient (a) is a calorie sweetener.
[7] The food or beverage according to [6], wherein the calorie sweetener is selected from sucrose, glucose, fructose, and combinations thereof.
[8] The food or beverage according to any one of [1] to [7], wherein the ingredient (c) is selected from rebaudioside D, rebaudioside M, neohesperidin dihydrochalcone, glycyrrhizin, thaumatin, monellin, a mogroside, rubusoside, curculin, mabinlin, brazzein, pentadin, phyllodulcin, hernandulcin, miraculin, a sweet component contained in *Siraitia grosvenorii* plant, a sweet component contained in *Glycyrrhiza glabra* plant, a sweet component contained in *Rubus suavissimus S. Lee* plant, a sweet component contained in *Hydrangea macrophylla var. thunbergii* plant, a sweet component contained in *Sclerochiton ilicifolius* plant, a sweet component contained in *Thaumataococcus daniellii Benth* plant, a sweet component contained in *Dioscoreophyllum volkensii* plant, a sweet component contained in *Curculigo latifolia* plant, a sweet component contained in *Richadella dulcifica* plant, a sweet component contained in *Pentadiplandra brazzeana* plant, a sweet component contained in *Capparis masaikai* plant, a sweet component contained in *Lippia dulcis* plant, and derivatives thereof, and combinations thereof.
[9] The food or beverage according to any one of [1] to [5] and [8], wherein the total energy thereof is 0 to 5 Kcal/100 ml.
[10] The food or beverage according to any one of [1] and [6] to [8], wherein the total energy TE thereof is 0 < TE ≤ 24 Kcal/100 ml.
[11] The food or beverage according to any one of [1] to [10], wherein the amount ratio between the ingredient (c) and the ingredient (a) is 1:100000 to 1:5.
[12] The food or beverage according to any one of [1] to [10], wherein a blending ratio of the ingredient (a) to the whole food or beverage is 0.5 to 10% and a blending ratio of the ingredient (c) to the whole food or beverage is 20 to 550 ppm.
[13] The food or beverage according to any one of [1] to [12], wherein the ingredient (a) comprises at least one sweet substance selected from glucose, sucrose, fructose, erythritol, and D-allulose; and the ingredient (c) comprises at least one sweet substance selected from rebaudioside D, rebaudioside M, and mogroside V.
[13-1] The food or beverage according to any one of [1] to [12], wherein the ingredient (a) comprises at least one sweet substance selected from glucose, sucrose, fructose, erythritol, D-allulose, sorbitol, D-xylose, xylitol, D-tagatose, and D-ribose; and the ingredient (c) comprises at least one sweet substance selected from rebaudioside D, rebaudioside M, and mogroside V.
[14] A method of screening for a sweet substance, comprising the step of evaluating a taste response mediated by a candidate substance in the presence of an inhibitor of a sweet taste receptor T1R2/T1R3 or an inhibitor of a taste-related molecule other than the sweet taste receptor T1R2/T1R3.
[15] The method according to [14], wherein the taste-related molecule is selected from GLUTs, SGLTs, and Kir6.1/SUR1 complex; and the inhibitors are selected from lactisole, gymnemic acid, phlorizin, phloretin, fasentin, STF31, WZB117, BAY-876, cytochalasin B, sotagliflozin, ipragliflozin, empagliflozin, canagliflozin, dapagliflozin, sergliflozin, tofogliflozin, and luseogliflozin.

### Advantageous Effects of the Invention

The present invention exerts one or more effects as follows.
(1) A sweet substance other than sucrose may be used to produce a food or beverage exhibiting sweetness intrinsically close to that of sucrose.
(2) While the calories are kept low, a food or beverage may be given sweetness intrinsically close to that of sucrose.
(3) It is possible to select a sweet substance, other than sucrose, that may give sweetness intrinsically close to that of sucrose.
(4) Sucrose-like low-calorie sweetener composition or food or beverage may be designed.

### Brief Description of the Drawings

[Figure 1] A graph in which the sweetness intensity in the presence or absence of lactisole was compared between sucrose and sucralose.
[Figure 2] A graph in which differences in the sweetness intensity among various sweeteners in the presence of lactisole were compared.
[Figure 3-1] A graph showing the results of sensory evaluation of solutions with various compositions.
[Figure 3-2] A graph showing the results of sensory evaluation of solutions with various compositions.
[Figure 4] A graph showing the results of sensory evaluation of beverages with various compositions.
[Figure 5] A graph in which the sweetness enhancement effect of sodium on various sweeteners was evaluated.
[Figure 6-1] A graph showing how addition of sodium affected the results of sensory evaluation.
[Figure 6-2] A graph showing how addition of sodium affected the results of sensory evaluation.
[Figure 6-3] A graph showing how addition of sodium affected the results of sensory evaluation.
[Figure 6-4] A graph showing how addition of sodium affected the results of sensory evaluation.
[Figure 7] A graph in which the sweetness intensities of sucrose in the presence of phlorizin at various concentrations were compared.
[Figure 8] A graph in which differences in the sweetness intensity among various sweeteners in the presence of phlorizin were compared.
[Figure 9] A graph in which how addition of sodium at various concentrations to erythritol caused a taste response-enhancing effect was evaluated.
[Figure 10] A graph in which how addition of sodium at various concentrations to D-allulose caused a taste response-enhancing effect was evaluated.
[Figure 11] A graph in which differences in the sweetness intensity among various sweeteners in the presence of lactisole were compared.
[Figure 12] A graph in which the sweetness enhancement effect of sodium on various sweeteners was evaluated (n = 2 to 5).
[Figure 13] A graph in which how addition of lactisole and/or phlorizin affected the sweetness intensity of sucrose was compared.
[Figure 14] A graph in which the sweetness intensity of various sweeteners in the presence of lactisole at a concentration of 100 ppm or 200 ppm was compared.
[Figure 15-1] A graph showing how addition of sodium affected the results of sensory evaluation.
[Figure 15-2] A graph showing how addition of sodium affected the results of sensory evaluation.
[Figure 15-3] A graph showing how addition of sodium affected the results of sensory evaluation.
[Figure 15-4] A graph showing how addition of sodium affected the results of sensory evaluation.

### Description of Embodiments

The present invention will now be described in detail. The following embodiments are provided for illustrating the present invention and are not intended to limit the present invention only thereto. The present invention may be implemented in various forms, without departing from the spirit of the present invention.

Note that all documents, as well as laid-open application publications, patent application publications, and other patent documents cited herein shall be incorporated herein by reference. The present specification incorporates the contents of the specification and the drawings of Japanese Patent Application No. 2018-069160, filed on March 30, 2018, and of Japanese Patent Application No. 2018-230083, filed on December 7, 2018, from which the present application claims priority.

### 1. Food or Beverage

A first aspect of the present invention provides the following food or beverage (hereinafter, referred to as a "food or beverage A of the present invention").

A food or beverage comprising:
(a) a sweet substance that induces a response through a taste-related molecule other than the sweet taste receptor T1R2/T1R3;
(b) a sodium source; and
(c) a naturally occurring high-intensity sweet substance having a good taste quality,
wherein the amount of the ingredient (b) is 11.5 to 46 mg/100 ml in terms of sodium and the amount of the ingredient (c) is a sweetness threshold or more.

As used herein, the "sweet taste receptor" refers to a biomolecule that comes in contact with a sweet substance to generate a signal involving a sweetness response. As used herein, the sweet taste receptor is preferably a T1R2/T1R3 dimer (sometimes referred to as T1R2/T1R3). Unless otherwise indicated, the "sweet taste receptor" of the present invention refers to the T1R2/T1R3 dimer. The sweet taste receptor is expressed naturally on the cell surface of each taste cell but may be artificially expressed on other cells. In a specific embodiment, the sweet taste receptor is a human sweet taste receptor.

As used herein, the "sweet substance" means any substance that induces a sweetness response and the "sweetener" means any substance or group of substance that induces a sweetness response. Whether or not a certain substance or group of substance induces a sweetness response may have already been known or may be determined by sensory evaluation, etc. In addition, the sweetness response is typically induced through the sweet taste receptor T1R2/T1R3. Thus, whether or not a certain substance or group of substance can induce a sweetness response may be determined by, for instance, an evaluation system using T1R2/T1R3-expressing cells, an evaluation system using a gustatory nerve response model of T1R2/T1R3-bearing animals (e.g., rodents), or an evaluation system using sweet taste receptor-deficient mice, etc. For instance, in the evaluation system using cells, a test substance is made to contact T1R2/T1R3-expressing cells; and when activation of the cells (e.g., an increase in an intracellular Ca²⁺ concentration) is detected, the test substance can be considered to be a sweet substance (see, for example, Masuda et al., PLoS One. 2012; 7(4): e35380). Meanwhile, in the evaluation system using a gustatory nerve response model, a test substance is made to contact the tongue of each animal (e.g., each mouse) in the presence or absence of a T1R2/T1R3 inhibitor (e.g., gurmarin); and when a response in the presence of the inhibitor is smaller than that in the absence of the inhibitor, the test substance can be considered to be a sweet substance (see, for example, Yasumatsu et al., BMC Neurosci. 2009; 10: 152). In the evaluation system using sweet taste receptor-deficient mice, a test substance is administered to, for instance, T1R3-KO mice; and when the sweetness response is smaller than that of wild-type mice, the test substance can be considered to be a sweet substance (Damak et al, Science, 2003; 301 (5634): 850-3).

The sweet substances can be divided into sugar-based sweeteners and non-sugar based sweeteners in view of structural characteristics and can be divided into low-intensity sweeteners and high-intensity sweeteners based on the degree of sweetness. In addition, based on energy (calories), the sweet substances can also be grouped into calorie sweeteners and non-calorie sweeteners.

Examples of the sugar-based sweeteners include: but are not limited to, starch sugars such as sucrose, lactose, glucose, maltose, glutinous starch syrup, isomerized sugars, fructose; sugar alcohols such as erythritol, sorbitol, mannitol, maltitol, xylitol, palatinit; and sucrose, palatinose, fructo-oligosaccharides, coupling sugar®, lactose, galacto-oligosaccharides, lactosucrose, raffinose, soybean oligosaccharides, and honey. Meanwhile, the sugar-based sweeteners include rare sugars.

The rare sugars refer to naturally less abundant monosaccharides and derivatives thereof. Examples of the rare sugars include: naturally occurring aldoses other than D-glucose, D-galactose, D-mannose, D-ribose, D-xylose, and L-arabinose; naturally occurring ketoses other than D-fructose; and naturally occurring sugar alcohols other than D-sorbitol. Non-limiting examples of the rare sugars include: ketoses such as D-tagatose, D-sorbose, D-allulose (D-psicose), L-fructose, L-allulose (L-psicose), L-tagatose, L-sorbose; aldoses such as altrose, D-allose; and sugar alcohols such as xylitol, erythritol, and D-talitol.

Examples of the non-sugar-based sweeteners include, but are not limited to, steviol glycoside, glycyrrhizin, monellin, thaumatin, aspartame, saccharin, sodium saccharin, disodium glycyrrhizinate, trisodium glycyrrhizinate, acesulfame K, neohesperidin dihydrochalcone, and sucralose.

Each low-intensity sweetener means a compound having approximately the same sweetness as of sucrose (e.g., the sweetness about 0.1 to 2 times or 0.5 to 1.5 times the sweetness of sucrose). Non-limiting examples of the low-intensity sweeteners include: sugar low-intensity sweeteners such as sucrose, isomerized sugars, glucose, fructose, lactose, maltose, xylose, lactulose, fructo-oligosaccharides, malto-oligosaccharides, isomalto-oligosaccharides, galacto-oligosaccharides, coupling sugar®, palatinose; and sugar alcohol low-intensity sweeteners such as maltitol, sorbitol, erythritol, xylitol, lactitol, palatinit, and reduced starch saccharide compounds. In addition, the low-intensity sweeteners include rare sugars.

Each high-intensity sweetener means a compound having a stronger sweetness than sucrose and examples include natural compounds, synthetic compounds, and combinations thereof. The high-intensity sweeteners exhibit, when the amount is the same as of sucrose, sweetness 5 times or more, 10 times or more, 50 times or more, 100 times or more, 500 times or more, 1000 times or more, 5000 times or more, 10000 times or more, 50000 times or more, or 100000 times or more the sweetness of sucrose.

Specific examples of the high-intensity sweeteners include: peptide-based sweeteners such as aspartame, neotame, advantame; sucrose derivatives such as sucralose; synthetic sweeteners (including naturally occurring but distributed synthetic compounds such as neohesperidin dihydrochalcone) such as acesulfame K, saccharin, sodium saccharin, sodium cyclamate, dulcin, disodium glycyrrhizinate, trisodium glycyrrhizinate, neohesperidin dihydrochalcone; plant extract sweeteners such as thaumatin, monellin, curculin, mabinlin, brazzein, pentadin, hernandulcin, 4β-hydroxyhernandulcin, miraculin, glycyrrhizin, rubusoside, phyllodulcin; or high-intensity sweetener component-containing plant extracts such as *Stevia rebaudiana* (stevia) extract, *Siraitia grosvenorii* (luo han guo) extract, *Glycyrrhiza glabra* (glycyrrhiza) extract, *Rubus suavissimus S. Lee* (tencha) extract, *Hydrangea macrophylla var. thunbergii* (sweet tea) extract, *Sclerochiton ilicifolius* extract, *Thaumataococcus daniellii Benth* (Katemfe) extract, *Dioscoreophyllum volkensii* (serendipity berry) extract, *Curculigo latifolia* (Curculigo) extract, *Richadella dulcifica* (miracle fruit) extract, *Pentadiplandra brazzeana* (white liana) extract, *Capparis masaikai* (Mabinlang) extract, *Lippia dulcis* (Mexican sweet herb) extract, and sweetness components thereof; steviol glycosides such as stevia extract and stevia derivatives, for instance, enzyme-treated stevia obtained by subjecting stevia to enzymatic treatment to add glucose; a mogroside obtained by treating luo han guo and luo han guo extract; plant extract-derived glycosides such as phyllodulcin glycoside; and a sweet component contained in *Glycyrrhiza glabra* plant (e.g., triterpene glycosides such as glycyrrhizin), a sweet component contained in *Rubus suavissimus S. Lee* plant (e.g., diterpene glycosides such as rubusoside), a sweet component contained in *Hydrangea macrophylla var. thunbergii* plant (e.g., dihydroisocoumarins such as phyllodulcin), a sweet component contained in *Sclerochiton ilicifolius* plant (e.g., amino acids such as monatin), a sweet component contained in *Thaumataococcus daniellii Benth* plant (e.g., proteins such as thaumatin), a sweet component contained in *Dioscoreophyllum volkensii* plant (e.g., proteins such as monellin), a sweet component contained in *Curculigo latifolia* plant (e.g., proteins such as curculin), a sweet component contained in *Richadella dulcifica* plant (e.g., proteins such as miraculin), a sweet component contained in *Pentadiplandra brazzeana* plant (e.g., proteins such as brazzein, pentadin), a sweet component contained in *Capparis masaikai* plant (e.g., proteins such as mabinlin), and a sweet component contained in *Lippia dulcis* plant (e.g., sesquiterpenes such as hernandulcin, 4β-hydroxyhernandulcin).

Examples of the steviol glycosides include steviosides, rebaudioside A (hereinafter, rebaudioside is sometimes abbreviated as Reb), RebB, RebC, RebD, RebM, RebN, RebO, dulcoside A, and rubusoside. Examples of the mogrosides include mogroside IV and mogroside V.

The glycyrrhiza extract refers to extract mainly based on glycyrrhizinic acid obtained from roots or root tubers of Glycyrrhiza uralensis, Glycyrrhiza inflata or Glycyrrhiza glabra. Examples of the glycyrrhiza extract include glycyrrhiza extract, glycyrrhizin, and licorice extract.

The sucrose derivatives are obtained by substituting an OH group or a H group of sucrose with another substituent, and examples thereof include halogen derivatives of sucrose (sucralose), oxathiazinone dioxide derivatives, sugar alcohol, aldonic acid, and uronic acid.

Each calorie sweetener typically means a sweet substance having energy of 4 kcal/g. The energy of each sweet substance may be known or may be determined by: measuring its content by HPLC, etc., and calculating the energy as multiplied by an energy conversion factor; or measuring a physical combustion heat by using a calorimeter (e.g., a bomb calorimeter) and correcting it by using a digestion-absorption rate and/or excreted calories. Non-limiting examples of the calorie sweeteners include sucrose, lactose, glucose, maltose, glutinous starch syrup, isomerized sugars, and fructose.

The non-calorie sweeteners typically refer to those that are unlikely to be digested *in vivo* and are thus characterized by less intake energy, and mean sweet substances having energy of less than 2 kcal/g, preferably less than 1 kcal/g, and more preferably less than 0.5 kcal/g. Non-limiting examples of the non-calorie sweeteners include: non-calorie hexoses such as allulose (psicose), allose; non-calorie pentoses such as xylose, arabinose; non-calorie tetroses such as erythrose, threose; and non-calorie sugar alcohols such as erythritol and allitol.

Sweet substances can also be categorized by their energy (calorie) level. For instance, sweet substances can be categorized into a sweet substance having energy of 4 kcal/g or more and a sweet substance having energy of less than 4 kcal/g. Sweet substances having energy of less than 4 kcal/g can further be categorized into a sweet substance having energy of less than 3 kcal/g, a sweet substance having energy of less than 2.5 kcal/g, a sweet substance having energy of less than 2 kcal/g, a sweet substance having energy of less than 1.5 kcal/g, a sweet substance having energy of less than 1 kcal/g, a sweet substance having energy of less than 0.5 kcal/g, a sweet substance having energy of 1 kcal/g or more and less than 4 kcal/g, a sweet substance having energy of 2 kcal/g or more and less than 4 kcal/g, a sweet substance having energy of 3 kcal/g or more and less than 4 kcal/g, a sweet substance having energy of 2 kcal/g or more and less than 3 kcal/g, a sweet substance having energy of 1 kcal/g or more and less than 2 kcal/g, a sweet substance having energy of 0 kcal/g or more and less than 2 kcal/g, a sweet substance having energy of 0 kcal/g or more and less than 1 kcal/g, and the like. A sweet substance having energy of 4 kcal/g or more includes sucrose, lactose, glucose, maltose, glutinous starch syrup, isomerized sugars, fructose, and the like, a sweet substance having energy of 2 kcal/g or more and less than 4 kcal/g includes sorbitol, xylitol, D-xylose, D-ribose, D-tagatose, arabinose, and the like, a sweet substance having energy of 0 kcal/g or more and less than 2 kcal/g includes D-allulose, erythritol, allose, erythrose, threose, allitol, and the like.

The "sweet substance that induces a response through a taste-related molecule other than the sweet taste receptor T1R2/T1R3" (as used herein, sometimes referred to as a "sweet substance (a)" or "ingredient (a)") means a sweet substance that can trigger a response (e.g., a sweetness response) even if a response (e.g., a sweetness response) through the sweet taste receptor T1R2/T1R3 is inhibited. Whether or not a certain sweet substance can trigger a sweetness response even if a sweetness response through the sweet taste receptor T1R2/T1R3 is inhibited may be determined by, for instance, measuring, by sensory evaluation or cell assay, the sweetness intensity of a solution (control solution), in which only the above sweet substance has been dissolved, and the sweetness intensity (remaining sweetness intensity) of a solution (test solution), in which a sweet taste receptor T1R2/T1R3 inhibitor (e.g., lactisole, gymnemic acid) is added, to the control solution, in an amount sufficient to inhibit a sweetness response through the sweet taste receptor T1R2/T1R3; and by comparing the sweetness intensity of the control solution and the sweetness intensity of the test solution.

The amount of the sweet taste receptor inhibitor sufficient to inhibit a sweetness response refers to, for example, an amount at which when the inhibitor is added to sucralose, only a sweetness intensity less than the sweetness threshold of sucrose is sensed and when the inhibitor is added to sucrose, a sweetness intensity equal to or more than the sweetness threshold of sucrose is sensed. Note that the sweetness threshold of sucrose is generally about 0.4 to 0.7 w/v%. For instance, in the below-described Example 1, 100 ppm of a sweet taste receptor inhibitor lactisole was added to 12 w/v% sucrose solution. At that time, the sweetness intensity when no inhibitor was added was set to 100%. In this case, the remaining sweetness intensity when the inhibitor was added was 17%, which corresponds to the sweetness level of 2.0 w/v% sucrose solution and is a threshold or more. In contrast, while the sweetness intensity when no inhibitor was added was set to 100%, the remaining sweetness intensity of 200 ppm sucralose solution when the inhibitor was added was 1.2%, which corresponds to the sweetness level of 0.144 w/v% sucrose solution and is less than the threshold. As long as the above matters are met, the amounts of the sweet substance and the sweet taste receptor inhibitor are not limited to the above and may be freely adjusted.

A control solution may be prepared such that the sweetness intensity corresponds to sucrose Brix 12 and 100 ppm lactisole may be used as a sweet taste receptor inhibitor. In this specific embodiment, the ratio of the sweetness intensity of each test solution to the sweetness intensity of the control solution (e.g., the percentage when the sweetness intensity of the control solution is set to 100%) may be, for example, 9% or higher, 10% or higher, 11% or higher, 12% or higher, 13% or higher, 14% or higher, 15% or higher, or 16% or higher. In this case, this sweet substance can be considered to be a "sweet substance that induces a response through a taste-related molecule other than the sweet taste receptor T1R2/T1R3".

Examples of another method for determining whether or not a certain sweet substance can trigger a sweetness response even if a sweetness response through the sweet taste receptor T1R2/T1R3 is inhibited include a method comprising: comparing the remaining sweetness intensity of sucrose when a sweetness response through the sweet taste receptor T1R2/T1R3 is inhibited and the remaining sweetness intensity of a test sweet substance when a sweetness response through the sweet taste receptor T1R2/T1R3 is inhibited; and determining, when the remaining sweetness intensity of the test sweet substance is close to the remaining sweetness intensity of sucrose, that the test sweet substance is a sweet substance that can trigger a sweetness response even if a sweetness response through the sweet taste receptor T1R2/T1R3 is inhibited. The remaining sweetness intensities of sucrose and the test sweet substance may be obtained, for instance, by measuring, by sensory evaluation or cell assay, the sweetness intensity of a solution (test solution) prepared by dissolving sucrose or the test sweet substance and an inhibitor (e.g., lactisole, gymnemic acid) of the sweet taste receptor T1R2/T1R3 in an amount sufficient to inhibit a sweetness response through the sweet taste receptor T1R2/T1R3. In addition, the remaining sweetness intensities of sucrose and the test sweet substance may also be obtained by: measuring, by sensory evaluation or cell assay, the sweetness intensity of a solution (control solution) in which only sucrose or the test sweet substance has been dissolved and the sweetness intensity of a solution (test solution) prepared by dissolving, into the control solution, an inhibitor of the sweet taste receptor T1R2/T1R3 in an amount sufficient to inhibit a sweetness response through the sweet taste receptor T1R2/T1R3; and comparing the sweetness intensity of the control solution and the sweetness intensity of the test solution.

In a specific embodiment where the sweetness intensity corresponds to sucrose Brix 12 and a test solution containing, as a sweet taste receptor inhibitor, 100 ppm lactisole is used, the ratio of the remaining sweetness intensity of each test solution to the remaining sweetness intensity of sucrose (e.g., the percentage when the remaining sweetness intensity of sucrose is set to 100%) may be, for example, 50% or higher, 51% or higher, 52% or higher, 53% or higher, 54% or higher, 55% or higher, 56% or higher, 57% or higher, 58% or higher, or 59% or higher. In this case, this sweet substance can be considered to be a "sweet substance that induces a response through a taste-related molecule other than the sweet taste receptor T1R2/T1R3".

Also, in a specific embodiment where the sweetness intensity corresponds to sucrose at Brix 12 and a test solution containing, as a sweet taste receptor inhibitor, 200 ppm lactisole is used, the ratio of the remaining sweetness intensity of each test solution to the remaining sweetness intensity of sucrose (e.g., the percentage when the remaining sweetness intensity of sucrose is set to 100%) may be, for example, 50% or higher, 51% or higher, 52% or higher, 53% or higher, 54% or higher, 55% or higher, 56% or higher, 57% or higher, 58% or higher, or 59% or higher. In this case, this sweet substance can be considered to be a "sweet substance that induces a response through a taste-related molecule other than the sweet taste receptor T1R2/T1R3".

Examples of another method for determining whether or not a certain sweet substance is a "sweet substance that induces a response through a taste-related molecule other than the sweet taste receptor T1R2/T1R3" include a method comprising determining it by using, as a criterion, whether or not the sweet substance has a reduced sweetness response when an inhibitor of a taste-related molecule other than the sweet taste receptor T1R2/T1R3 is used. Whether or not the sweetness response is reduced may be evaluated, for example, by measuring, by sensory evaluation or cell assay, the sweetness intensity of a solution (control solution) in which only a test sweet substance has been dissolved and the sweetness intensity (remaining sweetness intensity) of a solution (test solution) prepared by adding, to the control solution, an inhibitor of a taste-related molecule other than the sweet taste receptor T1R2/T1R3; and comparing the both. If a decrease in the sweetness response is more than a prescribed numerical value, this test sweet substance can be considered to be a "sweet substance that induces a response through a taste-related molecule other than the sweet taste receptor T1R2/T1R3".

The "taste-related molecule other than the sweet taste receptor T1R2/T1R3" (sometimes referred to as a "non-T1R2/T1R3 taste-related molecule) refers to a molecule, other than the sweet taste receptor T1R2/T1R3, that can trigger a taste response, in particular, a sweetness response. In some embodiments, the non-T1R2/T1R3 taste-related molecule is expressed on sweet taste receptor T1R2/T1R3-expressing cells (e.g., taste cells), in particular, on their cell surface. In some embodiments, the activity of the non-T1R2/T1R3 taste-related molecule is promoted by sodium and/or glucose, etc. In some embodiments, the non-T1R2/T1R3 taste-related molecule is at least one molecule selected from sugar transporters such as GLUTs (e.g., GLUTs 1 to 12, 14, HMIT; in particular, GLUT 2, 4, 8, or 9) and SGLTs (SGLTs 1 to 6, in particular, SGLT 1) and Kir6.1/SUR1 complex. In a more specific embodiment, the non-T1R2/T1R3 taste-related molecule is at least one molecule selected from GLUTs (in particular, GLUT 2, 4, 8, or 9), SGLTs (in particular, SGLT 1), and Kir6.1/SUR1 complex.

The inhibitor of the non-T1R2/T1R3 taste-related molecule is not particularly limited as long as the inhibitor can inhibit the function of the molecule. Examples include: GLUT inhibitors such as phloretin, fasentin, STF31, WZB117, BAY-876, cytochalasin B; and SGLT inhibitors such as phlorizin, sotagliflozin, ipragliflozin, empagliflozin, canagliflozin, dapagliflozin, tofogliflozin, sergliflozin, and luseogliflozin.

In a specific embodiment where the sweetness intensity corresponds to sucrose Brix 12 and a test solution containing, as an inhibitor of the non-T1R2/T1R3 taste-related molecule, 500 µM phlorizin, a relative value for the sweetness intensity of each test solution when the sweetness intensity of phlorizin-free control solution is set to 100% may be, for example, less than 94%, less than 93.5%, less than 93%, less than 92.5%, less than 92%, less than 91.5%, less than 91%, less than 90.5%, or less than 90%. That is, a percentage of decrease in the sweetness intensity may be more than 6%, more than 6.5%, more than 7%, more than 7.5%, more than 8%, more than 8.5%, more than 9%, more than 9.5%, more than or 10%. In this case, this sweet substance can be considered to be a "sweet substance that induces a response through a taste-related molecule other than the sweet taste receptor T1R2/T1R3".

The sweetness intensity means how strong a substance exhibits sweetness. For instance, if the sweetness intensity exhibited by sucrose per unit concentration Brix 1 is defined as a degree of sweetness of 1, the degree of sweetness of glucose is 0.6 to 0.7 (median: 0.65). The sweetness intensity of glucose is a numerical value obtained by multiplying this degree of sweetness by a glucose concentration Brix value. Thus, if the glucose concentration is Brix 1.5, the sweetness intensity of the glucose is given as 0.65 × 1.5 = 0.975.

**Table 1**

| (D-)Sugar | Degree of Sweetness |
|---|---|
| Sucrose | 1 |
| Glucose | 0.6 to 0.7 |
| Fructose | 1.3 to 1.7 |
| Maltose | 0.4 |
| Fructo-oligosaccharide | 0.6 |
| Malto-oligosaccharide | 0.3 |
| Isomalto-oligosaccharide | 0.4 to 0.5 |
| Galacto-oligosaccharide | 0.7 |
| Isomerized sugar | 0.8 to 0.9 |
| Lactose | 0.2 to 0.3 |
| Psicose | 0.7 |
| Allose | 0.8 |
| Tagatose | 0.9 |

Examples of the sweet substance (a) include, but are not limited to, sugar-based sweeteners and low-intensity sweeteners. In some embodiments, examples of the sweet substance (a) include non-calorie sugar-based sweeteners and low-intensity sweeteners. In a more preferable embodiment, examples of the sweet substance (a) include non-calorie hexoses, pentoses, tetroses, polysaccharides, a terminal sugar of which is aldose or ketose, sugar alcohols, and combinations thereof. In a specific embodiment, examples of the sweet substance (a) include allulose, allose, xylose, arabinose, erythrose, threose, erythritol, and combinations thereof. In some embodiments, examples of the sweet substance (a) include rare sugars. In a more preferable embodiment, examples of the sweet substance (a) include non-calorie rare sugars. In a more preferable embodiment, examples of the sweet substance (a) include erythritol, D-allulose, and combinations thereof. In another embodiment, examples of the sweet substance (a) include calorie sugar-based sweeteners and low-intensity sweeteners. In a preferable embodiment, examples of the sweet substance (a) include sucrose, glucose, fructose, and combinations thereof. In another embodiment, examples of the sweet substance (a) include both non-calorie sugar-based sweeteners and low-intensity sweeteners and calorie sugar-based sweeteners and low-intensity sweeteners. In a specific embodiment, examples of the sweet substance (a) include erythritol, D-allulose, sucrose, glucose, fructose, and combinations thereof.

In some embodiments, examples of the sweet substance (a) include a sweet substance having energy of less than 4 kcal/g. In another embodiments, examples of the sweet substance (a) include a combination of a sweet substance having energy of less than 4 kcal/g and a sweet substance having energy of 4 kcal/g or more. In these embodiments, a sweet substance having energy of less than 4 kcal/g may include a sweet substance having energy of less than 3 kcal/g, a sweet substance having energy of less than 2.5 kcal/g, a sweet substance having energy of less than 2 kcal/g, a sweet substance having energy of less than 1.5 kcal/g, a sweet substance having energy of less than 1 kcal/g, a sweet substance having energy of less than 0.5 kcal/g, a sweet substance having energy of 1 kcal/g or more and less than 4 kcal/g, a sweet substance having energy of 2 kcal/g or more and less than 4 kcal/g, a sweet substance having energy of 3 kcal/g or more and less than 4 kcal/g, a sweet substance having energy of 2 kcal/g or more and less than 3 kcal/g, a sweet substance having energy of 1 kcal/g or more and less than 2 kcal/g, a sweet substance having energy of 0 kcal/g or more and less than 2 kcal/g, a sweet substance having energy of 0 kcal/g or more and less than 1 kcal/g, or the like.

In some embodiments, examples of the sweet substance (a) include monosaccharides selected from hexoses, pentoses, and tetroses, and combinations thereof. The hexoses may be selected from ketohexoses such as allulose, fructose, sorbose, tagatose; aldohexoses such as allose, altrose, glucose, mannose, gulose, idose, galactose, talose; and deoxyhexoses such as fucose, fuculose, and rhamnose. The pentoses may be selected from ketopentoses such as ribulose, xylulose; aldopentoses such as ribose, arabinose, xylose, lyxose; and deoxypentoses such as deoxyribose. The tetroses may be selected from ketotetroses such as erythrulose and aldotetroses such as erythrose and threose. The monosaccharides include D-forms and L-forms. In preferable embodiments, the monosaccharides are major stereoisomers in nature. Accordingly, in preferable embodiments, the monosaccharides may be selected from D-allulose, D-fructose, D-sorbose, D-tagatose, D-allose, D-altrose, D-glucose, D-mannose, D-gulose, D-idose, D-galactose, D-talose, D-fucose, D-fuculose, D-rhamnose, D-ribulose, D-xylulose, D-ribose, L-arabinose, D-xylose, D-lyxose, D-deoxyribose, D-erythrulose, D-erythrose, and D-threose. In a specific embodiment, examples of the sweet substance (a) include D-xylose, D-ribose, L-arabinose, D-galactose, D-mannose, D-tagatose, D-allulose, and combinations thereof. In a specific preferable embodiment, examples of the sweet substance (a) include D-fructose, D-glucose, D-xylose, D-ribose, D-allulose, and combinations thereof.

In some embodiments, examples of the sweet substance (a) include sugar alcohols. In preferable embodiments, examples of the sweet substance (a) include sugar alcohols containing each hexose, pentose, or tetrose. In a specific embodiment, examples of the sweet substance (a) include erythritol, xylitol, sorbitol, inositol, mannitol, and combinations of thereof. In a specific preferable embodiment, examples of the sweet substance (a) include erythritol, xylitol, sorbitol, and combinations thereof.

In a very preferable embodiment, examples of the sweet substance (a) include glucose, sucrose, fructose, erythritol, D-allulose, sorbitol, D-xylose, xylitol, D-ribose, and combinations thereof.

In another very preferable embodiment, examples of the sweet substance (a) include glucose, sucrose, fructose, erythritol, D-allulose, xylitol, D-tagatose, and combinations thereof.

The amount of the ingredient (a) contained in a food or beverage of the present invention is not particularly limited as long as the amount can give a predetermined sweetness intensity and/or predetermined energy when combined with the ingredients (b) and (c). In a particular embodiment, the amount Pa (w/v%) of the ingredient (a) contained in a food or beverage of the present invention may be, for example, about 0.1 to about 20, about 0.2 to about 20, about 0.3 to about 19.5, about 0.4 to about 19.5, about 0.5 to about 19, about 0.6 to about 19, about 0.7 to about 18.5, about 0.8 to about 18.5, about 0.9 to about 18, about 1.0 to about 18, about 1.1 to about 17.5, about 1.2 to about 17.5, about 1.3 to about 17, about 1.4 to about 17, about 1.5 to about 16.5, about 1.6 to about 16.5, about 1.7 to about 16, about 1.8 to about 16, about 1.9 to about 15.5, about 2.0 to about 15.5, about 2.1 to about 15, about 2.2 to about 15, about 2.3 to about 14.5, about 2.4 to about 14.5, about 2.5 to about 14, about 2.6 to about 14, about 2.7 to about 13.5, about 2.8 to about 13.5, about 2.9 to about 13, about 3.0 to about 13, about 0.10 to about 1.6, about 0.15 to about 1.6, about 0.20 to about 1.6, about 0.25 to about 1.6, about 0.30 to about 1.6, about 0.35 to about 1.6, about 0.40 to about 1.6, about 0.45 to about 1.6, about 0.50 to about 1.6, about 0.55 to about 1.6, about 0.60 to about 1.6, about 0.65 to about 1.6, about 0.70 to about 1.6, about 0.75 to about 1.6, about 0.80 to about 1.6, about 0.85 to about 1.6, about 0.90 to about 1.6, about 0.95 to about 1.6, about 1.00 to about 1.6, about 1.05 to about 1.6, about 1.10 to about 1.6, about 1.15 to about 1.6, about 1.20 to about 1.6, about 1.25 to about 1.6, about 1.30 to about 1.6, about 1.35 to about 1.6, about 1.40 to about 1.6, about 1.45 to about 1.6, about 1.50 to about 1.6, or about 1.55 to about 1.6.

The sodium source (sometimes referred to as an ingredient (b)) means a compound that can generate a sodium ion when a food or beverage is taken orally. In some embodiments, the amount of the sodium source contained in a food or beverage of the present invention is an amount Pb (mg/100 ml) of about 11.5 to about 46 mg/100 ml in terms of sodium (sodium atom). Depending on the embodiments, the amount of sodium contained in a food or beverage of the present invention may be in the range of about 11.5 to about 46 mg/100 ml, about 12 to about 46 mg/100 ml, about 12.5 to about 46 mg/100 ml, about 13 to about 46 mg/100 ml, about 13.5 to about 46 mg/100 ml, about 14 to about 46 mg/100 ml, about 14.5 to about 46 mg/100 ml, about 15 to about 46 mg/100 ml, about 15.5 to about 46 mg/100 ml, about 16 to about 46 mg/100 ml, about 16.5 to about 46 mg/100 ml, about 17 to about 46 mg/100 ml, about 17.25 to about 46 mg/100 ml, about 17.5 to about 46 mg/100 ml, about 18 to about 46 mg/100 ml, about 18.5 to about 46 mg/100 ml, about 19 to about 46 mg/100 ml, about 19.5 to about 46 mg/100 ml, about 20 to about 46 mg/100 ml, about 11.5 to about 34.5 mg/100 ml, about 12 to about 34.5 mg/100 ml, about 12.5 to about 34.5 mg/100 ml, about 13 to about 34.5 mg/100 ml, about 13.5 to about 34.5 mg/100 ml, about 14 to about 34.5 mg/100 ml, about 14.5 to about 34.5 mg/100 ml, about 15 to about 34.5 mg/100 ml, about 15.5 to about 34.5 mg/100 ml, about 16 to about 34.5 mg/100 ml, about 16.5 to about 34.5 mg/100 ml, about 17 to about 34.5 mg/100 ml, about 17.25 to about 34.5 mg/100 ml, about 17.5 to about 34.5 mg/100 ml, about 11.5 to about 23 mg/100 ml, about 12 to about 23 mg/100 ml, about 12.5 to about 23 mg/100 ml, about 13 to about 23 mg/100 ml, about 13.5 to about 23 mg/100 ml, about 14 to about 23 mg/100 ml, about 14.5 to about 23 mg/100 ml, about 15 to about 23 mg/100 ml, about 15.5 to about 23 mg/100 ml, about 16 to about 23 mg/100 ml, about 16.5 to about 23 mg/100 ml, about 17 to about 23 mg/100 ml, about 17.25 to about 23 mg/100 ml, about 17.5 to about 23 mg/100 ml, about 11.5 to about 17.25 mg/100 ml, about 12 to about 17.25 mg/100 ml, about 12.5 to about 17.25 mg/100 ml, about 13 to about 17.25 mg/100 ml, about 13.5 to about 17.25 mg/100 ml, about 14 to about 17.25 mg/100 ml, about 14.5 to about 17.25 mg/100 ml, about 15 to about 17.25 mg/100 ml, about 15.5 to about 17.25 mg/100 ml, about 16 to about 17.25 mg/100 ml, about 16.5 to about 17.25 mg/100 ml, or about 17 to about 17.25 mg/100 ml.

In other embodiments, the amount of sodium contained in a food or beverage of the present invention may be in the range of about 6 to about 46 mg/100 ml, about 6.5 to about 46 mg/100 ml, about 7 to about 46 mg/100 ml, about 7.5 to about 46 mg/100 ml, about 8 to about 46 mg/100 ml, about 8.5 to about 46 mg/100 ml, about 9 to about 46 mg/100 ml, about 9.5 to about 46 mg/100 ml, about 10 to about 46 mg/100 ml, about 10.5 to about 46 mg/100 ml, about 11 to about 46 mg/100 ml, about 6 to about 34.5 mg/100 ml, about 6.5 to about 34.5 mg/100 ml, about 7 to about 34.5 mg/100 ml, about 7.5 to about 34.5 mg/100 ml, about 8 to about 34.5 mg/100 ml, about 8.5 to about 34.5 mg/100 ml, about 9 to about 34.5 mg/100 ml, about 9.5 to about 34.5 mg/100 ml, about 10 to about 34.5 mg/100 ml, about 10.5 to about 34.5 mg/100 ml, about 11 to about 34.5 mg/100 ml, about 6 to about 23 mg/100 ml, about 6.5 to about 23 mg/100 ml, about 7 to about 23 mg/100 ml, about 7.5 to about 23 mg/100 ml, about 8 to about 23 mg/100 ml, about 8.5 to about 23 mg/100 ml, about 9 to about 23 mg/100 ml, about 9.5 to about 23 mg/100 ml, about 10 to about 23 mg/100 ml, about 10.5 to about 23 mg/100 ml, about 11 to about 23 mg/100 ml, about 6 to about 17.25 mg/100 ml, about 6.5 to about 17.25 mg/100 ml, about 7 to about 17.25 mg/100 ml, about 7.5 to about 17.25 mg/100 ml, about 8 to about 17.25 mg/100 ml, about 8.5 to about 17.25 mg/100 ml, about 9 to about 17.25 mg/100 ml, about 9.5 to about 17.25 mg/100 ml, about 10 to about 17.25 mg/100 ml, about 10.5 to about 17.25 mg/100 ml, or about 11 to about 17.25 mg/100 ml.

The amount of sodium contained in the food or beverage may be measured by atomic absorption spectrometry. Meanwhile, when the amount of sodium blended in the sodium source blended is known, the amount of sodium contained in the food or beverage may be calculated from the amount blended.

Non-limiting examples of the sodium source include: organic acid salts such as sodium malate, sodium citrate, sodium tartrate, sodium lactate, sodium alginate, sodium gluconate, sodium ascorbate; inorganic salts such as sodium chloride, sodium sulfate, sodium phosphate, sodium carbonate, sodium disulfide, sodium bicarbonate, sodium hydroxide; and amino acid salts such as sodium argininate, sodium glutamate, sodium aspartate, and sodium caseinate. Among them, preferred are sodium sources such as organic acid salts and inorganic salts. From the viewpoint of cost and universal use as a food or beverage raw material, more preferred are sodium chloride, sodium malate, sodium citrate, sodium carbonate, sodium bicarbonate, sodium tartrate, sodium lactate, sodium ascorbate, sodium gluconate, etc.

The "naturally occurring high-intensity sweet substance having a good taste quality" (as used herein, sometimes referred to as a "sweet substance (c)" or "ingredient (c)") means a naturally occurring high-intensity sweet substance having at least one taste quality characteristic selected from characteristics in which (1) the astringent taste is less; (2) the metallic taste is less; (3) the sweetness aftertaste is less; and (4) the bitter taste is less than that of RebA. Whether or not a certain sweet substance has the above taste quality characteristics may have already been known or may be determined by sensory evaluation, etc. The wording "naturally occurring" does not mean that a high-intensity sweet substance contained in a food or beverage of the present invention is a natural product. If the same substance occurs naturally, the high-intensity sweet substance contained in a food or beverage of the present invention may be produced artificially (non-natural product) (by, for instance, bio-conversion).

Non-limiting examples of the sweet substance (c) include RebD, RebM, neohesperidin dihydrochalcone, glycyrrhizin, thaumatin, monellin, a mogroside, rubusoside, curculin, mabinlin, brazzein, pentadin, phyllodulcin, hernandulcin, miraculin, a good taste quality sweet component contained in *Stevia rebaudiana* plant, a sweet component contained in *Siraitia grosvenorii* plant, a sweet component contained in *Glycyrrhiza glabra* plant, a sweet component contained in *Rubus suavissimus S. Lee* plant, a sweet component contained in *Hydrangea macrophylla var. thunbergii* plant, a sweet component contained in *Sclerochiton ilicifolius* plant, a sweet component contained in *Thaumataococcus daniellii Benth* plant, a sweet component contained in *Dioscoreophyllum volkensii* plant, a sweet component contained in *Curculigo latifolia* plant, a sweet component contained in *Richardella dulcifica* plant, a sweet component contained in *Pentadiplandra brazzeana* plant, a sweet component contained in *Capparis masaikai* plant, a sweet component contained in *Lippia dulcis* plant, or derivatives thereof, and combinations thereof. Examples of the sweet substance (c) do not include main ingredients of stevia sweetener, such as RebA and steviosides. In a particular embodiment, examples of the sweet substance (c) include RebD, RebM, a mogroside (e.g., mogroside V), and combinations thereof. In another particular embodiment, examples of the sweet substance (c) include RebD, RebM, a mogroside (e.g., mogroside V), thaumatin and combinations thereof.

In some embodiments, the sweet substance (c) includes the following combinations: RebD and RebM; RebD and mogroside V; RebM and mogroside V; RebD, RebM, and mogroside V; RebD and neohesperidin dihydrochalcone; RebM and neohesperidin dihydrochalcone; RebD, RebM, and neohesperidin dihydrochalcone; mogroside V and neohesperidin dihydrochalcone; RebD, RebM, mogroside V, and neohesperidin dihydrochalcone; RebD and brazzein; RebM and brazzein; mogroside V and brazzein; neohesperidin dihydrochalcone and brazzein; RebM, RebD, and brazzein; RebM, RebD, brazzein, and mogroside V; RebM, RebD, brazzein, and neohesperidin dihydrochalcone; and RebM, RebD, brazzein, mogroside V, and neohesperidin dihydrochalcone.

In another embodiments, the sweet substance (c) includes the following combinations: RebD and thaumatin; RebM and thaumatin; mogroside V and thaumatin; RebD, RebM and thaumatin; RebD, mogroside V and thaumatin; RebM, mogroside V and thaumatin; and RebD, RebM, mogroside V and thaumatin.

The amount of the ingredient (c) contained in a food or beverage of the present invention is a sweetness threshold or more. The sweetness threshold is a concept well-known in the art and means a minimum concentration at which sweetness can be sensed. The sweetness threshold of the sweet substance may have already been known or may be determined by sensory evaluation, etc. If the ingredient (c) contains a combination of a plurality of sweet substances, the total amount of the sweet substances in the combination should be the sweetness threshold or more. When the amount of the ingredient (c) is indicated as Pc (ppm), Pc may be, for example, a value of about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, or about 55 to about 490.

The ingredients (a) to (c) can be optionally combined. As demonstrated in the below-described Examples, the ingredient (a) has sweetness intrinsically close to that of sucrose and thus improves a sweetness quality of the ingredient (c); and the ingredient (b) enhances this sweetness intrinsically close to that of sucrose and can make the sweetness quality closer to that of sucrose. Consequently, a combination of the ingredients (a) to (c) enables a food or beverage exhibiting sweetness intrinsically close to that of sucrose to be produced while no sucrose is used or the usage is decreased. This makes it possible to design a new sucrose-like lower-calorie sweet food or beverage, etc. In the case of zero-calorie design, a high-intensity sweetener having a very excellent taste quality, such as RebD or RebM, is used as the ingredient (c); D-allulose and/or erythritol are used as the ingredient (a); and low-concentration sodium is used to increase sweetness. In the case where the calories of a food or beverage are not set to be zero but are adjusted to be low, the ingredient (a) may be prepared by blending with a calorie sweetener such as sucrose, glucose, fructose, and/or sorbitol.

That a sweet substance or food or beverage has "sweetness intrinsically close to that of sucrose" means that the sweet substance or food or beverage has a threshold or higher sweetness intensity in the presence of an inhibitor of the sweet taste receptor T1R2/T1R3 and its taste quality is close to that of sucrose. Whether or not the taste quality of a sweet substance or food or beverage is close to that of sucrose may be determined, for instance, by conducting sensory evaluation of the sweet substance or food or beverage on items related to their sweetness intensity and sucrose taste quality; and by comparing the results with those of sucrose. Examples of such items include, but are not limited to, "onset of sweetness", "thickness of sweetness", "lingering sweetness", "artificial taste", and "total satisfaction" as used in the below-described Example 4.

Without wishing to be bound to a certain theory, a sweet substance exhibiting this "sweetness intrinsically close to that of sucrose" induces a sweetness response even if the sweet taste receptor T1R2/T1R3 is inhibited. Thus, a taste-related molecule other than the sweet taste receptor T1R2/T1R3 seems to participate in the sweetness response. That is, there is a sweetness response through a taste-related molecule other than the sweet taste receptor T1R2/T1R3 and the above sweet substance can induce such a sweetness response. In view of the above, the sweet substance that induces a response through a taste-related molecule other than the sweet taste receptor T1R2/T1R3 is considered to exhibit the "sweetness intrinsically close to that of sucrose".

Examples of a combination of the ingredients (a) and (c) include, but are not limited to, combinations of the ingredient (a) containing at least one sweet substance selected from glucose, sucrose, fructose, erythritol, and D-allulose and the ingredient (c) containing at least one sweet substance selected from RebD, RebM and mogroside V. More specific examples of the combination of the ingredients (a) and (c) include those in parentheses listed below when glucose is a1, sucrose is a2, fructose is a3, erythritol is a4, D-allulose is a5, RebD is c1, RebM is c2, and mogroside V is c3. In the following list, the (a1, c1), for example, indicates a combination of glucose and RebD.
(a1, c1), (a1, c2), (a1, c3), (a1, c1, c2), (a1, c2, c3), (a1, c1, c3), (a1, c1, c2, c3), (a2, c1), (a2, c2), (a2, c3), (a2, c1, c2), (a2, c2, c3), (a2, c1, c3), (a2, c1, c2, c3), (a3, c1), (a3, c2), (a3, c3), (a3, c1, c2), (a3, c2, c3), (a3, c1, c3), (a3, c1, c2, c3), (a4, c1), (a4, c2), (a4, c3), (a4, c1, c2), (a4, c2, c3), (a4, c1, c3), (a4, c1, c2, c3), (a5, c1), (a5, c2), (a5, c3), (a5, c1, c2), (a5, c2, c3), (a5, c1, c3), (a5, c1, c2, c3), (a1, a2, c1), (a1, a2, c2), (a1, a2, c3), (a1, a2, c1, c2), (a1, a2, c2, c3), (a1, a2, c1, c3), (a1, a2, c1, c2, c3), (a1, a3, c1), (a1, a3, c2), (a1, a3, c3), (a1, a3, c1, c2), (a1, a3, c2, c3), (a1, a3, c1, c3), (a1, a3, c1, c2, c3), (a1, a4, c1), (a1, a4, c2), (a1, a4, c3), (a1, a4, c1, c2), (a1, a4, c2, c3), (a1, a4, c1, c3), (a1, a4, c1, c2, c3), (a1, a5, c1), (a1, a5, c2), (a1, a5, c3), (a1, a5, c1, c2), (a1, a5, c2, c3), (a1, a5, c1, c3), (a1, a5, c1, c2, c3), (a2, a3, c1), (a2, a3, c2), (a2, a3, c3), (a2, a3, c1, c2), (a2, a3, c2, c3), (a2, a3, c1, c3), (a2, a3, c1, c2, c3), (a2, a4, c1), (a2, a4, c2), (a2, a4, c3), (a2, a4, c1, c2), (a2, a4, c2, c3), (a2, a4, c1, c3), (a2, a4, c1, c2, c3), (a2, a5, c1), (a2, a5, c2), (a2, a5, c3), (a2, a5, c1, c2), (a2, a5, c2, c3), (a2, a5, c1, c3), (a2, a5, c1, c2, c3), (a3, a4, c1), (a3, a4, c2), (a3, a4, c3), (a3, a4, c1, c2), (a3, a4, c2, c3), (a3, a4, c1, c3), (a3, a4, c1, c2, c3), (a3, a5, c1), (a3, a5, c2), (a3, a5, c3), (a3, a5, c1, c2), (a3, a5, c2, c3), (a3, a5, c1, c3), (a3, a5, c1, c2, c3), (a4, a5, c1), (a4, a5, c2), (a4, a5, c3), (a4, a5, c1, c2), (a4, a5, c2, c3), (a4, a5, c1, c3), (a4, a5, c1, c2, c3), (a1, a2, a3, c1), (a1, a2, a3, c2), (a1, a2, a3, c3), (a1, a2, a3, c1, c2), (a1, a2, a3, c2, c3), (a1, a2, a3, c1, c3), (a1, a2, a3, c1, c2, c3), (a1, a2, a4, c1), (a1, a2, a4, c2), (a1, a2, a4, c3), (a1, a2, a4, c1, c2), (a1, a2, a4, c2, c3), (a1, a2, a4, c1, c3), (a1, a2, a4, c1, c2, c3), (a1, a2, a5, c1), (a1, a2, a5, c2), (a1, a2, a5, c3), (a1, a2, a5, c1, c2), (a1, a2, a5, c2, c3), (a1, a2, a5, c1, c3), (a1, a2, a5, c1, c2, c3), (a1, a3, a4, c1), (a1, a3, a4, c2), (a1, a3, a4, c3), (a1, a3, a4, c1, c2), (a1, a3, a4, c2, c3), (a1, a3, a4, c1, c3), (a1, a3, a4, c1, c2, c3), (a1, a3, a5, c1), (a1, a3, a5, c2), (a1, a3, a5, c3), (a1, a3, a5, c1, c2), (a1, a3, a5, c2, c3), (a1, a3, a5, c1, c3), (a1, a3, a5, c1, c2, c3), (a1, a4, a5, c1), (a1, a4, a5, c2), (a1, a4, a5, c3), (a1, a4, a5, c1, c2), (a1, a4, a5, c2, c3), (a1, a4, a5, c1, c3), (a1, a4, a5, c1, c2, c3), (a2, a3, a4, c1),(a2, a3, a4, c2), (a2, a3, a4, c3), (a2, a3, a4, c1, c2), (a2, a3, a4, c2, c3), (a2, a3, a4, c1, c3), (a2, a3, a4, c1, c2, c3), (a2, a3, a5, c1), (a2, a3, a5, c2), (a2, a3, a5, c3), (a2, a3, a5, c1, c2), (a2, a3, a5, c2, c3), (a2, a3, a5, c1, c3), (a2, a3, a5, c1, c2, c3), (a2, a4, a5, c1),(a2, a4, a5, c2), (a2, a4, a5, c3), (a2, a4, a5, c1, c2), (a2, a4, a5, c2, c3), (a2, a4, a5, c1, c3), (a2, a4, a5, c1, c2, c3), (a3, a4, a5, c1), (a3, a4, a5, c2), (a3, a4, a5, c3), (a3, a4, a5, c1, c2), (a3, a4, a5, c2, c3), (a3, a4, a5, c1, c3), (a3, a4, a5, c1, c2, c3), (a1, a2, a3, a4, c1),(a1, a2, a3, a4, c2), (a1, a2, a3, a4, c3), (a1, a2, a3, a4, c1, c2), (a1, a2, a3, a4, c2, c3), (a1, a2, a3, a4, c1, c3), (a1, a2, a3, a4, c1, c2, c3), (a1, a2, a3, a5, c1),(a1, a2, a3, a5, c2), (a1, a2, a3, a5, c3), (a1, a2, a3, a5, c1, c2), (a1, a2, a3, a5, c2, c3), (a1, a2, a3, a5, c1, c3), (a1, a2, a3, a5, c1, c2, c3), (a1, a2, a4, a5, c1),(a1, a2, a4, a5, c2), (a1, a2, a4, a5, c3), (a1, a2, a4, a5, c1, c2), (a1, a2, a4, a5, c2, c3), (a1, a2, a4, a5, c1, c3), (a1, a2, a4, a5, c1, c2, c3), (a1, a3, a4, a5, c1),(a1, a3, a4, a5, c2), (a1, a3, a4, a5, c3), (a1, a3, a4, a5, c1, c2), (a1, a3, a4, a5, c2, c3), (a1, a3, a4, a5, c1, c3), (a1, a3, a4, a5, c1, c2, c3), (a2, a3, a4, a5, c1),(a2, a3, a4, a5, c2), (a2, a3, a4, a5, c3), (a2, a3, a4, a5, c1, c2), (a2, a3, a4, a5, c2, c3), (a2, a3, a4, a5, c1, c3), (a2, a3, a4, a5, c1, c2, c3), (a1, a2, a3, a4, a5, c1),(a1, a2, a3, a4, a5, c2), (a1, a2, a3, a4, a5, c3), (a1, a2, a3, a4, a5, c1, c2), (a1, a2, a3, a4, a5, c2, c3), (a1, a2, a3, a4, a5, c1, c3) or (a1, a2, a3, a4, a5, c1, c2, c3).

Examples of a combination of the ingredients (a) and (c) include, but are not limited to, combinations of the ingredient (a) containing at least one sweet substance selected from sorbitol, D-xylose, xylitol, and D-ribose and the ingredient (c) containing at least one sweet substance selected from RebD, RebM and mogroside V. More specific examples of the combination of the ingredients (a) and (c) include those in parentheses listed below when sorbitol is a6,D-xylose is a7, xylitol is a8, D-ribose is a9, RebD is c1, RebM is c2, and mogroside V is c3. In the following list, the (a6, c1),for example, indicates a combination of sorbitol and RebD.
(a6, c1),(a6, c2), (a6, c3), (a6, c1, c2), (a6, c2, c3), (a6, c1, c3), (a6, c1, c2, c3), (a7, c1), (a7, c2), (a7, c3), (a7, c1, c2), (a7, c2, c3), (a7, c1, c3), (a7, c1, c2, c3), (a8, c1), (a8, c2), (a8, c3), (a8, c1, c2), (a8, c2, c3), (a8, c1, c3), (a8, c1, c2, c3), (a9, c1), (a9, c2), (a9, c3), (a9, c1, c2), (a9, c2, c3), (a9, c1, c3), (a9, c1, c2, c3), (a6, a7, c1),(a6, a7, c2), (a6, a7, c3), (a6, a7, c1, c2), (a6, a7, c2, c3), (a6, a7, c1, c3), (a6, a7, c1, c2, c3), (a6, a8, c1),(a6, a8, c2), (a6, a8, c3), (a6, a8, c1, c2), (a6, a8, c2, c3), (a6, a8, c1, c3), (a6, a8, c1, c2, c3), (a6, a9, c1), (a6, a9, c2), (a6, a9, c3), (a6, a9, c1, c2), (a6, a9, c2, c3), (a6, a9, c1, c3), (a6, a9, c1, c2, c3), (a7, a8, c1), (a7, a8, c2), (a7, a8, c3), (a7, a8, c1, c2), (a7, a8, c2, c3), (a7, a8, c1, c3), (a7, a8, c1, c2, c3), (a7, a9, c1), (a7, a9, c2), (a7, a9, c3), (a7, a9, c1, c2), (a7, a9, c2, c3), (a7, a9, c1, c3), (a7, a9, c1, c2, c3), (a8, a9, c1), (a8, a9, c2), (a8, a9, c3), (a8, a9, c1, c2), (a8, a9, c2, c3), (a8, a9, c1, c3), (a8, a9, c1, c2, c3), (a6, a7, a8, c1), (a6, a7, a8, c2), (a6, a7, a8, c3), (a6, a7, a8, c1, c2), (a6, a7, a8, c2, c3), (a6, a7, a8, c1, c3), (a6, a7, a8, c1, c2, c3), (a6, a7, a9, c1),(a6, a7, a9, c2), (a6, a7, a9, c3), (a6, a7, a9, c1, c2), (a6, a7, a9, c2, c3), (a6, a7, a9, c1, c3), (a6, a7, a9, c1, c2, c3), (a6, a8, a9, c1), (a6, a8, a9, c2), (a6, a8, a9, c3), (a6, a8, a9, c1, c2), (a6, a8, a9, c2, c3), (a6, a8, a9, c1, c3), (a6, a8, a9, c1, c2, c3), (a7, a8, a9, c1),(a7, a8, a9, c2), (a7, a8, a9, c3), (a7, a8, a9, c1, c2), (a7, a8, a9, c2, c3), (a7, a8, a9, c1, c3), (a7, a8, a9, c1, c2, c3), (a6, a7, a8, a9, c1), (a6, a7, a8, a9, c2), (a6, a7, a8, a9, c3), (a6, a7, a8, a9, c1, c2), (a6, a7, a8, a9, c2, c3), (a6, a7, a8, a9, c1, c3) or (a6, a7, a8, a9, c1, c2, c3).

Examples of a combination of the ingredients (a) and (c) include, but are not limited to, combinations of the ingredient (a) containing at least one sweet substance selected from glucose, sucrose, fructose, erythritol, D-allulose, sorbitol, D-xylose, xylitol, and D-ribose and the ingredient (c) containing at least one sweet substance selected from RebD, RebM and mogroside V. More specific examples of the combination of the ingredients (a) and (c) include those in parentheses listed below when glucose is a1, sucrose is a2, fructose is a3, erythritol is a4, D-allulose is a5, sorbitol is a6, D-xylose is a7, xylitol is a8, D-ribose is a9, RebD is c1, RebM is c2, and mogroside V is c3. In the following list, the (a1, a6, c1),for example, indicates a combination of glucose, sorbitol, and RebD.
(a1, a6, c1),(a1, a6, c2), (a1, a6, c3), (a2, a6, c1),(a2, a6, c2), (a2, a6, c3), (a3, a6, c1),(a3, a6, c2), (a3, a6, c3), (a4, a6, c1),(a4, a6, c2), (a4, a6, c3), (a5, a6, c1),(a5, a6, c2), (a5, a6, c3), (a1, a2, a6, c1), (a1, a2, a6, c2), (a1, a2, a6, c3), (a1, a3, a6, c1), (a1, a3, a6, c2), (a1, a3, a6, c3), (a1, a4, a6, c1),(a1, a4, a6, c2), (a1, a4, a6, c3), (a1, a5, a6, c1), (a1, a5, a6, c2), (a1, a5, a6, c3), (a2, a3, a6, c1), (a2, a3, a6, c2), (a2, a3, a6, c3), (a2, a4, a6, c1),(a2, a4, a6, c2), (a2, a4, a6, c3), (a2, a5, a6, c1),(a2, a5, a6, c2), (a2, a5, a6, c3), (a3, a4, a6, c1), (a3, a4, a6, c2), (a3, a4, a6, c3), (a3, a5, a6, c1), (a3, a5, a6, c2), (a3, a5, a6, c3), (a4, a5, a6, c1),(a4, a5, a6, c2), (a4, a5, a6, c3), (a1, a6, a7, c1),(a1, a6, a7, c2), (a1, a6, a7, c3), (a2, a6, a7, c1),(a2, a6, a7, c2), (a2, a6, a7, c3), (a3, a6, a7, c1),(a3, a6, a7, c2), (a3, a6, a7, c3), (a4, a6, a7, c1),(a4, a6, a7, c2), (a4, a6, a7, c3), (a5, a6, a7, c1), (a5, a6, a7, c2), (a5, a6, a7, c3), (a1, a2, a6, a7, c1),(a1, a2, a6, a7, c2), (a1, a2, a6, a7, c3), (a1, a3, a6, a7, c1),(a1, a3, a6, a7, c2), (a1, a3, a6, a7, c3), (a1, a4, a6, a7, c1),(a1, a4, a6, a7, c2), (a1, a4, a6, a7, c3), (a1, a5, a6, a7, c1),(a1, a5, a6, a7, c2), (a1, a5, a6, a7, c3), (a2, a3, a6, a7, c1),(a2, a3, a6, a7, c2), (a2, a3, a6, a7, c3), (a2, a4, a6, a7, c1),(a2, a4, a6, a7, c2), (a2, a4, a6, a7, c3), (a2, a5, a6, a7, c1),(a2, a5, a6, a7, c2), (a2, a5, a6, a7, c3), (a3, a4, a6, a7, c1),(a3, a4, a6, a7, c2), (a3, a4, a6, a7, c3), (a3, a5, a6, a7, c1),(a3, a5, a6, a7, c2), (a3, a5, a6, a7, c3), (a4, a5, a6, a7, c1),(a4, a5, a6, a7, c2), (a4, a5, a6, a7, c3), (a1, a6, a8, c1), (a1, a6, a8, c2), (a1, a6, a8, c3), (a2, a6, a8, c1), (a2, a6, a8, c2), (a2, a6, a8, c3), (a3, a6, a8, c1),(a3, a6, a8, c2), (a3, a6, a8, c3), (a4, a6, a8, c1),(a4, a6, a8, c2), (a4, a6, a8, c3), (a5, a6, a8, c1),(a5, a6, a8, c2), (a5, a6, a8, c3),
(a1, a2, a6, a8, c1),(a1, a2, a6, a8, c2), (a1, a2, a6, a8, c3), (a1, a3, a6, a8, c1), (a1, a3, a6, a8, c2), (a1, a3, a6, a8, c3), (a1, a4, a6, a8, c1),(a1, a4, a6, a8, c2), (a1, a4, a6, a8, c3), (a1, a5, a6, a8, c1),(a1, a5, a6, a8, c2), (a1, a5, a6, a8, c3), (a2, a3, a6, a8, c1),(a2, a3, a6, a8, c2), (a2, a3, a6, a8, c3), (a2, a4, a6, a8, c1),(a2, a4, a6, a8, c2), (a2, a4, a6, a8, c3), (a2, a5, a6, a8, c1),(a2, a5, a6, a8, c2), (a2, a5, a6, a8, c3), (a3, a4, a6, a8, c1),(a3, a4, a6, a8, c2), (a3, a4, a6, a8, c3), (a3, a5, a6, a8, c1),(a3, a5, a6, a8, c2), (a3, a5, a6, a8, c3), (a4, a5, a6, a8, c1),(a4, a5, a6, a8, c2), (a4, a5, a6, a8, c3), (a1, a6, a9, c1),(a1, a6, a9, c2), (a1, a6, a9, c3), (a2, a6, a9, c1),(a2, a6, a9, c2), (a2, a6, a9, c3), (a3, a6, a9, c1), (a3, a6, a9, c2), (a3, a6, a9, c3), (a4, a6, a9, c1), (a4, a6, a9, c2), (a4, a6, a9, c3), (a5, a6, a9, c1),(a5, a6, a9, c2), (a5, a6, a9, c3), (a1, a2, a6, a9, c1),(a1, a2, a6, a9, c2), (a1, a2, a6, a9, c3), (a1, a3, a6, a9, c1),(a1, a3, a6, a9, c2), (a1, a3, a6, a9, c3), (a1, a4, a6, a9, c1), (a1, a4, a6, a9, c2), (a1, a4, a6, a9, c3), (a1, a5, a6, a9, c1),(a1, a5, a6, a9, c2), (a1, a5, a6, a9, c3), (a2, a3, a6, a9, c1),(a2, a3, a6, a9, c2), (a2, a3, a6, a9, c3), (a2, a4, a6, a9, c1), (a2, a4, a6, a9, c2), (a2, a4, a6, a9, c3), (a2, a5, a6, a9, c1),(a2, a5, a6, a9, c2), (a2, a5, a6, a9, c3), (a3, a4, a6, a9, c1),(a3, a4, a6, a9, c2), (a3, a4, a6, a9, c3), (a3, a5, a6, a9, c1), (a3, a5, a6, a9, c2), (a3, a5, a6, a9, c3), (a4, a5, a6, a9, c1),(a4, a5, a6, a9, c2), (a4, a5, a6, a9, c3),
(a1, a7, c1),(a1, a7, c2), (a1, a7, c3), (a2, a7, c1),(a2, a7, c2), (a2, a7, c3), (a3, a7, c1),(a3, a7, c2), (a3, a7, c3), (a4, a7, c1),(a4, a7, c2), (a4, a7, c3), (a5, a7, c1),(a5, a7, c2), (a5, a7, c3), (a1, a2, a7, c1), (a1, a2, a7, c2), (a1, a2, a7, c3), (a1, a3, a7, c1), (a1, a3, a7, c2), (a1, a3, a7, c3), (a1, a4, a7, c1),(a1, a4, a7, c2), (a1, a4, a7, c3), (a1, a5, a7, c1), (a1, a5, a7, c2), (a1, a5, a7, c3), (a2, a3, a7, c1),(a2, a3, a7, c2), (a2, a3, a7, c3), (a2, a4, a7, c1),(a2, a4, a7, c2), (a2, a4, a7, c3), (a2, a5, a7, c1),(a2, a5, a7, c2), (a2, a5, a7, c3), (a3, a4, a7, c1),(a3, a4, a7, c2), (a3, a4, a7, c3), (a3, a5, a7, c1),(a3, a5, a7, c2), (a3, a5, a7, c3), (a4, a5, a7, c1),(a4, a5, a7, c2), (a4, a5, a7, c3), (a1, a7, a8, c1),(a1, a7, a8, c2), (a1, a7, a8, c3), (a2, a7, a8, c1),(a2, a7, a8, c2), (a2, a7, a8, c3), (a3, a7, a8, c1),(a3, a7, a8, c2), (a3, a7, a8, c3), (a4, a7, a8, c1),(a4, a7, a8, c2), (a4, a7, a8, c3), (a5, a7, a8, c1), (a5, a7, a8, c2), (a5, a7, a8, c3), (a1, a2, a7, a8, c1),(a1, a2, a7, a8, c2), (a1, a2, a7, a8, c3), (a1, a3, a7, a8, c1),(a1, a3, a7, a8, c2), (a1, a3, a7, a8, c3), (a1, a4, a7, a8, c1),(a1, a4, a7, a8, c2), (a1, a4, a7, a8, c3), (a1, a5, a7, a8, c1),(a1, a5, a7, a8, c2), (a1, a5, a7, a8, c3),
(a2, a3, a7, a8, c1),(a2, a3, a7, a8, c2), (a2, a3, a7, a8, c3), (a2, a4, a7, a8, c1), (a2, a4, a7, a8, c2), (a2, a4, a7, a8, c3), (a2, a5, a7, a8, c1),(a2, a5, a7, a8, c2), (a2, a5, a7, a8, c3), (a3, a4, a7, a8, c1),(a3, a4, a7, a8, c2), (a3, a4, a7, a8, c3), (a3, a5, a7, a8, c1),(a3, a5, a7, a8, c2), (a3, a5, a7, a8, c3), (a4, a5, a7, a8, c1),(a4, a5, a7, a8, c2), (a4, a5, a7, a8, c3), (a1, a7, a9, c1), (a1, a7, a9, c2), (a1, a7, a9, c3), (a2, a7, a9, c1), (a2, a7, a9, c2), (a2, a7, a9, c3), (a3, a7, a9, c1),(a3, a7, a9, c2), (a3, a7, a9, c3), (a4, a7, a9, c1),(a4, a7, a9, c2), (a4, a7, a9, c3), (a5, a7, a9, c1),(a5, a7, a9, c2), (a5, a7, a9, c3), (a1, a2, a7, a9, c1), (a1, a2, a7, a9, c2), (a1, a2, a7, a9, c3), (a1, a3, a7, a9, c1),(a1, a3, a7, a9, c2), (a1, a3, a7, a9, c3), (a1, a4, a7, a9, c1),(a1, a4, a7, a9, c2), (a1, a4, a7, a9, c3), (a1, a5, a7, a9, c1), (a1, a5, a7, a9, c2), (a1, a5, a7, a9, c3), (a2, a3, a7, a9, c1),(a2, a3, a7, a9, c2), (a2, a3, a7, a9, c3), (a2, a4, a7, a9, c1),(a2, a4, a7, a9, c2), (a2, a4, a7, a9, c3), (a2, a5, a7, a9, c1), (a2, a5, a7, a9, c2), (a2, a5, a7, a9, c3), (a3, a4, a7, a9, c1),(a3, a4, a7, a9, c2), (a3, a4, a7, a9, c3), (a3, a5, a7, a9, c1),(a3, a5, a7, a9, c2), (a3, a5, a7, a9, c3), (a4, a5, a7, a9, c1), (a4, a5, a7, a9, c2), (a4, a5, a7, a9, c3),
(a1, a8, c1),(a1, a8, c2), (a1, a8, c3), (a2, a8, c1),(a2, a8, c2), (a2, a8, c3), (a3, a8, c1),(a3, a8, c2), (a3, a8, c3), (a4, a8, c1),(a4, a8, c2), (a4, a8, c3), (a5, a8, c1),(a5, a8, c2), (a5, a8, c3), (a1, a2, a8, c1), (a1, a2, a8, c2), (a1, a2, a8, c3), (a1, a3, a8, c1), (a1, a3, a8, c2), (a1, a3, a8, c3), (a1, a4, a8, c1),(a1, a4, a8, c2), (a1, a4, a8, c3), (a1, a5, a8, c1), (a1, a5, a8, c2), (a1, a5, a8, c3), (a2, a3, a8, c1), (a2, a3, a8, c2), (a2, a3, a8, c3), (a2, a4, a8, c1),(a2, a4, a8, c2), (a2, a4, a8, c3), (a2, a5, a8, c1),(a2, a5, a8, c2), (a2, a5, a8, c3), (a3, a4, a8, c1),(a3, a4, a8, c2), (a3, a4, a8, c3), (a3, a5, a8, c1),(a3, a5, a8, c2), (a3, a5, a8, c3), (a4, a5, a8, c1), (a4, a5, a8, c2), (a4, a5, a8, c3), (a1, a9, c1), (a1, a9, c2), (a1, a9, c3), (a2, a9, c1),(a2, a9, c2), (a2, a9, c3), (a3, a9, c1),(a3, a9, c2), (a3, a9, c3), (a4, a9, c1),(a4, a9, c2), (a4, a9, c3), (a5, a9, c1),(a5, a9, c2), (a5, a9, c3), (a1, a2, a9, c1),(a1, a2, a9, c2), (a1, a2, a9, c3), (a1, a3, a9, c1),(a1, a3, a9, c2), (a1, a3, a9, c3), (a1, a4, a9, c1),(a1, a4, a9, c2), (a1, a4, a9, c3), (a1, a5, a9, c1),(a1, a5, a9, c2), (a1, a5, a9, c3),
(a2, a3, a9, c1),(a2, a3, a9, c2), (a2, a3, a9, c3), (a2, a4, a9, c1),(a2, a4, a9, c2), (a2, a4, a9, c3), (a2, a5, a9, c1), (a2, a5, a9, c2), (a2, a5, a9, c3), (a3, a4, a9, c1),(a3, a4, a9, c2), (a3, a4, a9, c3), (a3, a5, a9, c1),(a3, a5, a9, c2), (a3, a5, a9, c3), (a4, a5, a9, c1), (a4, a5, a9, c2), (a4, a5, a9, c3), (a1, a8, a9, c1), (a1, a8, a9, c2), (a1, a8, a9, c3), (a2, a8, a9, c1),(a2, a8, a9, c2), (a2, a8, a9, c3), (a3, a8, a9, c1),(a3, a8, a9, c2), (a3, a8, a9, c3), (a4, a8, a9, c1),(a4, a8, a9, c2), (a4, a8, a9, c3), (a5, a8, a9, c1), (a5, a8, a9, c2), (a5, a8, a9, c3), (a1, a2, a8, a9, c1),(a1, a2, a8, a9, c2), (a1, a2, a8, a9, c3), (a1, a3, a8, a9, c1), (a1, a3, a8, a9, c2), (a1, a3, a8, a9, c3), (a1, a4, a8, a9, c1),(a1, a4, a8, a9, c2), (a1, a4, a8, a9, c3), (a1, a5, a8, a9, c1),(a1, a5, a8, a9, c2), (a1, a5, a8, a9, c3), (a2, a3, a8, a9, c1), (a2, a3, a8, a9, c2), (a2, a3, a8, a9, c3), (a2, a4, a8, a9, c1),(a2, a4, a8, a9, c2), (a2, a4, a8, a9, c3), (a2, a5, a8, a9, c1),(a2, a5, a8, a9, c2), (a2, a5, a8, a9, c3), (a3, a4, a8, a9, c1), (a3, a4, a8, a9, c2), (a3, a4, a8, a9, c3), (a3, a5, a8, a9, c1),(a3, a5, a8, a9, c2), (a3, a5, a8, a9, c3), (a4, a5, a8, a9, c1),(a4, a5, a8, a9, c2) or (a4, a5, a8, a9, c3).

Examples of a combination of the ingredients (a) and (c) include, but are not limited to, combinations of the ingredient (a) containing at least one calorie sweet substance selected from glucose, sucrose, and fructose and at least one non-calorie sweet substance selected from erythritol, D-allulose, xylitol, and D-tagatose and the ingredient (c) containing at least one sweet substance selected from RebD, RebM and mogroside V. More specific examples of the combination of the ingredients (a) and (c) include those in parentheses listed below when glucose is a1, sucrose is a2, fructose is a3, erythritol is a4, D-allulose is a5, xylitol is a6, D-tagatose is a7, RebD is c1, RebM is c2, and mogroside V is c3. In the following list, the (a1, a4, c1),for example, indicates a combination of glucose, erythritol, and RebD.
(a1, a4, c1), (a1, a4, c2), (a1, a4, c3), (a1, a4, c1, c2), (a1, a4, c2, c3), (a1, a4, c1, c3), (a1, a4, c1, c2, c3), (a1, a5, c1), (a1, a5, c2), (a1, a5, c3), (a1, a5, c1, c2), (a1, a5, c2, c3), (a1, a5, c1, c3), (a1, a5, c1, c2, c3), (a1, a6, c1), (a1, a6, c2), (a1, a6, c3), (a1, a6, c1, c2), (a1, a6, c2, c3), (a1, a6, c1, c3), (a1, a6, c1, c2, c3), (a1, a7, c1), (a1, a7, c2), (a1, a7, c3), (a1, a7, c1, c2), (a1, a7, c2, c3), (a1, a7, c1, c3), (a1, a7, c1, c2, c3), (a1, a4, a5, c1), (a1, a4, a5, c2), (a1, a4, a5, c3), (a1, a4, a5, c1, c2), (a1, a4, a5, c2, c3), (a1, a4, a5, c1, c3), (a1, a4, a5, c1, c2, c3), (a1, a4, a6, c1),(a1, a4, a6, c2), (a1, a4, a6, c3), (a1, a4, a6, c1, c2), (a1, a4, a6, c2, c3), (a1, a4, a6, c1, c3), (a1, a4, a6, c1, c2, c3), (a1, a4, a7, c1), (a1, a4, a7, c2), (a1, a4, a7, c3), (a1, a4, a7, c1, c2), (a1, a4, a7, c2, c3), (a1, a4, a7, c1, c3), (a1, a4, a7, c1, c2, c3), (a1, a5, a6, c1),(a1, a5, a6, c2), (a1, a5, a6, c3), (a1, a5, a6, c1, c2), (a1, a5, a6, c2, c3), (a1, a5, a6, c1, c3), (a1, a5, a6, c1, c2, c3),
(a1, a5, a7, c1),(a1, a5, a7, c2), (a1, a5, a7, c3), (a1, a5, a7, c1, c2), (a1, a5, a7, c2, c3), (a1, a5, a7, c1, c3), (a1, a5, a7, c1, c2, c3), (a1, a6, a7, c1),(a1, a6, a7, c2), (a1, a6, a7, c3), (a1, a6, a7, c1, c2), (a1, a6, a7, c2, c3), (a1, a6, a7, c1, c3), (a1, a6, a7, c1, c2, c3), (a1, a4, a5, a6, c1), (a1, a4, a5, a6, c2), (a1, a4, a5, a6, c3), (a1, a4, a5, a6, c1, c2), (a1, a4, a5, a6, c2, c3), (a1, a4, a5, a6, c1, c3), (a1, a4, a5, a6, c1, c2, c3), (a1, a4, a5, a7, c1), (a1, a4, a5, a7, c2), (a1, a4, a5, a7, c3), (a1, a4, a5, a7, c1, c2), (a1, a4, a5, a7, c2, c3), (a1, a4, a5, a7, c1, c3), (a1, a4, a5, a7, c1, c2, c3), (a1, a4, a6, a7, c1), (a1, a4, a6, a7, c2), (a1, a4, a6, a7, c3), (a1, a4, a6, a7, c1, c2), (a1, a4, a6, a7, c2, c3), (a1, a4, a6, a7, c1, c3), (a1, a4, a6, a7, c1, c2, c3), (a1, a5, a6, a7, c1), (a1, a5, a6, a7, c2), (a1, a5, a6, a7, c3), (a1, a5, a6, a7, c1, c2), (a1, a5, a6, a7, c2, c3), (a1, a5, a6, a7, c1, c3), (a1, a5, a6, a7, c1, c2, c3), (a1, a4, a5, a6, a7, c1), (a1, a4, a5, a6, a7, c2), (a1, a4, a5, a6, a7, c3), (a1, a4, a5, a6, a7, c1, c2), (a1, a4, a5, a6, a7, c2, c3), (a1, a4, a5, a6, a7, c1, c3), (a1, a4, a5, a6, a7, c1, c2, c3),
(a2, a4, c1), (a2, a4, c2), (a2, a4, c3), (a2, a4, c1, c2), (a2, a4, c2, c3), (a2, a4, c1, c3), (a2, a4, c1, c2, c3), (a2, a5, c1), (a2, a5, c2), (a2, a5, c3), (a2, a5, c1, c2), (a2, a5, c2, c3), (a2, a5, c1, c3), (a2, a5, c1, c2, c3), (a2, a6, c1), (a2, a6, c2), (a2, a6, c3), (a2, a6, c1, c2), (a2, a6, c2, c3), (a2, a6, c1, c3), (a2, a6, c1, c2, c3), (a2, a7, c1), (a2, a7, c2), (a2, a7, c3), (a2, a7, c1, c2), (a2, a7, c2, c3), (a2, a7, c1, c3), (a2, a7, c1, c2, c3), (a2, a4, a5, c1), (a2, a4, a5, c2), (a2, a4, a5, c3), (a2, a4, a5, c1, c2), (a2, a4, a5, c2, c3), (a2, a4, a5, c1, c3), (a2, a4, a5, c1, c2, c3), (a2, a4, a6, c1), (a2, a4, a6, c2), (a2, a4, a6, c3), (a2, a4, a6, c1, c2), (a2, a4, a6, c2, c3), (a2, a4, a6, c1, c3), (a2, a4, a6, c1, c2, c3), (a2, a4, a7, c1), (a2, a4, a7, c2), (a2, a4, a7, c3), (a2, a4, a7, c1, c2), (a2, a4, a7, c2, c3), (a2, a4, a7, c1, c3), (a2, a4, a7, c1, c2, c3), (a2, a5, a6, c1), (a2, a5, a6, c2), (a2, a5, a6, c3), (a2, a5, a6, c1, c2), (a2, a5, a6, c2, c3), (a2, a5, a6, c1, c3), (a2, a5, a6, c1, c2, c3), (a2, a5, a7, c1), (a2, a5, a7, c2), (a2, a5, a7, c3), (a2, a5, a7, c1, c2), (a2, a5, a7, c2, c3), (a2, a5, a7, c1, c3), (a2, a5, a7, c1, c2, c3),
(a2, a6, a7, c1), (a2, a6, a7, c2), (a2, a6, a7, c3), (a2, a6, a7, c1, c2), (a2, a6, a7, c2, c3), (a2, a6, a7, c1, c3), (a2, a6, a7, c1, c2, c3), (a2, a4, a5, a6, c1), (a2, a4, a5, a6, c2), (a2, a4, a5, a6, c3), (a2, a4, a5, a6, c1, c2), (a2, a4, a5, a6, c2, c3), (a2, a4, a5, a6, c1, c3), (a2, a4, a5, a6, c1, c2, c3), (a2, a4, a5, a7, c1), (a2, a4, a5, a7, c2), (a2, a4, a5, a7, c3), (a2, a4, a5, a7, c1, c2), (a2, a4, a5, a7, c2, c3), (a2, a4, a5, a7, c1, c3), (a2, a4, a5, a7, c1, c2, c3), (a2, a4, a6, a7, c1), (a2, a4, a6, a7, c2), (a2, a4, a6, a7, c3), (a2, a4, a6, a7, c1, c2), (a2, a4, a6, a7, c2, c3), (a2, a4, a6, a7, c1, c3), (a2, a4, a6, a7, c1, c2, c3), (a2, a5, a6, a7, c1), (a2, a5, a6, a7, c2), (a2, a5, a6, a7, c3), (a2, a5, a6, a7, c1, c2), (a2, a5, a6, a7, c2, c3), (a2, a5, a6, a7, c1, c3), (a2, a5, a6, a7, c1, c2, c3), (a2, a4, a5, a6, a7, c1), (a2, a4, a5, a6, a7, c2), (a2, a4, a5, a6, a7, c3), (a2, a4, a5, a6, a7, c1, c2), (a2, a4, a5, a6, a7, c2, c3), (a2, a4, a5, a6, a7, c1, c3), (a2, a4, a5, a6, a7, c1, c2, c3),
(a3, a4, c1), (a3, a4, c2), (a3, a4, c3), (a3, a4, c1, c2), (a3, a4, c2, c3), (a3, a4, c1, c3), (a3, a4, c1,c2, c3), (a3, a5, c1), (a3, a5, c2), (a3, a5, c3), (a3, a5, c1, c2), (a3, a5, c2, c3), (a3, a5, c1, c3), (a3, a5, c1, c2, c3), (a3, a6, c1), (a3, a6, c2), (a3, a6, c3), (a3, a6, c1, c2), (a3, a6, c2, c3), (a3, a6, c1, c3), (a3, a6, c1, c2, c3), (a3, a7, c1), (a3, a7, c2), (a3, a7, c3), (a3, a7, c1, c2), (a3, a7, c2, c3), (a3, a7, c1, c3), (a3, a7, c1, c2, c3), (a3, a4, a5, c1), (a3, a4, a5, c2), (a3, a4, a5, c3), (a3, a4, a5, c1, c2), (a3, a4, a5, c2, c3), (a3, a4, a5, c1, c3), (a3, a4, a5, c1, c2, c3), (a3, a4, a6, c1), (a3, a4, a6, c2), (a3, a4, a6, c3), (a3, a4, a6, c1, c2), (a3, a4, a6, c2, c3), (a3, a4, a6, c1, c3), (a3, a4, a6, c1, c2, c3), (a3, a4, a7, c1), (a3, a4, a7, c2), (a3, a4, a7, c3), (a3, a4, a7, c1, c2), (a3, a4, a7, c2, c3), (a3, a4, a7, c1, c3), (a3, a4, a7, c1, c2, c3), (a3, a5, a6, c1), (a3, a5, a6, c2), (a3, a5, a6, c3), (a3, a5, a6, c1, c2), (a3, a5, a6, c2, c3), (a3, a5, a6, c1, c3), (a3, a5, a6, c1, c2, c3),
(a3, a5, a7, c1), (a3, a5, a7, c2), (a3, a5, a7, c3), (a3, a5, a7, c1, c2), (a3, a5, a7, c2, c3), (a3, a5, a7, c1, c3), (a3, a5, a7, c1, c2, c3), (a3, a6, a7, c1), (a3, a6, a7, c2), (a3, a6, a7, c3), (a3, a6, a7, c1, c2), (a3, a6, a7, c2, c3), (a3, a6, a7, c1, c3), (a3, a6, a7, c1, c2, c3), (a3, a4, a5, a6, c1), (a3, a4, a5, a6, c2), (a3, a4, a5, a6, c3), (a3, a4, a5, a6, c1, c2), (a3, a4, a5, a6, c2, c3), (a3, a4, a5, a6, c1, c3), (a3, a4, a5, a6, c1, c2, c3), (a3, a4, a5, a7, c1), (a3, a4, a5, a7, c2), (a3, a4, a5, a7, c3), (a3, a4, a5, a7, c1, c2), (a3, a4, a5, a7, c2, c3), (a3, a4, a5, a7, c1, c3), (a3, a4, a5, a7, c1, c2, c3), (a3, a4, a6, a7, c1), (a3, a4, a6, a7, c2), (a3, a4, a6, a7, c3), (a3, a4, a6, a7, c1, c2), (a3, a4, a6, a7, c2, c3), (a3, a4, a6, a7, c1, c3), (a3, a4, a6, a7, c1, c2, c3), (a3, a5, a6, a7, c1), (a3, a5, a6, a7, c2), (a3, a5, a6, a7, c3), (a3, a5, a6, a7, c1, c2), (a3, a5, a6, a7, c2, c3), (a3, a5, a6, a7, c1, c3), (a3, a5, a6, a7, c1, c2, c3), (a3, a4, a5, a6, a7, c1), (a3, a4, a5, a6, a7, c2), (a3, a4, a5, a6, a7, c3), (a3, a4, a5, a6, a7, c1, c2), (a3, a4, a5, a6, a7, c2, c3), (a3, a4, a5, a6, a7, c1, c3), (a3, a4, a5, a6, a7, c1, c2, c3),
(a1, a2, a4, c1), (a1, a2, a4, c2), (a1, a2, a4, c3), (a1, a2, a4, c1, c2), (a1, a2, a4, c2, c3), (a1, a2, a4, c1, c3), (a1, a2, a4, c1, c2, c3), (a1, a2, a5, c1), (a1, a2, a5, c2), (a1, a2, a5, c3), (a1, a2, a5, c1, c2), (a1, a2, a5, c2, c3), (a1, a2, a5, c1, c3), (a1, a2, a5, c1, c2, c3), (a1, a2, a6, c1), (a1, a2, a6, c2), (a1, a2, a6, c3), (a1, a2, a6, c1, c2), (a1, a2, a6, c2, c3), (a1, a2, a6, c1, c3), (a1, a2, a6, c1, c2, c3), (a1, a2, a7, c1), (a1, a2, a7, c2), (a1, a2, a7, c3), (a1, a2, a7, c1, c2), (a1, a2, a7, c2, c3), (a1, a2, a7, c1, c3), (a1, a2, a7, c1, c2, c3), (a1, a2, a4, a5, c1), (a1, a2, a4, a5, c2), (a1, a2, a4, a5, c3), (a1, a2, a4, a5, c1, c2), (a1, a2, a4, a5, c2, c3), (a1, a2, a4, a5, c1, c3), (a1, a2, a4, a5, c1, c2, c3), (a1, a2, a4, a6, c1), (a1, a2, a4, a6, c2), (a1, a2, a4, a6, c3), (a1, a2, a4, a6, c1, c2), (a1, a2, a4, a6, c2, c3), (a1, a2, a4, a6, c1, c3), (a1, a2, a4, a6, c1, c2, c3), (a1, a2, a4, a7, c1), (a1, a2, a4, a7, c2), (a1, a2, a4, a7, c3), (a1, a2, a4, a7, c1, c2), (a1, a2, a4, a7, c2, c3), (a1, a2, a4, a7, c1, c3), (a1, a2, a4, a7, c1, c2, c3), (a1, a2, a5, a6, c1), (a1, a2, a5, a6, c2), (a1, a2, a5, a6, c3), (a1, a2, a5, a6, c1, c2), (a1, a2, a5, a6, c2, c3), (a1, a2, a5, a6, c1, c3), (a1, a2, a5, a6, c1, c2, c3), (a1, a2, a5, a7, c1), (a1, a2, a5, a7, c2), (a1, a2, a5, a7, c3), (a1, a2, a5, a7, c1, c2), (a1, a2, a5, a7, c2, c3), (a1, a2, a5, a7, c1, c3), (a1, a2, a5, a7, c1, c2, c3),
(a1, a2, a6, a7, c1), (a1, a2, a6, a7, c2), (a1, a2, a6, a7, c3), (a1, a2, a6, a7, c1, c2), (a1, a2, a6, a7, c2, c3), (a1, a2, a6, a7, c1, c3), (a1, a2, a6, a7, c1, c2, c3), (a1, a2, a4, a5, a6, c1), (a1, a2, a4, a5, a6, c2), (a1, a2, a4, a5, a6, c3), (a1, a2, a4, a5, a6, c1, c2), (a1, a2, a4, a5, a6, c2, c3), (a1, a2, a4, a5, a6, c1, c3), (a1, a2, a4, a5, a6, c1, c2, c3), (a1, a2, a4, a5, a7, c1), (a1, a2, a4, a5, a7, c2), (a1, a2, a4, a5, a7, c3), (a1, a2, a4, a5, a7, c1, c2), (a1, a2, a4, a5, a7, c2, c3), (a1, a2, a4, a5, a7, c1, c3), (a1, a2, a4, a5, a7, c1, c2, c3), (a1, a2, a4, a6, a7, c1), (a1, a2, a4, a6, a7, c2), (a1, a2, a4, a6, a7, c3), (a1, a2, a4, a6, a7, c1, c2), (a1, a2, a4, a6, a7, c2, c3), (a1, a2, a4, a6, a7, c1, c3), (a1, a2, a4, a6, a7, c1, c2, c3), (a1, a2, a5, a6, a7, c1), (a1, a2, a5, a6, a7, c2), (a1, a2, a5, a6, a7, c3), (a1, a2, a5, a6, a7, c1, c2), (a1, a2, a5, a6, a7, c2, c3), (a1, a2, a5, a6, a7, c1, c3), (a1, a2, a5, a6, a7, c1, c2, c3), (a1, a2, a4, a5, a6, a7, c1), (a1, a2, a4, a5, a6, a7, c2), (a1, a2, a4, a5, a6, a7, c3), (a1, a2, a4, a5, a6, a7, c1, c2), (a1, a2, a4, a5, a6, a7, c2, c3), (a1, a2, a4, a5, a6, a7, c1, c3), (a1, a2, a4, a5, a6, a7, c1, c2, c3),
(a1, a3, a4, c1), (a1, a3, a4, c2), (a1, a3, a4, c3), (a1, a3, a4, c1, c2), (a1, a3, a4, c2, c3), (a1, a3, a4, c1, c3), (a1, a3, a4, c1, c2, c3), (a1, a3, a5, c1), (a1, a3, a5, c2), (a1, a3, a5, c3), (a1, a3, a5, c1, c2), (a1, a3, a5, c2, c3), (a1, a3, a5, c1, c3), (a1, a3, a5, c1, c2, c3), (a1, a3, a6, c1), (a1, a3, a6, c2), (a1, a3, a6, c3), (a1, a3, a6, c1, c2), (a1, a3, a6, c2, c3), (a1, a3, a6, c1, c3), (a1, a3, a6, c1, c2, c3), (a1, a3, a7, c1), (a1, a3, a7, c2), (a1, a3, a7, c3), (a1, a3, a7, c1, c2), (a1, a3, a7, c2, c3), (a1, a3, a7, c1, c3), (a1, a3, a7, c1, c2, c3), (a1, a3, a4, a5, c1), (a1, a3, a4, a5, c2), (a1, a3, a4, a5, c3), (a1, a3, a4, a5, c1, c2), (a1, a3, a4, a5, c2, c3), (a1, a3, a4, a5, c1, c3), (a1, a3, a4, a5, c1, c2, c3), (a1, a3, a4, a6, c1), (a1, a3, a4, a6, c2), (a1, a3, a4, a6, c3), (a1, a3, a4, a6, c1, c2), (a1, a3, a4, a6, c2, c3), (a1, a3, a4, a6, c1, c3), (a1, a3, a4, a6, c1, c2, c3), (a1, a3, a4, a7, c1), (a1, a3, a4, a7, c2), (a1, a3, a4, a7, c3), (a1, a3, a4, a7, c1, c2), (a1, a3, a4, a7, c2, c3), (a1, a3, a4, a7, c1, c3), (a1, a3, a4, a7, c1, c2, c3), (a1, a3, a5, a6, c1), (a1, a3, a5, a6, c2), (a1, a3, a5, a6, c3), (a1, a3, a5, a6, c1, c2), (a1, a3, a5, a6, c2, c3), (a1, a3, a5, a6, c1, c3), (a1, a3, a5, a6, c1, c2, c3), (a1, a3, a5, a7, c1), (a1, a3, a5, a7, c2), (a1, a3, a5, a7, c3), (a1, a3, a5, a7, c1, c2), (a1, a3, a5, a7, c2, c3), (a1, a3, a5, a7, c1, c3), (a1, a3, a5, a7, c1, c2, c3),
(a1, a3, a6, a7, c1), (a1, a3, a6, a7, c2), (a1, a3, a6, a7, c3), (a1, a3, a6, a7, c1, c2), (a1, a3, a6, a7, c2, c3), (a1, a3, a6, a7, c1, c3), (a1, a3, a6, a7, c1, c2, c3), (a1, a3, a4, a5, a6, c1), (a1, a3, a4, a5, a6, c2), (a1, a3, a4, a5, a6, c3), (a1, a3, a4, a5, a6, c1, c2), (a1, a3, a4, a5, a6, c2, c3), (a1, a3, a4, a5, a6, c1, c3), (a1, a3, a4, a5, a6, c1, c2, c3), (a1, a3, a4, a5, a7, c1), (a1, a3, a4, a5, a7, c2), (a1, a3, a4, a5, a7, c3), (a1, a3, a4, a5, a7, c1, c2), (a1, a3, a4, a5, a7, c2, c3), (a1, a3, a4, a5, a7, c1, c3), (a1, a3, a4, a5, a7, c1, c2, c3), (a1, a3, a4, a6, a7, c1), (a1, a3, a4, a6, a7, c2), (a1, a3, a4, a6, a7, c3), (a1, a3, a4, a6, a7, c1, c2), (a1, a3, a4, a6, a7, c2, c3), (a1, a3, a4, a6, a7, c1, c3), (a1, a3, a4, a6, a7, c1, c2, c3), (a1, a3, a5, a6, a7, c1), (a1, a3, a5, a6, a7, c2), (a1, a3, a5, a6, a7, c3), (a1, a3, a5, a6, a7, c1, c2), (a1, a3, a5, a6, a7, c2, c3), (a1, a3, a5, a6, a7, c1, c3), (a1, a3, a5, a6, a7, c1, c2, c3), (a1, a3, a4, a5, a6, a7, c1), (a1, a3, a4, a5, a6, a7, c2), (a1, a3, a4, a5, a6, a7, c3), (a1, a3, a4, a5, a6, a7, c1, c2), (a1, a3, a4, a5, a6, a7, c2, c3), (a1, a3, a4, a5, a6, a7, c1, c3), (a1, a3, a4, a5, a6, a7, c1, c2, c3),
(a2, a3, a4, c1), (a2, a3, a4, c2), (a2, a3, a4, c3), (a2, a3, a4, c1, c2), (a2, a3, a4, c2, c3), (a2, a3, a4, c1, c3), (a2, a3, a4, c1, c2, c3), (a2, a3, a5, c1), (a2, a3, a5, c2), (a2, a3, a5, c3), (a2, a3, a5, c1, c2), (a2, a3, a5, c2, c3), (a2, a3, a5, c1, c3), (a2, a3, a5, c1, c2, c3), (a2, a3, a6, c1), (a2, a3, a6, c2), (a2, a3, a6, c3), (a2, a3, a6, c1, c2), (a2, a3, a6, c2, c3), (a2, a3, a6, c1, c3), (a2, a3, a6, c1, c2, c3), (a2, a3, a7, c1), (a2, a3, a7, c2), (a2, a3, a7, c3), (a2, a3, a7, c1, c2), (a2, a3, a7, c2, c3), (a2, a3, a7, c1, c3), (a2, a3, a7, c1, c2, c3), (a2, a3, a4, a5, c1), (a2, a3, a4, a5, c2), (a2, a3, a4, a5, c3), (a2, a3, a4, a5, c1, c2), (a2, a3, a4, a5, c2, c3), (a2, a3, a4, a5, c1, c3), (a2, a3, a4, a5, c1, c2, c3), (a2, a3, a4, a6, c1), (a2, a3, a4, a6, c2), (a2, a3, a4, a6, c3), (a2, a3, a4, a6, c1, c2), (a2, a3, a4, a6, c2, c3), (a2, a3, a4, a6, c1, c3), (a2, a3, a4, a6, c1, c2, c3), (a2, a3, a4, a7, c1), (a2, a3, a4, a7, c2), (a2, a3, a4, a7, c3), (a2, a3, a4, a7, c1, c2), (a2, a3, a4, a7, c2, c3), (a2, a3, a4, a7, c1, c3), (a2, a3, a4, a7, c1, c2, c3), (a2, a3, a5, a6, c1), (a2, a3, a5, a6, c2), (a2, a3, a5, a6, c3), (a2, a3, a5, a6, c1, c2), (a2, a3, a5, a6, c2, c3), (a2, a3, a5, a6, c1, c3), (a2, a3, a5, a6, c1, c2, c3), (a2, a3, a5, a7, c1), (a2, a3, a5, a7, c2), (a2, a3, a5, a7, c3), (a2, a3, a5, a7, c1, c2), (a2, a3, a5, a7, c2, c3), (a2, a3, a5, a7, c1, c3), (a2, a3, a5, a7, c1, c2, c3),
(a2, a3, a6, a7, c1), (a2, a3, a6, a7, c2), (a2, a3, a6, a7, c3), (a2, a3, a6, a7, c1, c2), (a2, a3, a6, a7, c2, c3), (a2, a3, a6, a7, c1, c3), (a2, a3, a6, a7, c1, c2, c3), (a2, a3, a4, a5, a6, c1), (a2, a3, a4, a5, a6, c2), (a2, a3, a4, a5, a6, c3), (a2, a3, a4, a5, a6, c1, c2), (a2, a3, a4, a5, a6, c2, c3), (a2, a3, a4, a5, a6, c1, c3), (a2, a3, a4, a5, a6, c1, c2, c3), (a2, a3, a4, a5, a7, c1), (a2, a3, a4, a5, a7, c2), (a2, a3, a4, a5, a7, c3), (a2, a3, a4, a5, a7, c1, c2), (a2, a3, a4, a5, a7, c2, c3), (a2, a3, a4, a5, a7, c1, c3), (a2, a3, a4, a5, a7, c1, c2, c3), (a2, a3, a4, a6, a7, c1), (a2, a3, a4, a6, a7, c2), (a2, a3, a4, a6, a7, c3), (a2, a3, a4, a6, a7, c1, c2), (a2, a3, a4, a6, a7, c2, c3), (a2, a3, a4, a6, a7, c1, c3), (a2, a3, a4, a6, a7, c1, c2, c3), (a2, a3, a5, a6, a7, c1), (a2, a3, a5, a6, a7, c2), (a2, a3, a5, a6, a7, c3), (a2, a3, a5, a6, a7, c1, c2), (a2, a3, a5, a6, a7, c2, c3), (a2, a3, a5, a6, a7, c1, c3), (a2, a3, a5, a6, a7, c1, c2, c3), (a2, a3, a4, a5, a6, a7, c1), (a2, a3, a4, a5, a6, a7, c2), (a2, a3, a4, a5, a6, a7, c3), (a2, a3, a4, a5, a6, a7, c1, c2), (a2, a3, a4, a5, a6, a7, c2, c3), (a2, a3, a4, a5, a6, a7, c1, c3), (a2, a3, a4, a5, a6, a7, c1, c2, c3),
(a1, a2, a3, a4, c1), (a1, a2, a3, a4, c2), (a1, a2, a3, a4, c3), (a1, a2, a3, a4, c1, c2), (a1, a2, a3, a4, c2, c3), (a1, a2, a3, a4, c1, c3), (a1, a2, a3, a4, c1, c2, c3), (a1, a2, a3, a5, c1), (a1, a2, a3, a5, c2), (a1, a2, a3, a5, c3), (a1, a2, a3, a5, c1, c2), (a1, a2, a3, a5, c2, c3), (a1, a2, a3, a5, c1, c3), (a1, a2, a3, a5, c1, c2, c3), (a1, a2, a3, a6, c1), (a1, a2, a3, a6, c2), (a1, a2, a3, a6, c3), (a1, a2, a3, a6, c1, c2), (a1, a2, a3, a6, c2, c3), (a1, a2, a3, a6, c1, c3), (a1, a2, a3, a6, c1, c2, c3), (a1, a2, a3, a7, c1), (a1, a2, a3, a7, c2), (a1, a2, a3, a7, c3), (a1, a2, a3, a7, c1, c2), (a1, a2, a3, a7, c2, c3), (a1, a2, a3, a7, c1, c3), (a1, a2, a3, a7, c1, c2, c3), (a1, a2, a3, a4, a5, c1), (a1, a2, a3, a4, a5, c2), (a1, a2, a3, a4, a5, c3), (a1, a2, a3, a4, a5, c1, c2), (a1, a2, a3, a4, a5, c2, c3), (a1, a2, a3, a4, a5, c1, c3), (a1, a2, a3, a4, a5, c1, c2, c3), (a1, a2, a3, a4, a6, c1), (a1, a2, a3, a4, a6, c2), (a1, a2, a3, a4, a6, c3), (a1, a2, a3, a4, a6, c1, c2), (a1, a2, a3, a4, a6, c2, c3), (a1, a2, a3, a4, a6, c1, c3), (a1, a2, a3, a4, a6, c1, c2, c3), (a1, a2, a3, a4, a7, c1), (a1, a2, a3, a4, a7, c2), (a1, a2, a3, a4, a7, c3), (a1, a2, a3, a4, a7, c1, c2), (a1, a2, a3, a4, a7, c2, c3), (a1, a2, a3, a4, a7, c1, c3), (a1, a2, a3, a4, a7, c1, c2, c3), (a1, a2, a3, a5, a6, c1), (a1, a2, a3, a5, a6, c2), (a1, a2, a3, a5, a6, c3), (a1, a2, a3, a5, a6, c1, c2), (a1, a2, a3, a5, a6, c2, c3), (a1, a2, a3, a5, a6, c1, c3), (a1, a2, a3, a5, a6, c1, c2, c3),
(a1, a2, a3, a5, a7, c1), (a1, a2, a3, a5, a7, c2), (a1, a2, a3, a5, a7, c3), (a1, a2, a3, a5, a7, c1, c2), (a1, a2, a3, a5, a7, c2, c3), (a1, a2, a3, a5, a7, c1, c3), (a1, a2, a3, a5, a7, c1, c2, c3), (a1, a2, a3, a6, a7, c1), (a1, a2, a3, a6, a7, c2), (a1, a2, a3, a6, a7, c3), (a1, a2, a3, a6, a7, c1, c2), (a1, a2, a3, a6, a7, c2, c3), (a1, a2, a3, a6, a7, c1, c3), (a1, a2, a3, a6, a7, c1, c2, c3), (a1, a2, a3, a4, a5, a6, c1), (a1, a2, a3, a4, a5, a6, c2), (a1, a2, a3, a4, a5, a6, c3), (a1, a2, a3, a4, a5, a6, c1, c2), (a1, a2, a3, a4, a5, a6, c2, c3), (a1, a2, a3, a4, a5, a6, c1, c3), (a1, a2, a3, a4, a5, a6, c1, c2, c3), (a1, a2, a3, a4, a5, a7, c1), (a1, a2, a3, a4, a5, a7, c2), (a1, a2, a3, a4, a5, a7, c3), (a1, a2, a3, a4, a5, a7, c1, c2), (a1, a2, a3, a4, a5, a7, c2, c3), (a1, a2, a3, a4, a5, a7, c1, c3), (a1, a2, a3, a4, a5, a7, c1, c2, c3), (a1, a2, a3, a4, a6, a7, c1), (a1, a2, a3, a4, a6, a7, c2), (a1, a2, a3, a4, a6, a7, c3), (a1, a2, a3, a4, a6, a7, c1, c2), (a1, a2, a3, a4, a6, a7, c2, c3), (a1, a2, a3, a4, a6, a7, c1, c3), (a1, a2, a3, a4, a6, a7, c1, c2, c3), (a1, a2, a3, a5, a6, a7, c1), (a1, a2, a3, a5, a6, a7, c2), (a1, a2, a3, a5, a6, a7, c3), (a1, a2, a3, a5, a6, a7, c1, c2), (a1, a2, a3, a5, a6, a7, c2, c3), (a1, a2, a3, a5, a6, a7, c1, c3), (a1, a2, a3, a5, a6, a7, c1, c2, c3), (a1, a2, a3, a4, a5, a6, a7, c1), (a1, a2, a3, a4, a5, a6, a7, c2), (a1, a2, a3, a4, a5, a6, a7, c3), (a1, a2, a3, a4, a5, a6, a7, c1, c2), (a1, a2, a3, a4, a5, a6, a7, c2, c3), (a1, a2, a3, a4, a5, a6, a7, c1, c3) or (a1, a2, a3, a4, a5, a6, a7, c1, c2, c3).

Examples of a combination of the ingredients (a) and (c) include, but are not limited to, combinations of the ingredient (a) selected from glucose, sucrose, fructose, erythritol, D-allulose, and D-tagatose and the ingredient (c) containing at least one sweet substance selected from RebD, RebM, mogroside V, and thaumatin. More specific examples of the combination of the ingredients (a) and (c) include those in parentheses listed below when glucose is a1, sucrose is a2, fructose is a3, erythritol is a4, D-allulose is a5, D-tagatose is a6, RebD is c1, RebM is c2, mogroside V is c3, and thaumatin is c4. In the following list, (a1, a6, c1), for example, indicates a combination of glucose, D-tagatose, and RebD. The following list does not include combinations wherein thaumatin alone is comprised as ingredient (c).
(a1, c1), (a1, c2), (a1, c3), (a1, c1, c2), (a1, c1, c3), (a1, c1, c4), (a1, c2, c3), (a1, c2, c4), (a1, c3, c4), (a1, c1, c2, c3), (a1, c1, c2, c4), (a1, c1, c3, c4), (a1, c2, c3, c4), (a1, c1, c2, c3, c4), (a2, c1), (a2, c2), (a2, c3), (a2, c1, c2), (a2, c1, c3), (a2, c1, c4), (a2, c2, c3), (a2, c2, c4), (a2, c3, c4), (a2, c1, c2, c3), (a2, c1, c2, c4), (a2, c1, c3, c4), (a2, c2, c3, c4), (a2, c1, c2, c3, c4), (a3, c1), (a3, c2), (a3, c3), (a3, c1, c2), (a3, c1, c3), (a3, c1, c4), (a3, c2, c3), (a3, c2, c4), (a3, c3, c4), (a3, c1, c2, c3), (a3, c1, c2, c4), (a3, c1, c3, c4), (a3, c2, c3, c4), (a3, c1, c2, c3, c4), (a4, c1), (a4, c2), (a4, c3), (a4, c1, c2), (a4, c1, c3), (a4, c1, c4), (a4, c2, c3), (a4, c2, c4), (a4, c3, c4), (a4, c1, c2, c3), (a4, c1, c2, c4), (a4, c1, c3, c4), (a4, c2, c3, c4), (a4, c1, c2, c3, c4), (a5, c1), (a5, c2), (a5, c3), (a5, c1, c2), (a5, c1, c3), (a5, c1, c4), (a5, c2, c3), (a5, c2, c4), (a5, c3, c4), (a5, c1, c2, c3), (a5, c1, c2, c4), (a5, c1, c3, c4), (a5, c2, c3, c4), (a5, c1, c2, c3, c4), (a6, c1), (a6, c2), (a6, c3), (a6, c1, c2), (a6, c1, c3), (a6, c1, c4), (a6, c2, c3), (a6, c2, c4), (a6, c3, c4), (a6, c1, c2, c3), (a6, c1, c2, c4), (a6, c1, c3, c4), (a6, c2, c3, c4), (a6, c1, c2, c3, c4),
(a1, a2, c1), (a1, a2, c2), (a1, a2, c3), (a1, a2, c1, c2), (a1, a2, c1, c3), (a1, a2, c1, c4), (a1, a2, c2, c3), (a1, a2, c2, c4), (a1, a2, c3, c4), (a1, a2, c1, c2, c3), (a1, a2, c1, c2, c4), (a1, a2, c1, c3, c4), (a1, a2, c2, c3, c4), (a1, a2, c1, c2, c3, c4), (a1, a3, c1), (a1, a3, c2), (a1, a3, c3), (a1, a3, c1, c2), (a1, a3, c1, c3), (a1, a3, c1, c4), (a1, a3, c2, c3), (a1, a3, c2, c4), (a1, a3, c3, c4), (a1, a3, c1, c2, c3), (a1, a3, c1, c2, c4), (a1, a3, c1, c3, c4), (a1, a3, c2, c3, c4), (a1, a3, c1, c2, c3, c4), (a1, a4, c1), (a1, a4, c2), (a1, a4, c3), (a1, a4, c1, c2), (a1, a4, c1, c3), (a1, a4, c1, c4), (a1, a4, c2, c3), (a1, a4, c2, c4), (a1, a4, c3, c4), (a1, a4, c1, c2, c3), (a1, a4, c1, c2, c4), (a1, a4, c1, c3, c4), (a1, a4, c2, c3, c4), (a1, a4, c1, c2, c3, c4), (a1, a5, c1), (a1, a5, c2), (a1, a5, c3), (a1, a5, c1, c2), (a1, a5, c1, c3), (a1, a5, c1, c4), (a1, a5, c2, c3), (a1, a5, c2, c4), (a1, a5, c3, c4), (a1, a5, c1, c2, c3), (a1, a5, c1, c2, c4), (a1, a5, c1, c3, c4), (a1, a5, c2, c3, c4), (a1, a5, c1, c2, c3, c4),
(a1, a6, c1), (a1, a6, c2), (a1, a6, c3), (a1, a6, c1, c2), (a1, a6, c1, c3), (a1, a6, c1, c4), (a1, a6, c2, c3), (a1, a6, c2, c4), (a1, a6, c3, c4), (a1, a6, c1, c2, c3), (a1, a6, c1, c2, c4), (a1, a6, c1, c3, c4), (a1, a6, c2, c3, c4), (a1, a6, c1, c2, c3, c4), (a2, a3, c1), (a2, a3, c2), (a2, a3, c3), (a2, a3, c1, c2), (a2, a3, c1, c3), (a2, a3, c1, c4), (a2, a3, c2, c3), (a2, a3, c2, c4), (a2, a3, c3, c4), (a2, a3, c1, c2, c3), (a2, a3, c1, c2, c4), (a2, a3, c1, c3, c4), (a2, a3, c2, c3, c4), (a2, a3, c1, c2, c3, c4), (a2, a4, c1), (a2, a4, c2), (a2, a4, c3), (a2, a4, c1, c2), (a2, a4, c1, c3), (a2, a4, c1, c4), (a2, a4, c2, c3), (a2, a4, c2, c4), (a2, a4, c3, c4), (a2, a4, c1, c2, c3), (a2, a4, c1, c2, c4), (a2, a4, c1, c3, c4), (a2, a4, c2, c3, c4), (a2, a4, c1, c2, c3, c4), (a2, a5, c1), (a2, a5, c2), (a2, a5, c3), (a2, a5, c1, c2), (a2, a5, c1, c3), (a2, a5, c1, c4), (a2, a5, c2, c3), (a2, a5, c2, c4), (a2, a5, c3, c4), (a2, a5, c1, c2, c3), (a2, a5, c1, c2, c4), (a2, a5, c1, c3, c4), (a2, a5, c2, c3, c4), (a2, a5, c1, c2, c3, c4), (a2, a6, c1), (a2, a6, c2), (a2, a6, c3), (a2, a6, c1, c2), (a2, a6, c1, c3), (a2, a6, c1, c4), (a2, a6, c2, c3), (a2, a6, c2, c4), (a2, a6, c3, c4), (a2, a6, c1, c2, c3), (a2, a6, c1, c2, c4), (a2, a6, c1, c3, c4), (a2, a6, c2, c3, c4), (a2, a6, c1, c2, c3, c4),
(a3, a4, c1), (a3, a4, c2), (a3, a4, c3), (a3, a4, c1, c2), (a3, a4, c1, c3), (a3, a4, c1, c4), (a3, a4, c2, c3), (a3, a4, c2, c4), (a3, a4, c3, c4), (a3, a4, c1, c2, c3), (a3, a4, c1, c2, c4), (a3, a4, c1, c3, c4), (a3, a4, c2, c3, c4), (a3, a4, c1, c2, c3, c4), (a3, a5, c1), (a3, a5, c2), (a3, a5, c3), (a3, a5, c1, c2), (a3, a5, c1, c3), (a3, a5, c1, c4), (a3, a5, c2, c3), (a3, a5, c2, c4), (a3, a5, c3, c4), (a3, a5, c1, c2, c3), (a3, a5, c1, c2, c4), (a3, a5, c1, c3, c4), (a3, a5, c2, c3, c4), (a3, a5, c1, c2, c3, c4), (a3, a6, c1), (a3, a6, c2), (a3, a6, c3), (a3, a6, c1, c2), (a3, a6, c1, c3), (a3, a6, c1, c4), (a3, a6, c2, c3), (a3, a6, c2, c4), (a3, a6, c3, c4), (a3, a6, c1, c2, c3), (a3, a6, c1, c2, c4), (a3, a6, c1, c3, c4), (a3, a6, c2, c3, c4), (a3, a6, c1, c2, c3, c4), (a4, a5, c1), (a4, a5, c2), (a4, a5, c3), (a4, a5, c1, c2), (a4, a5, c1, c3), (a4, a5, c1, c4), (a4, a5, c2, c3), (a4, a5, c2, c4), (a4, a5, c3, c4), (a4, a5, c1, c2, c3), (a4, a5, c1, c2, c4), (a4, a5, c1, c3, c4), (a4, a5, c2, c3, c4), (a4, a5, c1, c2, c3, c4), (a4, a6, c1), (a4, a6, c2), (a4, a6, c3), (a4, a6, c1, c2), (a4, a6, c1, c3), (a4, a6, c1, c4), (a4, a6, c2, c3), (a4, a6, c2, c4), (a4, a6, c3, c4), (a4, a6, c1, c2, c3), (a4, a6, c1, c2, c4), (a4, a6, c1, c3, c4), (a4, a6, c2, c3, c4), (a4, a6, c1, c2, c3, c4),
(a5, a6, c1), (a5, a6, c2), (a5, a6, c3), (a5, a6, c1, c2), (a5, a6, c1, c3), (a5, a6, c1, c4), (a5, a6, c2, c3), (a5, a6, c2, c4), (a5, a6, c3, c4), (a5, a6, c1, c2, c3), (a5, a6, c1, c2, c4), (a5, a6, c1, c3, c4), (a5, a6, c2, c3, c4), (a5, a6, c1, c2, c3, c4), (a1, a2, a3, c1), (a1, a2, a3, c2), (a1, a2, a3, c3), (a1, a2, a3, c1, c2), (a1, a2, a3, c1, c3), (a1, a2, a3, c1, c4), (a1, a2, a3, c2, c3), (a1, a2, a3, c2, c4), (a1, a2, a3, c3, c4), (a1, a2, a3, c1, c2, c3), (a1, a2, a3, c1, c2, c4), (a1, a2, a3, c1, c3, c4), (a1, a2, a3, c2, c3, c4), (a1, a2, a3, c1, c2, c3, c4), (a1, a2, a4, c1), (a1, a2, a4, c2), (a1, a2, a4, c3), (a1, a2, a4, c1, c2), (a1, a2, a4, c1, c3), (a1, a2, a4, c1, c4), (a1, a2, a4, c2, c3), (a1, a2, a4, c2, c4), (a1, a2, a4, c3, c4), (a1, a2, a4, c1, c2, c3), (a1, a2, a4, c1, c2, c4), (a1, a2, a4, c1, c3, c4), (a1, a2, a4, c2, c3, c4), (a1, a2, a4, c1, c2, c3, c4), (a1, a2, a5, c1), (a1, a2, a5, c2), (a1, a2, a5, c3), (a1, a2, a5, c1, c2), (a1, a2, a5, c1, c3), (a1, a2, a5, c1, c4), (a1, a2, a5, c2, c3), (a1, a2, a5, c2, c4), (a1, a2, a5, c3, c4), (a1, a2, a5, c1, c2, c3), (a1, a2, a5, c1, c2, c4), (a1, a2, a5, c1, c3, c4), (a1, a2, a5, c2, c3, c4), (a1, a2, a5, c1, c2, c3, c4),
(a1, a2, a6, c1), (a1, a2, a6, c2), (a1, a2, a6, c3), (a1, a2, a6, c1, c2), (a1, a2, a6, c1, c3), (a1, a2, a6, c1, c4), (a1, a2, a6, c2, c3), (a1, a2, a6, c2, c4), (a1, a2, a6, c3, c4), (a1, a2, a6, c1, c2, c3), (a1, a2, a6, c1, c2, c4), (a1, a2, a6, c1, c3, c4), (a1, a2, a6, c2, c3, c4), (a1, a2, a6, c1, c2, c3, c4), (a1, a3, a4, c1), (a1, a3, a4, c2), (a1, a3, a4, c3), (a1, a3, a4, c1, c2), (a1, a3, a4, c1, c3), (a1, a3, a4, c1, c4), (a1, a3, a4, c2, c3), (a1, a3, a4, c2, c4), (a1, a3, a4, c3, c4), (a1, a3, a4, c1, c2, c3), (a1, a3, a4, c1, c2, c4), (a1, a3, a4, c1, c3, c4), (a1, a3, a4, c2, c3, c4), (a1, a3, a4, c1, c2, c3, c4), (a1, a3, a5, c1), (a1, a3, a5, c2), (a1, a3, a5, c3), (a1, a3, a5, c1, c2), (a1, a3, a5, c1, c3), (a1, a3, a5, c1, c4), (a1, a3, a5, c2, c3), (a1, a3, a5, c2, c4), (a1, a3, a5, c3, c4), (a1, a3, a5, c1, c2, c3), (a1, a3, a5, c1, c2, c4), (a1, a3, a5, c1, c3, c4), (a1, a3, a5, c2, c3, c4), (a1, a3, a5, c1, c2, c3, c4), (a1, a3, a6, c1), (a1, a3, a6, c2), (a1, a3, a6, c3), (a1, a3, a6, c1, c2), (a1, a3, a6, c1, c3), (a1, a3, a6, c1, c4), (a1, a3, a6, c2, c3), (a1, a3, a6, c2, c4), (a1, a3, a6, c3, c4), (a1, a3, a6, c1, c2, c3), (a1, a3, a6, c1, c2, c4), (a1, a3, a6, c1, c3, c4), (a1, a3, a6, c2, c3, c4), (a1, a3, a6, c1, c2, c3, c4),
(a1, a4, a5, c1), (a1, a4, a5, c2), (a1, a4, a5, c3), (a1, a4, a5, c1, c2), (a1, a4, a5, c1, c3), (a1, a4, a5, c1, c4), (a1, a4, a5, c2, c3), (a1, a4, a5, c2, c4), (a1, a4, a5, c3, c4), (a1, a4, a5, c1, c2, c3), (a1, a4, a5, c1, c2, c4), (a1, a4, a5, c1, c3, c4), (a1, a4, a5, c2, c3, c4), (a1, a4, a5, c1, c2, c3, c4), (a1, a4, a6, c1), (a1, a4, a6, c2), (a1, a4, a6, c3), (a1, a4, a6, c1, c2), (a1, a4, a6, c1, c3), (a1, a4, a6, c1, c4), (a1, a4, a6, c2, c3), (a1, a4, a6, c2, c4), (a1, a4, a6, c3, c4), (a1, a4, a6, c1, c2, c3), (a1, a4, a6, c1, c2, c4), (a1, a4, a6, c1, c3, c4), (a1, a4, a6, c2, c3, c4), (a1, a4, a6, c1, c2, c3, c4), (a1, a5, a6, c1), (a1, a5, a6, c2), (a1, a5, a6, c3), (a1, a5, a6, c1, c2), (a1, a5, a6, c1, c3), (a1, a5, a6, c1, c4), (a1, a5, a6, c2, c3), (a1, a5, a6, c2, c4), (a1, a5, a6, c3, c4), (a1, a5, a6, c1, c2, c3), (a1, a5, a6, c1, c2, c4), (a1, a5, a6, c1, c3, c4), (a1, a5, a6, c2, c3, c4), (a1, a5, a6, c1, c2, c3, c4), (a2, a3, a4, c1), (a2, a3, a4, c2), (a2, a3, a4, c3), (a2, a3, a4, c1, c2), (a2, a3, a4, c1, c3), (a2, a3, a4, c1, c4), (a2, a3, a4, c2, c3), (a2, a3, a4, c2, c4), (a2, a3, a4, c3, c4), (a2, a3, a4, c1, c2, c3), (a2, a3, a4, c1, c2, c4), (a2, a3, a4, c1, c3, c4), (a2, a3, a4, c2, c3, c4), (a2, a3, a4, c1, c2, c3, c4),
(a2, a3, a5, c1), (a2, a3, a5, c2), (a2, a3, a5, c3), (a2, a3, a5, c1, c2), (a2, a3, a5, c1, c3), (a2, a3, a5, c1, c4), (a2, a3, a5, c2, c3), (a2, a3, a5, c2, c4), (a2, a3, a5, c3, c4), (a2, a3, a5, c1, c2, c3), (a2, a3, a5, c1, c2, c4), (a2, a3, a5, c1, c3, c4), (a2, a3, a5, c2, c3, c4), (a2, a3, a5, c1, c2, c3, c4), (a2, a3, a6, c1), (a2, a3, a6, c2), (a2, a3, a6, c3), (a2, a3, a6, c1, c2), (a2, a3, a6, c1, c3), (a2, a3, a6, c1, c4), (a2, a3, a6, c2, c3), (a2, a3, a6, c2, c4), (a2, a3, a6, c3, c4), (a2, a3, a6, c1, c2, c3), (a2, a3, a6, c1, c2, c4), (a2, a3, a6, c1, c3, c4), (a2, a3, a6, c2, c3, c4), (a2, a3, a6, c1, c2, c3, c4), (a2, a4, a5, c1), (a2, a4, a5, c2), (a2, a4, a5, c3), (a2, a4, a5, c1, c2), (a2, a4, a5, c1, c3), (a2, a4, a5, c1, c4), (a2, a4, a5, c2, c3), (a2, a4, a5, c2, c4), (a2, a4, a5, c3, c4), (a2, a4, a5, c1, c2, c3), (a2, a4, a5, c1, c2, c4), (a2, a4, a5, c1, c3, c4), (a2, a4, a5, c2, c3, c4), (a2, a4, a5, c1, c2, c3, c4), (a2, a4, a6, c1), (a2, a4, a6, c2), (a2, a4, a6, c3), (a2, a4, a6, c1, c2), (a2, a4, a6, c1, c3), (a2, a4, a6, c1, c4), (a2, a4, a6, c2, c3), (a2, a4, a6, c2, c4), (a2, a4, a6, c3, c4), (a2, a4, a6, c1, c2, c3), (a2, a4, a6, c1, c2, c4), (a2, a4, a6, c1, c3, c4), (a2, a4, a6, c2, c3, c4), (a2, a4, a6, c1, c2, c3, c4),
(a2, a5, a6, c1), (a2, a5, a6, c2), (a2, a5, a6, c3), (a2, a5, a6, c1, c2), (a2, a5, a6, c1, c3), (a2, a5, a6, c1, c4), (a2, a5, a6, c2, c3), (a2, a5, a6, c2, c4), (a2, a5, a6, c3, c4), (a2, a5, a6, c1, c2, c3), (a2, a5, a6, c1, c2, c4), (a2, a5, a6, c1, c3, c4), (a2, a5, a6, c2, c3, c4), (a2, a5, a6, c1, c2, c3, c4), (a3, a4, a5, c1), (a3, a4, a5, c2), (a3, a4, a5, c3), (a3, a4, a5, c1, c2), (a3, a4, a5, c1, c3), (a3, a4, a5, c1, c4), (a3, a4, a5, c2, c3), (a3, a4, a5, c2, c4), (a3, a4, a5, c3, c4), (a3, a4, a5, c1, c2, c3), (a3, a4, a5, c1, c2, c4), (a3, a4, a5, c1, c3, c4), (a3, a4, a5, c2, c3, c4), (a3, a4, a5, c1, c2, c3, c4), (a3, a4, a6, c1), (a3, a4, a6, c2), (a3, a4, a6, c3), (a3, a4, a6, c1, c2), (a3, a4, a6, c1, c3), (a3, a4, a6, c1, c4), (a3, a4, a6, c2, c3), (a3, a4, a6, c2, c4), (a3, a4, a6, c3, c4), (a3, a4, a6, c1, c2, c3), (a3, a4, a6, c1, c2, c4), (a3, a4, a6, c1, c3, c4), (a3, a4, a6, c2, c3, c4), (a3, a4, a6, c1, c2, c3, c4), (a3, a5, a6, c1), (a3, a5, a6, c2), (a3, a5, a6, c3), (a3, a5, a6, c1, c2), (a3, a5, a6, c1, c3), (a3, a5, a6, c1, c4), (a3, a5, a6, c2, c3), (a3, a5, a6, c2, c4), (a3, a5, a6, c3, c4), (a3, a5, a6, c1, c2, c3), (a3, a5, a6, c1, c2, c4), (a3, a5, a6, c1, c3, c4), (a3, a5, a6, c2, c3, c4), (a3, a5, a6, c1, c2, c3, c4),
(a4, a5, a6, c1), (a4, a5, a6, c2), (a4, a5, a6, c3), (a4, a5, a6, c1, c2), (a4, a5, a6, c1, c3), (a4, a5, a6, c1, c4), (a4, a5, a6, c2, c3), (a4, a5, a6, c2, c4), (a4, a5, a6, c3, c4), (a4, a5, a6, c1, c2, c3), (a4, a5, a6, c1, c2, c4), (a4, a5, a6, c1, c3, c4), (a4, a5, a6, c2, c3, c4), (a4, a5, a6, c1, c2, c3, c4), (a1, a2, a3, a4, c1), (a1, a2, a3, a4, c2), (a1, a2, a3, a4, c3), (a1, a2, a3, a4, c1, c2), (a1, a2, a3, a4, c1, c3), (a1, a2, a3, a4, c1, c4), (a1, a2, a3, a4, c2, c3), (a1, a2, a3, a4, c2, c4), (a1, a2, a3, a4, c3, c4), (a1, a2, a3, a4, c1, c2, c3), (a1, a2, a3, a4, c1, c2, c4), (a1, a2, a3, a4, c1, c3, c4), (a1, a2, a3, a4, c2, c3, c4), (a1, a2, a3, a4, c1, c2, c3, c4), (a1, a2, a3, a5, c1), (a1, a2, a3, a5, c2), (a1, a2, a3, a5, c3), (a1, a2, a3, a5, c1, c2), (a1, a2, a3, a5, c1, c3), (a1, a2, a3, a5, c1, c4), (a1, a2, a3, a5, c2, c3), (a1, a2, a3, a5, c2, c4), (a1, a2, a3, a5, c3, c4), (a1, a2, a3, a5, c1, c2, c3), (a1, a2, a3, a5, c1, c2, c4), (a1, a2, a3, a5, c1, c3, c4), (a1, a2, a3, a5, c2, c3, c4), (a1, a2, a3, a5, c1, c2, c3, c4),
(a1, a2, a3, a6, c1), (a1, a2, a3, a6, c2), (a1, a2, a3, a6, c3), (a1, a2, a3, a6, c1, c2), (a1, a2, a3, a6, c1, c3), (a1, a2, a3, a6, c1, c4), (a1, a2, a3, a6, c2, c3), (a1, a2, a3, a6, c2, c4), (a1, a2, a3, a6, c3, c4), (a1, a2, a3, a6, c1, c2, c3), (a1, a2, a3, a6, c1, c2, c4), (a1, a2, a3, a6, c1, c3, c4), (a1, a2, a3, a6, c2, c3, c4), (a1, a2, a3, a6, c1, c2, c3, c4), (a1, a2, a4, a5, c1), (a1, a2, a4, a5, c2), (a1, a2, a4, a5, c3), (a1, a2, a4, a5, c1, c2), (a1, a2, a4, a5, c1, c3), (a1, a2, a4, a5, c1, c4), (a1, a2, a4, a5, c2, c3), (a1, a2, a4, a5, c2, c4), (a1, a2, a4, a5, c3, c4), (a1, a2, a4, a5, c1, c2, c3), (a1, a2, a4, a5, c1, c2, c4), (a1, a2, a4, a5, c1, c3, c4), (a1, a2, a4, a5, c2, c3, c4), (a1, a2, a4, a5, c1, c2, c3, c4), (a1, a2, a4, a6, c1), (a1, a2, a4, a6, c2), (a1, a2, a4, a6, c3), (a1, a2, a4, a6, c1, c2), (a1, a2, a4, a6, c1, c3), (a1, a2, a4, a6, c1, c4), (a1, a2, a4, a6, c2, c3), (a1, a2, a4, a6, c2, c4), (a1, a2, a4, a6, c3, c4), (a1, a2, a4, a6, c1, c2, c3), (a1, a2, a4, a6, c1, c2, c4), (a1, a2, a4, a6, c1, c3, c4), (a1, a2, a4, a6, c2, c3, c4), (a1, a2, a4, a6, c1, c2, c3, c4),
(a1, a2, a5, a6, c1), (a1, a2, a5, a6, c2), (a1, a2, a5, a6, c3), (a1, a2, a5, a6, c1, c2), (a1, a2, a5, a6, c1, c3), (a1, a2, a5, a6, c1, c4), (a1, a2, a5, a6, c2, c3), (a1, a2, a5, a6, c2, c4), (a1, a2, a5, a6, c3, c4), (a1, a2, a5, a6, c1, c2, c3), (a1, a2, a5, a6, c1, c2, c4), (a1, a2, a5, a6, c1, c3, c4), (a1, a2, a5, a6, c2, c3, c4), (a1, a2, a5, a6, c1, c2, c3, c4), (a1, a3, a4, a5, c1), (a1, a3, a4, a5, c2), (a1, a3, a4, a5, c3), (a1, a3, a4, a5, c1, c2), (a1, a3, a4, a5, c1, c3), (a1, a3, a4, a5, c1, c4), (a1, a3, a4, a5, c2, c3), (a1, a3, a4, a5, c2, c4), (a1, a3, a4, a5, c3, c4), (a1, a3, a4, a5, c1, c2, c3), (a1, a3, a4, a5, c1, c2, c4), (a1, a3, a4, a5, c1, c3, c4), (a1, a3, a4, a5, c2, c3, c4), (a1, a3, a4, a5, c1, c2, c3, c4), (a1, a3, a4, a6, c1), (a1, a3, a4, a6, c2), (a1, a3, a4, a6, c3), (a1, a3, a4, a6, c1, c2), (a1, a3, a4, a6, c1, c3), (a1, a3, a4, a6, c1, c4), (a1, a3, a4, a6, c2, c3), (a1, a3, a4, a6, c2, c4), (a1, a3, a4, a6, c3, c4), (a1, a3, a4, a6, c1, c2, c3), (a1, a3, a4, a6, c1, c2, c4), (a1, a3, a4, a6, c1, c3, c4), (a1, a3, a4, a6, c2, c3, c4), (a1, a3, a4, a6, c1, c2, c3, c4),
(a1, a3, a5, a6, c1), (a1, a3, a5, a6, c2), (a1, a3, a5, a6, c3), (a1, a3, a5, a6, c1, c2), (a1, a3, a5, a6, c1, c3), (a1, a3, a5, a6, c1, c4), (a1, a3, a5, a6, c2, c3), (a1, a3, a5, a6, c2, c4), (a1, a3, a5, a6, c3, c4), (a1, a3, a5, a6, c1, c2, c3), (a1, a3, a5, a6, c1, c2, c4), (a1, a3, a5, a6, c1, c3, c4), (a1, a3, a5, a6, c2, c3, c4), (a1, a3, a5, a6, c1, c2, c3, c4), (a1, a4, a5, a6, c1), (a1, a4, a5, a6, c2), (a1, a4, a5, a6, c3), (a1, a4, a5, a6, c1, c2), (a1, a4, a5, a6, c1, c3), (a1, a4, a5, a6, c1, c4), (a1, a4, a5, a6, c2, c3), (a1, a4, a5, a6, c2, c4), (a1, a4, a5, a6, c3, c4), (a1, a4, a5, a6, c1, c2, c3), (a1, a4, a5, a6, c1, c2, c4), (a1, a4, a5, a6, c1, c3, c4), (a1, a4, a5, a6, c2, c3, c4), (a1, a4, a5, a6, c1, c2, c3, c4), (a2, a3, a4, a5, c1), (a2, a3, a4, a5, c2), (a2, a3, a4, a5, c3), (a2, a3, a4, a5, c1, c2), (a2, a3, a4, a5, c1, c3), (a2, a3, a4, a5, c1, c4), (a2, a3, a4, a5, c2, c3), (a2, a3, a4, a5, c2, c4), (a2, a3, a4, a5, c3, c4), (a2, a3, a4, a5, c1, c2, c3), (a2, a3, a4, a5, c1, c2, c4), (a2, a3, a4, a5, c1, c3, c4), (a2, a3, a4, a5, c2, c3, c4), (a2, a3, a4, a5, c1, c2, c3, c4),
(a2, a3, a4, a6, c1), (a2, a3, a4, a6, c2), (a2, a3, a4, a6, c3), (a2, a3, a4, a6, c1, c2), (a2, a3, a4, a6, c1, c3), (a2, a3, a4, a6, c1, c4), (a2, a3, a4, a6, c2, c3), (a2, a3, a4, a6, c2, c4), (a2, a3, a4, a6, c3, c4), (a2, a3, a4, a6, c1, c2, c3), (a2, a3, a4, a6, c1, c2, c4), (a2, a3, a4, a6, c1, c3, c4), (a2, a3, a4, a6, c2, c3, c4), (a2, a3, a4, a6, c1, c2, c3, c4), (a2, a3, a5, a6, c1), (a2, a3, a5, a6, c2), (a2, a3, a5, a6, c3), (a2, a3, a5, a6, c1, c2), (a2, a3, a5, a6, c1, c3), (a2, a3, a5, a6, c1, c4), (a2, a3, a5, a6, c2, c3), (a2, a3, a5, a6, c2, c4), (a2, a3, a5, a6, c3, c4), (a2, a3, a5, a6, c1, c2, c3), (a2, a3, a5, a6, c1, c2, c4), (a2, a3, a5, a6, c1, c3, c4), (a2, a3, a5, a6, c2, c3, c4), (a2, a3, a5, a6, c1, c2, c3, c4), (a2, a4, a5, a6, c1), (a2, a4, a5, a6, c2), (a2, a4, a5, a6, c3), (a2, a4, a5, a6, c1, c2), (a2, a4, a5, a6, c1, c3), (a2, a4, a5, a6, c1, c4), (a2, a4, a5, a6, c2, c3), (a2, a4, a5, a6, c2, c4), (a2, a4, a5, a6, c3, c4), (a2, a4, a5, a6, c1, c2, c3), (a2, a4, a5, a6, c1, c2, c4), (a2, a4, a5, a6, c1, c3, c4), (a2, a4, a5, a6, c2, c3, c4), (a2, a4, a5, a6, c1, c2, c3, c4),
(a3, a4, a5, a6, c1), (a3, a4, a5, a6, c2), (a3, a4, a5, a6, c3), (a3, a4, a5, a6, c1, c2), (a3, a4, a5, a6, c1, c3), (a3, a4, a5, a6, c1, c4), (a3, a4, a5, a6, c2, c3), (a3, a4, a5, a6, c2, c4), (a3, a4, a5, a6, c3, c4), (a3, a4, a5, a6, c1, c2, c3), (a3, a4, a5, a6, c1, c2, c4), (a3, a4, a5, a6, c1, c3, c4), (a3, a4, a5, a6, c2, c3, c4), (a3, a4, a5, a6, c1, c2, c3, c4), (a1, a2, a3, a4, a5, c1), (a1, a2, a3, a4, a5, c2), (a1, a2, a3, a4, a5, c3), (a1, a2, a3, a4, a5, c1, c2), (a1, a2, a3, a4, a5, c1, c3), (a1, a2, a3, a4, a5, c1, c4), (a1, a2, a3, a4, a5, c2, c3), (a1, a2, a3, a4, a5, c2, c4), (a1, a2, a3, a4, a5, c3, c4), (a1, a2, a3, a4, a5, c1, c2, c3), (a1, a2, a3, a4, a5, c1, c2, c4), (a1, a2, a3, a4, a5, c1, c3, c4), (a1, a2, a3, a4, a5, c2, c3, c4), (a1, a2, a3, a4, a5, c1, c2, c3, c4), (a1, a2, a3, a4, a6, c1), (a1, a2, a3, a4, a6, c2), (a1, a2, a3, a4, a6, c3), (a1, a2, a3, a4, a6, c1, c2), (a1, a2, a3, a4, a6, c1, c3), (a1, a2, a3, a4, a6, c1, c4), (a1, a2, a3, a4, a6, c2, c3), (a1, a2, a3, a4, a6, c2, c4), (a1, a2, a3, a4, a6, c3, c4), (a1, a2, a3, a4, a6, c1, c2, c3), (a1, a2, a3, a4, a6, c1, c2, c4), (a1, a2, a3, a4, a6, c1, c3, c4), (a1, a2, a3, a4, a6, c2, c3, c4), (a1, a2, a3, a4, a6, c1, c2, c3, c4),
(a1, a2, a3, a5, a6, c1), (a1, a2, a3, a5, a6, c2), (a1, a2, a3, a5, a6, c3), (a1, a2, a3, a5, a6, c1, c2), (a1, a2, a3, a5, a6, c1, c3), (a1, a2, a3, a5, a6, c1, c4), (a1, a2, a3, a5, a6, c2, c3), (a1, a2, a3, a5, a6, c2, c4), (a1, a2, a3, a5, a6, c3, c4), (a1, a2, a3, a5, a6, c1, c2, c3), (a1, a2, a3, a5, a6, c1, c2, c4), (a1, a2, a3, a5, a6, c1, c3, c4), (a1, a2, a3, a5, a6, c2, c3, c4), (a1, a2, a3, a5, a6, c1, c2, c3, c4), (a1, a2, a4, a5, a6, c1), (a1, a2, a4, a5, a6, c2), (a1, a2, a4, a5, a6, c3), (a1, a2, a4, a5, a6, c1, c2), (a1, a2, a4, a5, a6, c1, c3), (a1, a2, a4, a5, a6, c1, c4), (a1, a2, a4, a5, a6, c2, c3), (a1, a2, a4, a5, a6, c2, c4), (a1, a2, a4, a5, a6, c3, c4), (a1, a2, a4, a5, a6, c1, c2, c3), (a1, a2, a4, a5, a6, c1, c2, c4), (a1, a2, a4, a5, a6, c1, c3, c4), (a1, a2, a4, a5, a6, c2, c3, c4), (a1, a2, a4, a5, a6, c1, c2, c3, c4), (a1, a3, a4, a5, a6, c1), (a1, a3, a4, a5, a6, c2), (a1, a3, a4, a5, a6, c3), (a1, a3, a4, a5, a6, c1, c2), (a1, a3, a4, a5, a6, c1, c3), (a1, a3, a4, a5, a6, c1, c4), (a1, a3, a4, a5, a6, c2, c3), (a1, a3, a4, a5, a6, c2, c4), (a1, a3, a4, a5, a6, c3, c4), (a1, a3, a4, a5, a6, c1, c2, c3), (a1, a3, a4, a5, a6, c1, c2, c4), (a1, a3, a4, a5, a6, c1, c3, c4), (a1, a3, a4, a5, a6, c2, c3, c4), (a1, a3, a4, a5, a6, c1, c2, c3, c4),
(a2, a3, a4, a5, a6, c1), (a2, a3, a4, a5, a6, c2), (a2, a3, a4, a5, a6, c3), (a2, a3, a4, a5, a6, c1, c2), (a2, a3, a4, a5, a6, c1, c3), (a2, a3, a4, a5, a6, c1, c4), (a2, a3, a4, a5, a6, c2, c3), (a2, a3, a4, a5, a6, c2, c4), (a2, a3, a4, a5, a6, c3, c4), (a2, a3, a4, a5, a6, c1, c2, c3), (a2, a3, a4, a5, a6, c1, c2, c4), (a2, a3, a4, a5, a6, c1, c3, c4), (a2, a3, a4, a5, a6, c2, c3, c4), (a2, a3, a4, a5, a6, c1, c2, c3, c4), (a1, a2, a3, a4, a5, a6, c1), (a1, a2, a3, a4, a5, a6, c2), (a1, a2, a3, a4, a5, a6, c3), (a1, a2, a3, a4, a5, a6, c1, c2), (a1, a2, a3, a4, a5, a6, c1, c3), (a1, a2, a3, a4, a5, a6, c1, c4), (a1, a2, a3, a4, a5, a6, c2, c3), (a1, a2, a3, a4, a5, a6, c2, c4), (a1, a2, a3, a4, a5, a6, c3, c4), (a1, a2, a3, a4, a5, a6, c1, c2, c3), (a1, a2, a3, a4, a5, a6, c1, c2, c4), (a1, a2, a3, a4, a5, a6, c1, c3, c4), (a1, a2, a3, a4, a5, a6, c2, c3, c4) or (a1, a2, a3, a4, a5, a6, c1, c2, c3, c4).

In some embodiments, the mass ratio c:a between ingredient (c) and ingredient (a) of the food or beverage of the present invention may be, for example, about 1:100000 to about 1:5, about 1:50000 to about 1:5, about 1:25000 to about 1:5, about 1:10000 to about 1:2, about 1:9600 to about 1:3, about 1:9400 to about 1:4, about 1:9200 to about 1:5, about 1:9000 to about 1:6, about 1:8800 to about 1:7, about 1:8600 to about 1:8, about 1:8400 to about 1:9, about 1:8200 to about 1:10, about 1:8000 to about 1:11, about 1:7800 to about 1:12, about 1:7600 to about 1:13, about 1:7400 to about 1:14, about 1:7200 to about 1:15, about 1:7000 to about 1:16, about 1:6800 to about 1:17, about 1:6600 to about 1:18, about 1:6400 to about 1:19, about 1:6200 to about 1:20, about 1:6000 to about 1:21, about 1:5800 to about 1:22, about 1:5600 to about 1:23, about 1:5400 to about 1:24, about 1:5200 to about 1:25, about 1:5000 to about 1:26, about 1:4800 to about 1:27, about 1:4600 to about 1:28, about 1:4400 to about 1:29, about 1:4200 to about 1:30, about 1:4000 to about 1:31, about 1:3800 to about 1:32, about 1:3600 to about 1:33, about 1:3400 to about 1:34, about 1:3200 to about 1:35, about 1:3000 to about 1:36, about 1:2800 to about 1:37, about 1:2600 to about 1:38, about 1:2400 to about 1:39, about 1:2200 to about 1:40, about 1:2000 to about 1:41, about 1:1800 to about 1:42, about 1:1600 to about 1:43, about 1:1400 to about 1:44, about 1:1200 to about 1:45, about 1:1000 to about 1:46, about 1:800 to about 1:47, about 1:600 to about 1:48, about 1:400 to about 1:49, or about 1:200 to about 1:50.

In some embodiments, the mass ratio a:b between ingredient (a) and ingredient (b) of the food or beverage of the present invention (b indicate the mass of sodium) may be, for example, about 2:1 to about 1750:1, about 4:1 to about 1720:1, about 6:1 to about 1690:1, about 8:1 to about 1660:1, about 10:1 to about 1630:1, about 12:1 to about 1600:1, about 14:1 to about 1570:1, about 16:1 to about 1540:1, about 18:1 to about 1510:1, about 20:1 to about 1480:1, about 22:1 to about 1450:1, about 24:1 to about 1420:1, about 26:1 to about 1390:1, about 28:1 to about 1360:1, about 30:1 to about 1330:1, about 32:1 to about 1300:1, about 34:1 to about 1270:1, about 36:1 to about 1240:1, about 38:1 to about 1210:1, about 40:1 to about 1180:1, about 42:1 to about 1150:1, about 44:1 to about 1120:1, about 46:1 to about 1090:1, about 48:1 to about 1060:1, about 50:1 to about 1030:1, about 52:1 to about 1000:1, about 54:1 to about 970:1, about 56:1 to about 940:1, about 58:1 to about 910:1, about 60:1 to about 880:1, about 62:1 to about 850:1, about 64:1 to about 820:1, about 66:1 to about 790:1, about 68:1 to about 760:1, about 70:1 to about 730:1, about 72:1 to about 700:1, about 74:1 to about 670:1, about 76:1 to about 640:1, about 78:1 to about 610:1, about 80:1 to about 580:1, about 82:1 to about 550:1, about 84:1 to about 520:1, about 86:1 to about 490:1, about 88:1 to about 460:1, about 90:1 to about 430:1, about 92:1 to about 400:1, about 94:1 to about 370:1, about 96:1 to about 340:1, about 98:1 to about 320:1, or about 100:1 to about 300:1.

In some embodiments, the mass ratio c:b between ingredient (c) and ingredient (b) of the food or beverage of the present invention (b indicate the mass of sodium) may be, for example, about 1:25 to about 5:1, about 1:24.5 to about 4.96:1, about 1:24 to about 4.92:1, about 1:23.5 to about 4.88:1, about 1:23 to about 4.84:1, about 1:22.5 to about 4.8:1, about 1:22 to about 4.76:1, about 1:21.5 to about 4.72:1, about 1:21 to about 4.68:1, about 1:20.5 to about 4.64:1, about 1:20 to about 4.6:1, about 1:19.5 to about 4.56:1, about 1:19 to about 4.52:1, about 1:18.5 to about 4.48:1, about 1:18 to about 4.44:1, about 1:17.5 to about 4.4:1, about 1:17 to about 4.36:1, about 1:16.5 to about 4.32:1, about 1:16 to about 4.28:1, about 1:15.5 to about 4.24:1, about 1:15 to about 4.2:1, about 1:14.5 to about 4.16:1, about 1:14 to about 4.12:1, about 1:13.5 to about 4.08:1, about 1:13 to about 4.04:1, about 1:12.5 to about 4:1, about 1:12 to about 3.96:1, about 1:11.5 to about 3.92:1, about 1:11 to about 3.88:1, about 1:10.5 to about 3.84:1, about 1:10 to about 3.8:1, about 1:9.5 to about 3.76:1, about 1:9 to about 3.72:1, about 1:8.5 to about 3.68:1, about 1:8 to about 3.64:1, about 1:7.5 to about 3.6:1, about 1:7 to about 3.56:1, about 1:6.5 to about 3.52:1, about 1:6 to about 3.48:1, about 1:5.5 to about 3.44:1, about 1:5 to about 3.4:1, about 1:4.5 to about 3.36:1, about 1:4 to about 3.32:1, about 1:3.5 to about 3.28:1, about 1:3 to about 3.24:1, about 1:2.5 to about 3.2:1, about 1:2 to about 3.16:1, about 1:1.5 to about 3.12:1, about 1:1.25 to about 3.08:1, or about 1:1 to about 3:1.

In some embodiments, the combination of the mass ratio between ingredient (c) and ingredient (a) and the mass ratio between ingredient (a) and ingredient (b)of the food or beverage of the present invention (c1:a1 to c2:a2, a1':b1' to a2':b2') may be, for example, (1:10000 to 1:2, 2:1 to 3000:1), (1:9600 to 1:3, 4:1 to 2900:1), (1:9400 to 1:4, 6:1 to 2800:1), (1:9200 to 1:5, 8:1 to 2700:1), (1:9000 to 1:6, 10:1 to 2600:1), (1:8800 to 1:7, 12:1 to 2500:1), (1:8600 to 1:8, 14:1 to 2450:1), (1:8400 to 1:9, 16:1 to 2400:1), (1:8200 to 1:10, 18:1 to 2350:1), (1:8000 to 1:11, 20:1 to 2300:1), (1:7800 to 1:12, 22:1 to 2250:1), (1:7600 to 1:13, 24:1 to 2200:1), (1:7400 to 1:14, 26:1 to 2150:1), (1:7200 to 1:15, 28:1 to 2100:1), (1:7000 to 1:16, 30:1 to 2050:1), (1:6800 to 1:17, 32:1 to 2000:1), (1:6600 to 1:18, 34:1 to 1950:1), (1:6400 to 1:19, 36:1 to 1900:1), (1:6200 to 1:20, 38:1 to 1850:1), (1:6000 to 1:21, 40:1 to 1800:1), (1:5800 to 1:22, 42:1 to 1750:1), (1:5600 to 1:23, 44:1 to 1700:1), (1:5400 to 1:24, 46:1 to 1650:1), (1:5200 to 1:25, 48:1 to 1600:1), (1:5000 to 1:26, 50:1 to 1550:1), (1:4800 to 1:27, 52:1 to 1500:1), (1:4600 to 1:28, 54:1 to 1450:1), (1:4400 to 1:29, 56:1 to 1400:1), (1:4200 to 1:30, 58:1 to 1350:1), (1:4000 to 1:31, 60:1 to 1300:1), (1:3800 to 1:32, 62:1 to 1250:1), (1:3600 to 1:33, 64:1 to 1200:1), (1:3400 to 1:34, 66:1 to 1150:1), (1:3200 to 1:35, 68:1 to 1100:1), (1:3000 to 1:36, 70:1 to 1050:1), (1:2800 to 1:37, 72:1 to 1000:1), (1:2600 to 1:38, 74:1 to 950:1), (1:2400 to 1:39, 76:1 to 900:1), (1:2200 to 1:40, 78:1 to 850:1), (1:2000 to 1:41, 80:1 to 800:1), (1:1800 to 1:42, 82:1 to 750:1), (1:1600 to 1:43, 84:1 to 700:1), (1:1400 to 1:44, 86:1 to 650:1), (1:1200 to 1:45, 88:1 to 600:1), (1:1000 to 1:46, 90:1 to 550:1), (1:800 to 1:47, 92:1 to 500:1), (1:600 to 1:48, 94:1 to 450:1), (1:400 to 1:49, 96:1 to 400:1), (1:200 to 1:50, 98:1 to 350:1), or (1:200 to 1:50, 100:1 to 300:1).

The sweetness and the taste quality of the food or beverage of the present invention can be evaluated by sensory-trained panelists. For specific measurement conditions in this case, reference can be made to examples described later. Also, food or beverage standards (for example, sucrose water), which will be the standards of sweetness, are prepared, and the sucrose concentration as the sweetness intensity, such as 1, 2, 3, 4, 5, 6, 7, 8, 9, 10, 12, 13, 14, and 15, is assigned to each of the standards. Then, panelists compare the sweetness of the food or beverage of the present invention with the sweetness of the food or beverage standards to enable the sweetness of the food or beverage of the present invention to be measured.

Additionally, in the above measurement, from the food or beverage standards having less sweetness than the food or beverage of the present invention, the food or beverage standard having sweetness closest to that of the food or beverage of the present invention is selected. The selected food or beverage standard is adjusted so as to exhibit the same sweetness as the food or beverage of the present invention by adding sucrose to the selected food or beverage standard. In this case, it is possible to measure the sweetness intensity of the food or beverage of the present invention from the amount of sucrose contained in the adjusted food or beverage standard.

Other methods for measuring the sweetness of the food or beverage of the present invention include, for instance, sweetness intensity evaluation using the Visual Analogue Scale (VAS method) and LMS method using Labeled Magnitude Scale. With respect to the VAS method, reference can be made to literatures such as Toyota et al., J. Jpn. Soc. Stomatognath. Funct. 2014;20:115-29, and with respect to the LMS method, reference can be made to literatures such as Green et al., Chem Senses. 1996;21:323-334. Specifically, in measurement of the sweetness intensity according to the VAS method, for example, an evaluator defines the lower limit of the sweetness intensity as "not sweet at all" and the upper limit as "nothing sweeter than this could be imagined". By means of a sheet of paper on which a vertical straight line having marks representing sweetness intensities is drawn, the evaluator evaluates the sweetness intensity the evaluator felt at the time by representing the intensity as a point on the straight line.

The sweetness intensity of a food or beverage of the present invention is not particularly limited as long as it is acceptable as that of a food or beverage. For instance, the degree of sweetness may be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. Here, when the sweetness intensity of a food or beverage is X, the sweetness intensity of the ingredient (a) is Xa, and the sweetness intensity of the ingredient (c) is Xc, the following relationships, for example, may be met: 0.1 < (Xa + Xc) < X ≤ 20, 0.5 < (Xa + Xc) < X ≤ 19, 1 < (Xa + Xc) < X ≤ 18, 1.5 < (Xa + Xc) < X ≤ 18, 2 < (Xa + Xc)< X ≤ 17, 2.5 < (Xa + Xc) < X ≤ 16, 3 < (Xa + Xc) < X ≤ 15, 3.5 < (Xa + Xc)< X ≤ 14, or 4 < (Xa + Xc) < X ≤ 13.

In some embodiments, a food or beverage of the present invention contains a sweet substance other than the above ingredients (a) to (c). Examples of the sweet substance other than the above ingredients (a) to (c) include: but are not limited to, synthetic sweeteners such as aspartame, neotame, advantame, sucralose, acesulfame K, saccharin, sodium saccharin, sodium cyclamate, dulcin, disodium glycyrrhizinate, trisodium glycyrrhizinate; and RebA, RebB, RebC, RebE, RebF, stevioside, rubusoside, steviolmonoside, steviolbioside, dulcoside A, and stevia extract. In other embodiments, a food or beverage of the present invention is free of a sweet substance other than the above ingredients (a) to (c).

In particular embodiments of a food or beverage of the present invention where the ingredient (c) comprises RebD and/or RebM and a sweet substance other than the ingredients (a) to (c) comprises RebA or RebA-containing stevia extract, the mass ratio of the RebD and/or RebM to RebA contained in the food or beverage may be 60:40 or less (that is, when the total mass of RebD and/or RebM and RebA is set to 100%, the mass of RebA is 40% or less and the mass of RebD and/or RebM is 60% or more; the same applies to the following), 70:30 or less, 80:20 or less, 85:15 or less, 90:10 or less, 95:5 or less, 97:3 or less, 98:2 or less, 99:1 or less, or 99.5:0.5 or less.

Depending on embodiments, the energy (total energy) of a food or beverage of the present invention may be 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, or 24 to 30 Kcal/100 ml.

In addition, depending on embodiments (e.g., embodiments containing a calorie sweetener), the energy (total energy; TE) of a food or beverage of the present invention may be 0 < TE ≤ 50 Kcal/100 ml, 0 < TE ≤ 45 Kcal/100 ml, 0 < TE ≤ 40 Kcal/100 ml, 0 < TE ≤ 35 Kcal/100 ml, 0 < TE ≤ 30 Kcal/100 ml, 0 < TE ≤ 24 Kcal/100 ml, 0 < TE ≤ 22 Kcal/100 ml, 0 < TE ≤ 20 Kcal/100ml, 0 < TE ≤ 15 Kcal/100 ml, 0 < TE ≤ 10 Kcal/100 ml, or 0 < TE ≤ 5 Kcal/100 ml (i.e., not being exactly 0).

In the present invention, the "food or beverage" includes solids, fluids, liquid, and mixtures thereof and is a generic name of orally-ingestible ones. Examples of the food or beverage of the present invention include nutritional supplement foods and beverages, health foods and beverages, functional foods and beverages, foods and beverages for infants, infant milk formulas, premature infant milk formulas, and geriatric foods and beverages.

Nutritional supplement foods and beverages refer to foods and beverages in which a specific nutritional ingredient is fortified. Health foods and beverages refer to foods and beverages that are healthful or are considered good for health, and include nutritional supplement foods and beverages, natural foods and beverages, diet foods and beverages. Functional foods and beverages refer to foods and beverages for supplying a nutritional ingredient that fulfills regulatory functions of the body, being synonymous with foods for specified health uses. Foods and beverages for infants refer to foods and beverages that are provided to children aged up to about six. Geriatric foods and beverages refer to foods and beverages processed to be digested and absorbed more easily than non-processed foods and beverages. Infant milk formulas refer to milk formulas to be provided to infants aged up to about one. Premature infant milk formulas refer to milk formulas to be provided to premature infants until about six months after birth.

Forms of the foods and beverages are not particularly limited, and various forms may be taken. Examples of such forms include beverages, confectionery, and supplements. The beverages may be either of alcoholic beverages or non-alcoholic beverages. Examples of the non-alcoholic beverages include, but not limited to, non-alcoholic beer, malt beverages, lactobacillus beverages, cocoa, sports drinks, nutritional supplement drinks, tea beverages, coffee beverages, carbonated beverages, functional beverages, fruit and vegetable beverages, milk-based beverages, soy milk beverages, and flavor water.

The non-alcoholic beer herein, which means a carbonated beverage having a beer-like flavor, is a non-fermented non-alcoholic type, substantially free of alcohol. Here, non-alcoholic beer is not intended to exclude beverages containing a trace amount of alcohol at an undetectable level.

When the composition of the present invention is a tea beverage, the composition is preferably a black tea beverage or sugarless tea beverage. Examples of the sugarless tea beverage include green tea beverages, oolong tea beverages, barley tea beverages, brown rice tea beverages, adlay tea beverages, and sugarless black tea beverages. The coffee beverage may be either container-packed coffee or liquid coffee.

Forms of the carbonated beverage are preferably cola-flavored beverages, transparent carbonated beverages, ginger ale, fruit juice-based carbonated beverages, milk-containing carbonated beverages, or sugarless carbonated beverages. Examples of the functional beverage include sports drinks, energy drinks, health support beverages, and jelly pouches.

Examples of the fruit and vegetable beverage include 100% fruit juice beverages, fruit-containing beverages, low fruit juice-containing refreshing beverages, fruit granule-containing fruit beverages or fruit pulp-containing beverages. Examples of the milk-based beverage include milk, drink yogurt, lactobacillus beverages, or milk-containing refreshing beverages, and examples of the soy milk beverage include soy milk or soy beverages.

Alcoholic beverages refer to beverages that contains alcohol raw material. The alcoholic beverage may be shochu highball, or chuhai. Examples of the alcohol raw material include fermented liquors, distilled liquors, and mixed liquors. Examples of the fermented liquor include wine and beer. Examples of the distilled liquor include spirits (such as gin, vodka, rum, tequila, new spirits, and alcohol for raw material), liqueurs, whiskeys (such as whiskey and brandy), and shochu. Here, alcoholic beverages may be those containing alcohol at a detectable level and contain, for example, 1% by volume or more, 2% by volume or more, 3% by volume or more, 4% by volume or more, and 5% by volume or more of alcohol.

Examples of processed food include processed foods of cereal, seafood, and meat (such as bread, noodles, tortilla, pasta, ham, bacon, sausage, steamed fish paste cakes, fried fish paste cakes, and puffy fish cakes).

Examples of milk product include butter, cheese, yogurt, and ghee.

Examples of the confectionery include, but not limited to, candy, jam, chewing gum, ice cream, snack food, cookies, biscuits, cakes, wafers, sweet buns, chocolate, and Japanese sweets.

The food or beverage of the present invention also may be in the form of pharmaceutical products or quasi-pharmaceutical products such as fine granules, tablets, granules, powders, capsules (including soft capsules and hard capsules), chewable agents, syrups, mouthwash, toothpaste, oral ointment, collutorium, throat spray or may be in a processed form where the composition of the present invention is blended in protein, sugar, fat, trace elements, vitamins, an emulsifier, a fragrance, and the like, such as natural liquid food, half-digested nutrient food, and elemental diet, Health drink, and enteral nutrients. Hence, the present invention can provide oral products such as a pharmaceutical product, a quasi-pharmaceutical product, a natural liquid food, a half-digested nutrient food, an elemental diet, a health drink, or enteral nutrients wherein the ingredients (a) to (c) are contained; the amount of the ingredient (b) is 11.5 to 46 mg/100 ml in terms of sodium; and the amount of the ingredient (c) is a sweetness threshold or more. Note that the oral products are collectively referred to as those introduced into the mouth regardless of how they are taken in.

Further, a food or beverage of the present invention may be sterilized after container-packed.

A second aspect of the present invention provides the following food or beverage (hereinafter, referred to as a "food or beverage B of the present invention"). Note that the "food or beverage A of the present invention" and the "food or beverage B of the present invention" may be collectively referred to as a "food or beverage of the present invention".

A food or beverage comprising:
(a) a sweet substance that induces a response through a taste-related molecule other than the sweet taste receptor T1R2/T1R3; and
(b) a sodium source; and
wherein the amount of the ingredient (b) is 11.5 to 46 mg/100 ml in terms of sodium.

The food or beverage B of the present invention is the same as the food or beverage A of the present invention except that the ingredient (c) of the food or beverage A of the present invention is dispensable. The above matters regarding the food or beverage A of the present invention are applicable to the food or beverage B of the present invention, provided that the ingredient (c) is dispensable. As demonstrated in the below-described Examples, the ingredient (a) has intrinsic sweetness of sucrose and the ingredient (b) enhances this intrinsic sweetness of sucrose, so that the sweetness quality can be made closer to that of sucrose. Consequently, a combination of the ingredients (a) to (b) enables a food or beverage exhibiting sweetness intrinsically close to that of sucrose to be produced while no sucrose is used or the usage is decreased. This makes it possible to design a new sucrose-like lower-calorie sweet food or beverage, etc. In some embodiments, the food or beverage B of the present invention may contain the ingredient (c) of the food or beverage A of the present invention.

### 2. Sweetener Composition

A third aspect of the present invention provides the following sweetener composition (hereinafter, referred to as a "composition A of the present invention").

A sweetener composition comprising:
(a) a sweet substance that induces a response through a taste-related molecule other than the sweet taste receptor T1R2/T1R3;
(b) a sodium source; and
(c) a naturally occurring high-intensity sweet substance having a good taste quality, wherein the ingredient (b) is used in an amount of 11.5 to 46 mg/100 ml in terms of sodium and the ingredient (c) is used in an amount of a sweetness threshold or more.

The form of the composition A of the present invention is not particularly limited and may be a form of powder, mixed powder, crystals, granules, liquid, concentrated liquid, mixed liquid, paste, or tablets.

The composition A of the present invention may be used as a raw material for the food or beverage A of the present invention. For instance, the composition A of the present invention and another raw material may be blended to produce the food or beverage A of the present invention. The composition A of the present invention and "another raw material" may be mixed at a given volume ratio and the resulting food or beverage should contain sodium in an amount of 11.5 to 46 mg/100 ml. In some embodiments, the composition A of the present invention is a unique sweetness ingredient in the food or beverage A of the present invention. Accordingly, in this embodiment, the above "another raw material" is free of a sweetness-imparting ingredient.

A fourth aspect of the present invention provides the following sweetener composition (hereinafter, referred to as a "composition B of the present invention"). Note that the "composition A of the present invention" and the "composition B of the present invention" may be collectively referred to as a "composition of the present invention".

A sweetener composition comprising:
(a) a sweet substance that induces a response through a taste-related molecule other than the sweet taste receptor T1R2/T1R3; and
(b) a sodium source; and
wherein the ingredient (b) is used in an amount of 11.5 to 46 mg/100 ml in terms of sodium.

The composition B of the present invention is the same as the composition A of the present invention except that the ingredient (c) of the composition A of the present invention is dispensable. The above matters regarding the composition A of the present invention are applicable to the composition B of the present invention, provided that the ingredient (c) is dispensable. In some embodiments, the composition B of the present invention may contain the ingredient (c) of the composition A of the present invention.

The composition of the present invention (the ingredient A or B of the present invention) may give oral products, such as a food or beverage, sucrose-like sweetness. In addition, the present invention provides use of a composition of the present invention (the composition A or B of the present invention) so as to impart sucrose-like sweetness to an oral product such as a food or beverage.

### 3. Process for Producing Food or Beverage

As described above, when the ingredient (a), a given amount of the ingredient (b), and a given amount of the ingredient (c) are blended, a food or beverage can be given sweetness intrinsically close to that of sucrose. Accordingly, an additional aspect of the present invention provides the following process for producing a food or beverage (hereinafter, referred to as a "production process A of the present invention").

A process for producing a food or beverage exhibiting sweetness intrinsically close to that of sucrose, the process comprising the steps of:
(i) adding a sweet substance (a) that induces a response through a taste-related molecule other than the sweet taste receptor T1R2/T1R3 and a naturally occurring high-intensity sweet substance (c) having a good taste quality in an amount of a sweetness threshold or more; and
(ii) adding a sodium source (b) so as to have a sodium concentration of 11.5 to 46 mg/100 ml,
to a raw material.

The food or beverage produced by the production process A of the present invention is a food or beverage A of the present invention as described in the above section "1. Food or Beverage". Meanwhile, the "raw material" in the production process of the present invention may be each material necessary for the food or beverage production or a mixture thereof, or may further contain an additional ingredient such as a preservative, a flavoring agent, a carrier, a juice, etc. In addition, the "raw material" may be composed of a plurality of materials. In some embodiments, the food or beverage produced by the production process A of the present invention is free of sweetness-imparting ingredients other than the ingredients (a) to (c).

In the process of the present invention, either the following step (i) or (ii) may be the first or the steps may be carried out simultaneously:
step (i) of adding a sweet substance (a) that induces a response through a taste-related molecule other than the sweet taste receptor T1R2/T1R3 and a naturally occurring high-intensity sweet substance (c) having a good taste quality in an amount of a sweetness threshold or more; and
step (ii) of adding a sodium source (b) so as to have a sodium concentration of 11.5 to 46 mg/100 ml.

In step (i), a sweet substance (a) that induces a response through a taste-related molecule other than the sweet taste receptor T1R2/T1R3 and a naturally occurring high-intensity sweet substance (c) having a good taste quality in an amount of a sweetness threshold or more are added to a raw material. The sweet substance (a) that induces a response through a taste-related molecule other than the sweet taste receptor T1R2/T1R3 and the naturally occurring high-intensity sweet substance (c) having a good taste quality in an amount of a sweetness threshold or more may be added separately.

Further, when the sweet substance (a) that induces a response through a taste-related molecule other than the sweet taste receptor T1R2/T1R3 is added, the sweet substance (a) does not have to be added as one portion and may be added as several portions. Likewise, when the naturally occurring high-intensity sweet substance (c) having a good taste quality in an amount of a sweetness threshold or more is added, the sweet substance (c) does not have to be added as one portion and may be added as several portions.

In addition, as another embodiment, a mixture of the sweet substance that induces a response through a taste-related molecule other than the sweet taste receptor T1R2/T1R3 and the naturally occurring high-intensity sweet substance having a good taste quality in an amount of a sweetness threshold or more may be added as several portions.

In step (ii), when the sodium source (b) is added, the sodium source does not have to be added as one portion so as to have a sodium concentration of 11.5 to 46 mg/100 ml and may be added as several portions.

The sodium source added to the raw material in step (ii) may be at least one selected from the group consisting of, for example, sodium chloride, sodium malate, sodium sulfate, sodium citrate, sodium phosphate, sodium carbonate, sodium disulfide, sodium bicarbonate, sodium hydroxide, sodium alginate, sodium argininate, sodium glucoheptonate, sodium gluconate, sodium glutamate, sodium tartrate, sodium aspartate, sodium lactate, sodium caseinate, sodium ascorbate, and mixtures thereof.

As used herein, the "adding" not only means manipulation of actually adding any of the ingredients (a), (b), and (c) to the raw material, but also means manipulation of preparing a food or beverage, which is finally produced through production steps of the food or beverage of the present invention, such that the ingredients (a), (b), and (c) are present.

For instance, the food or beverage of the present invention may be produced by mixing the first and second raw materials, the first raw material containing juice, grains, beans, and/or extract thereof, so that the raw material beforehand contains any one or more of the ingredients (a), (b), and (c), the second raw material containing the ingredients (a), (b), and (c) for mixing with the first raw material. In this case, there is no manipulation of separately adding the ingredients (a), (b), and (c) to the raw material. In the process of the present invention, however, steps (i) and (ii) are considered to be carried out as long as a finally produced food or beverage of the present invention contains a sweet substance (a) that induces a response through a taste-related molecule other than the sweet taste receptor T1R2/T1R3, sodium (b) in an amount of 11.5 to 46 mg/100 ml, and a naturally occurring high-intensity sweet substance (c) having a good taste quality in an amount of a sweetness threshold or more.

An additional aspect of the present invention provides the following process for producing a food or beverage (hereinafter, referred to as a "production process B of the present invention"). Note that the "production process A of the present invention" and the "production process B of the present invention" may be collectively referred to as a "production process of the present invention".

A process for producing a food or beverage exhibiting sweetness intrinsically close to that of sucrose, the process comprising the steps of:
(i) adding a sweet substance (a) that induces a response through a taste-related molecule other than the sweet taste receptor T1R2/T1R3; and
(ii) adding a sodium source (b) so as to have a sodium concentration of 11.5 to 46 mg/100 ml,
to a raw material.

The production process B of the present invention is the same as the production process A of the present invention except that addition of the ingredient (c) in the production process A of the present invention is dispensable. The above matters regarding the production process A of the present invention are applicable to the production process B of the present invention, provided that addition of the ingredient (c) is dispensable. In some embodiments, the production process B of the present invention may comprise adding the ingredient (c) in the production process A of the present invention.

### 4. Screening Method

An additional aspect of the present invention provides the following screening method (hereinafter, referred to as a "screening method of the present invention").

A method of screening for a sweet substance, comprising the step of evaluating a taste response mediated by a candidate substance in the presence of an inhibitor of a sweet taste receptor T1R2/T1R3 or an inhibitor of a taste-related molecule other than the sweet taste receptor T1R2/T1R3.

In the screening method of the present invention, the "sweet substance", "inhibitor of the sweet taste receptor T1R2/T1R3", and "inhibitor of a taste-related molecule other than the sweet taste receptor T1R2/T1R3" are as described above regarding the food or beverage A of the present invention.

A taste response (preferably a sweetness response) in the screening method of the present invention can be evaluated by various known techniques. Examples of such techniques include: but are not limited to, sensory evaluation using a sensory panel; a gustatory nerve response or behavior test using animals (e.g., mice); and *in vitro* assays using isolated taste cells and/or cells expressing a taste-related molecule (see, for example, Yoshida et al., Diabetes. 2015 ;64(11): 3751-62; Bissonnette et al., J Physiol. 1999 15; 520 Pt 2: 359-71).

The screening method of the present invention may be used to screen for a sweet substance (sweet substance having sweetness intrinsically close to that of sucrose) that induces a response through a taste-related molecule other than the sweet taste receptor T1R2/T1R3 and a sweet substance that substantially specifically acts on the sweet taste receptor T1R2/T1R3. The sweet substance that induces a response through a taste-related molecule other than the sweet taste receptor T1R2/T1R3 may be selected as having a given level or higher of the sweetness intensity (remaining sweetness intensity) in the presence of an inhibitor of the sweet taste receptor T1R2/T1R3 and/or having a level less than a given level of the sweetness intensity (remaining sweetness intensity) in the presence of an inhibitor of a taste-related molecule other than the sweet taste receptor T1R2/T1R3. Alternatively, the sweet substance that induces a response through a taste-related molecule other than the sweet taste receptor T1R2/T1R3 may be selected when the taste quality (remaining taste quality) in the presence of an inhibitor of the sweet taste receptor T1R2T1R3 and/or the taste quality (remaining taste quality) in the presence of an inhibitor of a taste-related molecule other than the sweet taste receptor T1R2/T1R3 are close to the taste quality (remaining taste quality) of sucrose under substantially the same conditions.

Meanwhile, the sweet substance that substantially specifically acts on the sweet taste receptor T1R2/T1R3 may be selected as having a level less than a given level of the sweetness intensity (remaining sweetness intensity) in the presence of an inhibitor of the sweet taste receptor T1R2/T1R3 and/or having a given level or higher of the sweetness intensity (remaining sweetness intensity) in the presence of an inhibitor of a taste-related molecule other than the sweet taste receptor T1R2/T1R3. Alternatively, the sweet substance that substantially specifically acts on the sweet taste receptor T1R2/T1R3 may be selected when the taste quality (remaining taste quality) in the presence of an inhibitor of the sweet taste receptor T1R2/T1R3 and/or the taste quality (remaining taste quality) in the presence of an inhibitor of a taste-related molecule other than the sweet taste receptor T1R2/T1R3 are far from the taste quality (remaining taste quality) of sucrose under substantially the same conditions.

The "sweet substance that induces a response through a taste-related molecule other than the sweet taste receptor T1R2/T1R3" as selected by the screening method of the present invention may be used as, for instance, the ingredient (a) of the food or beverage and/or the composition of the present invention. The "sweet substance that substantially specifically acts on the sweet taste receptor T1R2/T1R3" as selected by the screening method of the present invention may be used in combination with the ingredients (a) and (b) in, for instance, the food or beverage B and/or the composition B of the present invention.

In some embodiments, the screening method of the present invention may include the following steps.

### (1) Screening Method A

Step (i) of subjecting a candidate sweet substance to sensory measurement of sweetness intensity in the absence of an inhibitor of a sweet taste receptor T1R2/T1R3;
step (ii) of subjecting the candidate sweet substance to sensory measurement of sweetness intensity in the presence of the inhibitor of the sweet taste receptor T1R2/T1R3; and
step (iii) of comparing the sweetness intensity obtained in step (i) and the sweetness intensity obtained in step (ii) and selecting, when the sweetness intensity obtained in step (ii) is a given level or higher with respect to the sweetness intensity obtained in step (i), the candidate sweet substance as a sweet substance having sweetness intrinsically close to that of sucrose and/or selecting, when the sweetness intensity obtained in step (ii) is less than the given level, the candidate sweet substance as a sweet substance that is substantially specific to the sweet taste receptor T1R2/T1R3.

The given level is not limited and the sweetness intensity of the candidate sweet substance in the absence of an inhibitor of the sweet taste receptor T1R2/T1R3 corresponds to, for example, sucrose Brix 12; and the sweetness intensity when 100 ppm lactisole is used as the sweet taste receptor inhibitor may be 9%, 10%, 11%, 12%, 13%, 14%, 15% or 16%, etc. In addition, either step (i) or step (ii) may be the first or the both may be carried out simultaneously.

### (2) Screening Method B

Step (i) of subjecting a candidate sweet substance and sucrose to sensory measurement of sweetness intensity in the absence of an inhibitor of a sweet taste receptor T1R2/T1R3;
step (ii) of subjecting the candidate sweet substance and the sucrose to sensory measurement of sweetness intensity in the presence of the inhibitor of the sweet taste receptor T1R2/T1R3; and
step (iii) of comparing a percentage (a) of the sweetness intensity of the candidate sweet substance as obtained in step (ii) with respect to the sweetness intensity of the candidate sweet substance as obtained in step (i) and a percentage (b) of the sweetness intensity of the sucrose as obtained in step (ii) with respect to the sweetness intensity of the sucrose as obtained in step (i) and selecting, when the percentage (a) when the percentage (b) is used as a reference is a given level or higher, the candidate sweet substance as a sweet substance having sweetness intrinsically close to that of sucrose and/or selecting, when the percentage (a) is less than the given level, the candidate sweet substance as a sweet substance that is substantially specific to the sweet taste receptor T1R2/T1R3.

The given level is not limited and the sweetness intensity of the candidate sweet substance in the absence of an inhibitor of the sweet taste receptor T1R2/T1R3 corresponds to, for example, sucrose Brix 12; and the sweetness intensity when 100 ppm or 200 ppm lactisole is used as the sweet taste receptor inhibitor may be 50%, 51%, 52%, 53%, 54%, 55%, 56%, 57%, 58%, or 59% etc. In addition, either step (i) or step (ii) may be the first or the both may be carried out simultaneously.

Step (i) may be omitted when, for example, the sweetness intensity of sucrose in the absence of an inhibitor of the sweet taste receptor T1R2/T1R3 is known. In this case, the screening method B includes the following steps:
step (i) of subjecting a candidate sweet substance and sucrose to sensory measurement of sweetness intensity in the presence of an inhibitor of a sweet taste receptor T1R2/T1R3; and
step (ii) of selecting, when a percentage of the sweetness intensity of the candidate sweet substance with respect to the sweetness intensity of the sucrose as obtained in step (i) is a given level or higher, the candidate sweet substance as a sweet substance having sweetness intrinsically close to that of sucrose and/or selecting, when the percentage is less than the given level, the candidate sweet substance as a sweet substance that is substantially specific to the sweet taste receptor T1R2/T1R3.

### (3) Screening Method C

Step (i) of subjecting a candidate sweet substance to sensory measurement of sweetness intensity in the absence of an inhibitor of a taste-related molecule other than the sweet taste receptor T1R2/T1R3;
step (ii) of subjecting the candidate sweet substance to sensory measurement of sweetness intensity in the presence of the inhibitor of the taste-related molecule other than the sweet taste receptor T1R2/T1R3; and
step (iii) of comparing the sweetness intensity obtained in step (i) and the sweetness intensity obtained in step (ii) and selecting, when the sweetness intensity obtained in step (ii) is less than a given level with respect to the sweetness intensity obtained in step (i), the candidate sweet substance as a sweet substance that provides sucrose-like sweetness and/or selecting, when the sweetness intensity obtained in step (ii) is the given level or higher, the candidate sweet substance as a sweet substance that is substantially specific to the sweet taste receptor T1R2/T1R3.

The given level is not limited and the sweetness intensity of the candidate sweet substance in the absence of an inhibitor of a taste-related molecule other than the sweet taste receptor T1R2/T1R3 corresponds to, for example, sucrose Brix 12; and the sweetness intensity when a test solution containing 500 µM phlorizin as the inhibitor of the taste-related molecule other than the sweet taste receptor T1R2/T1R3 is used may be for example, 94%, 93.5%, 93%, 92.5%, 92%, 91.5%, 91%, 90.5%, or 90% etc. Either step (i) or step (ii) may be the first or the both may be carried out simultaneously.

### Screening Method D

Step (i) of subjecting a candidate sweet substance and sucrose to sensory measurement of sweetness intensity in the absence of an inhibitor of a taste-related molecule other than the sweet taste receptor;
step (ii) of subjecting the candidate sweet substance and the sucrose to sensory measurement of sweetness intensity in the presence of the inhibitor of the taste-related molecule other than the sweet taste receptor; and
step (iii) of comparing a percentage (a) of the sweetness intensity of the candidate sweet substance as obtained in step (ii) with respect to the sweetness intensity of the candidate sweet substance as obtained in step (i) and a percentage (b) of the sweetness intensity of the sucrose as obtained in step (ii) with respect to the sweetness intensity of the sucrose as obtained in step (i) and selecting, when the percentage (a) when the percentage (b) is used as a reference is less than a given level, the candidate sweet substance as a sweet substance that provides sucrose-like sweetness and/or selecting, when the percentage (a) is the given level or higher, the candidate sweet substance as a sweet substance that is substantially specific to the sweet taste receptor T1R2/T1R3.

Either step (i) or step (ii) may be the first or the both may be carried out simultaneously.

Meanwhile, step (i) may be omitted when, for example, the sweetness intensity of sucrose in the absence of an inhibitor of a taste-related molecule other than the sweet taste receptor T1R2/T1R3 is known. In this case, the screening method D includes the following steps:
step (i) of subjecting a candidate sweet substance and sucrose to sensory measurement of sweetness intensity in the presence of an inhibitor of a taste-related molecule other than the sweet taste receptor T1R2/T1R3; and
step (ii) of selecting, when a percentage of the sweetness intensity of the candidate sweet substance with respect to the sweetness intensity of the sucrose as obtained in step (i) is less than a given level, the candidate sweet substance as a sweet substance that provides sucrose-like sweetness and/or selecting, when the percentage is the given level or higher, the candidate sweet substance as a sweet substance that is substantially specific to the sweet taste receptor T1R2/T1R3.

### (5) Screening Method E

Step (i) of subjecting a candidate sweet substance and sucrose to sensory measurement of taste quality (remaining taste quality) in the presence of an inhibitor of a sweet taste receptor T1R2/T1R3 or an inhibitor of a taste-related molecule other than the sweet taste receptor T1R2/T1R3; and
step (ii) of selecting, when the remaining taste quality of the candidate sweet substance and the remaining taste quality of the sucrose as obtained in step (i) are close, the candidate sweet substance as a sweet substance having sucrose-like sweetness and/or selecting, when the remaining taste quality of the candidate sweet substance as obtained in step (i) is far from the remaining taste quality of the sucrose, the candidate sweet substance as a sweet substance that is substantially specific to the sweet taste receptor T1R2/T1R3.

In the present application, the term "at least" means that the number of a specific item may be equivalent to the number given or more. Additionally, in the present application, the term "about" means that the subject is in the range of the numerical value preceded by "about" ±25%, ±10%, ±5%, ±3%, ±2%, or ±1%. For example, "about 10" means the range of 7.5 to 12.5.

### EXAMPLES

The present invention will be described more specifically by listing examples below, but the scope of the present invention is not restricted by the following examples.

### EXAMPLE 1 Evaluation of Sucrose and Sucralose in the Presence of Inhibitor of Sweet Taste Receptor (T1R2/T1R3)

### Experimental Method

Sensory-trained persons (5 subjects) were panelists who conducted evaluation. Sucrose, sucralose, and/or lactisole were dissolved in pure water at ratios designated in Table 2 below to prepare beverage samples (sample solutions 1 to 4). Note that each sample solution was designed to have an approximately equal sweetness intensity while the sweetness intensity of sucralose was estimated to be 600 times the sweetness intensity of sucrose. Meanwhile, control solutions 1 and 2 were prepared such that the solutions had the same compositions as of the sample solutions 1 and 2 except that no lactisole was added. A spit test was conducted for the sensory evaluation. The sweetness intensity was scored by using VAS scale; the intensity of each lactisole-free solution was defined as 100%; and the sweetness intensity of each lactisole-containing solution was calculated as a relative value (%). The above was used to examine the lactisole-mediated sweetness-suppressing effect. Note that each energy (kcal/100 ml) was calculated while the energy of sucrose was set to 4 kcal/g and the energy of sucralose was set to 0 kcal/g.

**Table 2**

| Content | Control solution 1 | Control solution 2 | Sample solution 1 | Sample solution 2 | Sample solution 3 | Sample solution 4 |
|---|---|---|---|---|---|---|
| Sucrose (w/v%) | 12 | 0 | 12 | 0 | 12 | 0 |
| Sucralose (ppm) | 0 | 200 | 0 | 200 | 0 | 200 |
| Lactisole (ppm) | 0 | 0 | 1 | 1 | 100 | 100 |
| Energy (kcal/100 ml) | 48 | 0 | 48 | 0 | 48 | 0 |

### Results

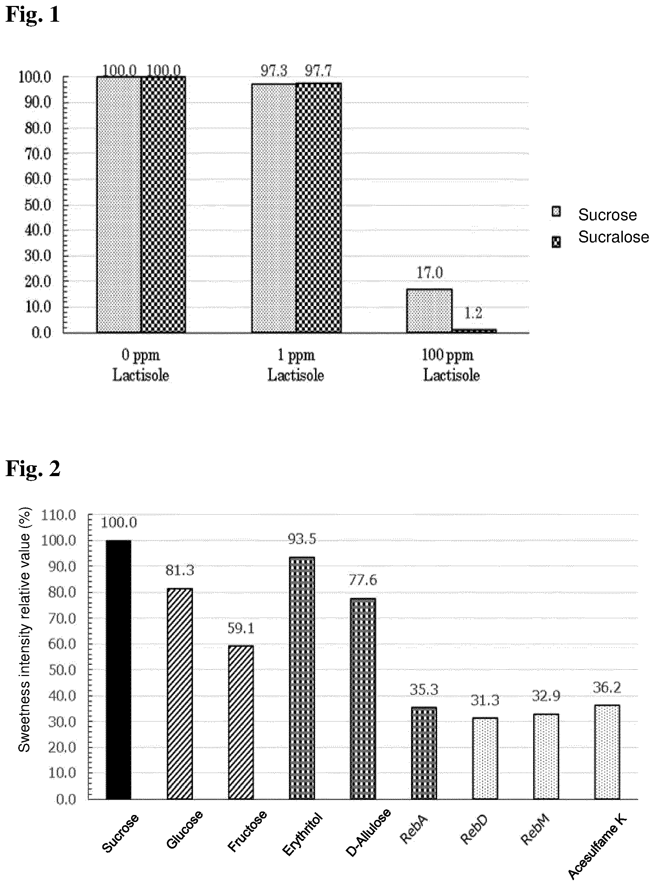

FIG. 1 shows the results (the average; n = 5). As shown in FIG. 1, regarding sucralose, the sweetness intensity of the lactisole-free (0 ppm) case was set to 100%; and when 100 ppm lactisole was added, the sweetness intensity almost disappeared (1.2%). However, regarding the sucrose solution, the sweetness intensity of the lactisole-free case was set to 100%; and even when 100 ppm lactisole was added, the sweetness intensity of 17% still remained. This has demonstrated that humans can sense the sweetness of sweeteners by using their sensory functions even in the presence of lactisole, which is an inhibitor of the sweet taste receptor (T1R2/T1R3).

The T1R2/T1R3 is considered to be a unique sweet taste receptor that is located on the tongue of each human and can sense sweetness. It is surprising that considerable sweetness remained when sucrose with a lactisole at the concentration (100 ppm), where the sweetness intensity of sucralose almost disappeared, was used at the degree of sweetness (about Brix 12), which is sufficiently higher than a threshold at which humans can sense the sweetener's sweetness. The present inventors conceived that this was not simply caused by a difference in the interaction among the T1R2/T1R3 receptor, sweeteners, and inhibitor; but sucrose could induce a response through a taste-related molecule other than the T1R2/T1R3, so that the sweetness remaining in the presence of lactisole is intrinsic sweetness of sucrose.

### EXAMPLE 2 Evaluation of Various Sweet Substances in the Presence of Inhibitor of Sweet Taste Receptor (T1R2/T1R3)

### Experimental Method

Sample solutions were prepared, including the sample solution 1 (a solution in which 12 w/v% sucrose and 100 ppm lactisole were dissolved into pure water; sucrose-based Brix was about 12 (48 kcal/100 ml)) used in Example 1 and various sweet substance solutions (solutions in which each sweet substance and 100 ppm lactisole were dissolved into pure water). Each sweet substance was blended so as to have an approximately equal degree of sweetness of 12 w/v% sucrose (corresponding to about Brix 12) while the known degree of sweetness of each sweet substance was used for calculation. Specifically, 100 ppm lactisole and each of 18.46 w/v% glucose, 8.28 w/v% fructose, 17.14 w/v% erythritol, 17.14 w/v% D-allulose, 516.41 ppm RebA (purity: 99%), 430.16 ppm RebD (purity: 95% or more), 456.07 ppm RebM (purity: 94%), and 600 ppm acesulfame K were dissolved into pure water to prepare sample solutions. Regarding the sensory evaluation, sensory-trained persons (4 to 8 subjects) were panelists who conducted a spit test as in Example 1. The sweetness intensity of each sample solution was scored by using VAS scale. The sweetness intensity of each solution was calculated as a relative value (%) while the sweetness intensity of the sample solution 1 (12 w/v% sucrose + 100 ppm lactisole) was set to 100%. When the value was 50% or more, the substance was considered to be a sucrose-like substance, the taste of which is close to that of sucrose; and when the value was less than 50%, the substance was considered to be a substance, the taste of which is far from that of sucrose.

### Results

FIG. 2 shows the results (the average; n = 4 to 8). As shown in FIG. 2, when the remaining sweetness intensity of the sucrose solution (sample solution 1) in the presence of lactisole was set to 100%, the relative value for the sweetness intensity of each of RebA, RebD, RebM, and acesulfame K was less than 50% (40% or less), which was low as was that of sucralose of Example 1. However, the relative value for the sweetness intensity of each of glucose and fructose was 50% or more, so that they were each considered to be a sweet substance having sweetness intrinsically close to that of sucrose. Then, surprisingly, because the relative value for the sweetness intensity of each of erythritol and D-allulose, which are non-calorie sweeteners, was 50% or more, they were each likewise considered to be a sweet substance having sweetness intrinsically close to that of sucrose.

Collectively, the present inventors have found that humans can sense sweetness of not only calorie sweeteners such as glucose and fructose but also non-calorie sweeteners such as D-allulose and erythritol in the presence of lactisole at a given concentration and at the degree of sweetness (about Brix 12), which is sufficiently higher than a threshold at which humans can sense the sweeteners' sweetness.

Each sweetener having a higher sweetness intensity in the presence of the inhibitor of the sweet taste receptor (T1R2/T1R3) (here, glucose and fructose as calorie sweeteners and erythritol and D-allulose as non-calorie sweeteners) is a sweetener that seems to induce a response through a taste-related molecule other than the sweet taste receptor (T1R2/T1R3) and thus has sweetness intrinsically close to that of sucrose. To design a lower-calorie food or beverage having sucrose-like sweetness, in particular, it seems useful to combine, therewith, a non-calorie sweetener having sweetness intrinsically close to that of sucrose as found in this examination.

### EXAMPLE 3 Testing Effects of Sodium Gluconate on Sweetness

### Experimental Method

Erythritol, RebD, and/or sodium gluconate were dissolved in pure water at ratios designated in Table 3 below to prepare a control solution (3-0) and sample solutions (3-1 to 3-9).

**Table 3**

| Content | 3-0 | 3-1 | 3-2 | 3-3 | 3-4 | 3-5 | 3-6 | 3-7 | 3-8 | 3-9 |
|---|---|---|---|---|---|---|---|---|---|---|
| Erythritol (w/v%) | 2.29 | 2.29 | 2.29 | 2.29 | 2.29 | 2.29 | 2.29 | 2.29 | 2.29 | 2.29 |
| RebD (ppm) | 284.2 | 284.2 | 284.2 | 284.2 | 284.2 | 284.2 | 284.2 | 284.2 | 284.2 | 284.2 |
| Sodium gluconate (mM) | 0 | 1 | 2.5 | 5 | 7.5 | 10 | 12.5 | 15 | 20 | 40 |
| In terms of Na content (mg/100 ml) | 0 | 2.3 | 5.75 | 11.5 | 17.25 | 23 | 28.75 | 34.5 | 46 | 92 |
| Energy (Kcal/100 ml) | 0 | 0 | 0 | 0 | 0 | 0 | 0 | 0 | 0 | 0 |

The sweetness intensity of the sodium gluconate-free control solution and the sweetness intensity of each sample solution were sensory-compared. In addition, the saltiness intensity of each sample solution was evaluated at the same time. The criteria were as follows.

### Sweetness enhancement effect

○ (score 2): Yes
× (score 0): No

### Saltiness intensity

⊙ (score 3): No taste is sensed.
○ (score 2): A taste is sensed, but the taste cannot be identified as saltiness.
Δ (score 1): Saltiness is sensed.
× (score 0): Saltiness is strongly sensed.

### Comprehensive evaluation

×, Δ, ○, and ⊙ were scored as 0, 1, 2, and 3, respectively, and the scores of the sweetness enhancement effect and saltiness intensity were summed up and used as the comprehensive evaluation score.

### Results

Table 4 below collectively provides the results.

**Table 4**

| Content | 3-0 | 3-1 | 3-2 | 3-3 | 3-4 | 3-5 | 3-6 | 3-7 | 3-8 | 3-9 |
|---|---|---|---|---|---|---|---|---|---|---|
| Erythritol (w/v%) | 2.29 | 2.29 | 2.29 | 2.29 | 2.29 | 2.29 | 2.29 | 2.29 | 2.29 | 2.29 |
| RebD (ppm) | 284.2 | 284.2 | 284.2 | 284.2 | 284.2 | 284.2 | 284.2 | 284.2 | 284.2 | 284.2 |
| Sodium gluconate (mM) | 0 | 1 | 2.5 | 5 | 7.5 | 10 | 12.5 | 15 | 20 | 40 |
| In terms of Na content (mg/100 ml) | 0 | 2.3 | 5.75 | 11.5 | 17.25 | 23 | 28.75 | 34.5 | 46 | 92 |
| Energy (Kcal/100 ml) | 0 | 0 | 0 | 0 | 0 | 0 | 0 | 0 | 0 | 0 |
| Saltiness intensity | ⊙ | ⊙ | ⊙ | ⊙ | ⊙ | ○ | ○ | ○ | ○ | Δ |
| Sweetness enhancement effect | × | × | × | ○ | ○ | ○ | ○ | ○ | ○ | × |
| Overall evaluation | 3 | 3 | 3 | 5 | 5 | 4 | 4 | 4 | 4 | 1 |

Containing sodium in the range of 11.5 mg/100 ml to 46 mg/100 ml apparently caused a sweetness enhancement effect when compared with the sodium-free solution. However, containing sodium at 92 mg/100 ml or more caused a saltiness sensation. The above has demonstrated that it is preferable as a beverage to contain a combination of a sweet substance having sweetness intrinsically close to that of sucrose, a high-intensity sweetener, and sodium at 11.5 mg/100 ml to 46 mg/100 ml. Besides, when the blending was at least within the above range, the beverage was found to be given sweetness exceeding a sweetness intensity of 8 although the non-calorie sweetener with a sweetness intensity of 1.6 and the high-intensity sweetener with a sweetness intensity of 6.4 were just blended.

### EXAMPLE 4 Sensory Evaluation of Taste Quality in the Presence of Sodium

### Experimental Method

Erythritol, RebD (purity: 95% or more), sucralose, and/or sodium gluconate were dissolved in pure water at ratios designated in Table 5 below to prepare sample solutions A to E. Next, 8% sucrose solution was used as a control solution and the sweetness quality of each sample solution was evaluated using the evaluation items: "onset of sweetness", "thickness of sweetness", "lingering sweetness", "artificial taste", and "total satisfaction". In each evaluation item, when there was no difference from the control solution, the score was 0; and each evaluation item was scored -3 to 3. As the sweetness rose faster, the sweetness was thicker, the sweetness aftertaste disappeared more quickly, there was less artificial taste, or the satisfaction was achieved more intensely than that of the control, the score was closer to 3. As the sweetness rose slower, the sweetness was less thick, the sweetness aftertaste continued longer, there was more artificial taste, or the satisfaction was achieved less intensely than that of the control, the score was closer to - 3. That is, as the score was closer to 0, each quality was closer to that of the control. Sensory-trained persons (7 subjects) were panelists who conducted evaluation. Note that the amount of sweet substances contained in each sample solution was designed, in calculation, to be equal to that of the control solution (about Brix 8).

**Table 5**

| Content | A | B | C | D | E | Control |
|---|---|---|---|---|---|---|
| Erythritol (w/v%) | 2.29 | 2.29 | 0 | 11.43 | 0 | 0 |
| RebD (ppm) | 284.2 | 284.2 | 355.2 | 0 | 0 | 0 |
| Sucralose (ppm) | 0 | 0 | 0 | 0 | 133.3 | 0 |
| Sucrose (w/v%) | 0 | 0 | 0 | 0 | 0 | 8 |
| Sodium gluconate (mM) | 0 | 5 | 5 | 5 | 0 | 0 |
| Sodium content (mg/100 ml) | 0 | 11.5 | 11.5 | 11.5 | 0 | 0 |
| Energy (Kcal/100 ml) | 0 | 0 | 0 | 0 | 0 | 32 |

### Results

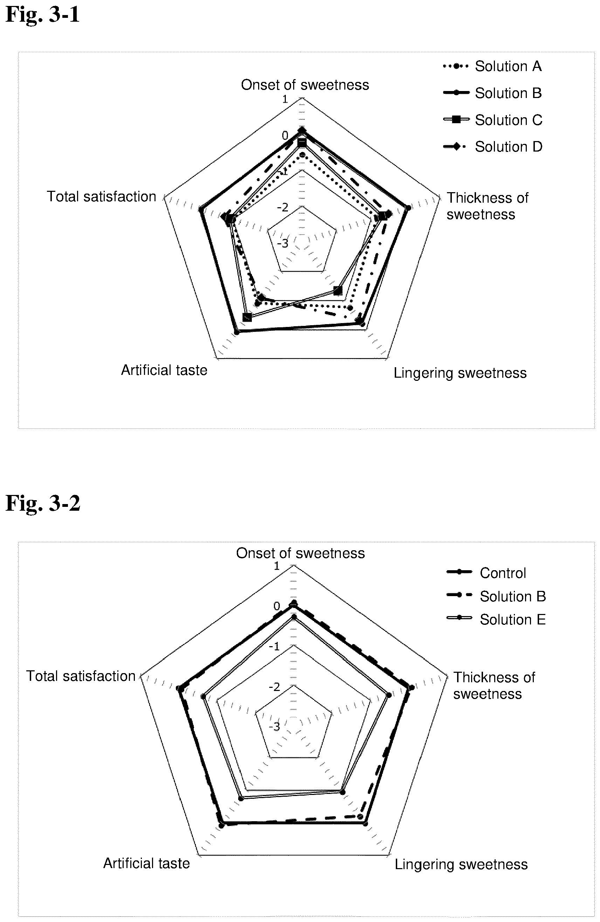

FIGS. 3-1 and 3-2 and Table 6 collectively provide the results. Table 6 shows the scores of the evaluation items of each solution indicated in FIGS. 3-1 to 3-2, the averages thereof, and the radar chart area ratios. Each area ratio was represented as a number when the control solution was set to 100.

**Table 6**

| | A | B | C | D | E | Control |
|---|---|---|---|---|---|---|
| Onset of sweetness | -0.57 | 0.07 | -0.25 | 0.08 | -0.30 | 0 |
| Thickness of sweetness | -0.83 | 0.07 | -0.67 | -0.50 | -0.53 | 0 |
| Lingering sweetness | -0.77 | -0.21 | -1.33 | -0.33 | -0.97 | 0 |
| Artificial taste | -0.90 | 0.07 | -0.42 | -1.08 | -0.77 | 0 |
| Total satisfaction | -1.00 | -0.07 | -0.92 | -0.75 | -0.63 | 0 |
| Evaluation items average | -0.814 | -0.014 | -0.718 | -0.516 | -0.64 | 0 |
| Radar chart area ratio | 53.0 | 99.0 | 57.16 | 68.3 | 62.0 | 100 |

The results of the sample solutions A and B have demonstrated that addition of sodium caused all the evaluation items to become closer to the taste quality of sucrose. The results of the sample solutions C and D have demonstrated that addition of sodium to the sweet substance (erythritol) having sweetness intrinsically close to that of sucrose caused the taste quality to be closer to that of sucrose than addition of sodium to the sweet substance (RebD) without such sweetness.

### EXAMPLE 5 Sensory Evaluation of Taste Quality in the Presence of Sodium in container-packed beverage form

### Experimental Method

A (6-time) concentrated black currant juice, citric acid, ascorbic acid, sucrose, erythritol, RebD (purity: 95% or more), and/or sodium gluconate were dissolved in pure water at ratios designated in Table 7 below. The mixture was packed into a container (glass bottle) and sterilized while kept at 85°C for 10 min to prepare a container-packed beverage control solution and container-packed beverage samples A and B. The taste quality of each beverage sample was assessed as in Example 4. Note that the amount of sweet substances contained in each sample solution was designed, in calculation, to be equal to that of the control solution (about Brix 9.6).

**Table 7**

| Content | Control | Beverage sample A | Beverage sample B |
|---|---|---|---|
| Concentrated black currant juice (w/v%) | 1 | 1 | 1 |
| Citric acid (w/v%) | 0.03 | 0.03 | 0.03 |
| Ascorbic acid (w/v%) | 0.07 | 0.07 | 0.07 |
| Sucrose (w/v%) | 9.6 | 0 | 0 |
| Erythritol (w/v%) | 0 | 2.75 | 2.75 |
| RebD (ppm) | 0 | 340 | 340 |
| Sodium gluconate (mM) | 0 | 0 | 7.5 |
| In terms of sodium content (mg/100 ml) | 0 | 0 | 17.5 |
| Energy (Kcal/100 ml) | 40 | 0 | 0 |

### Results

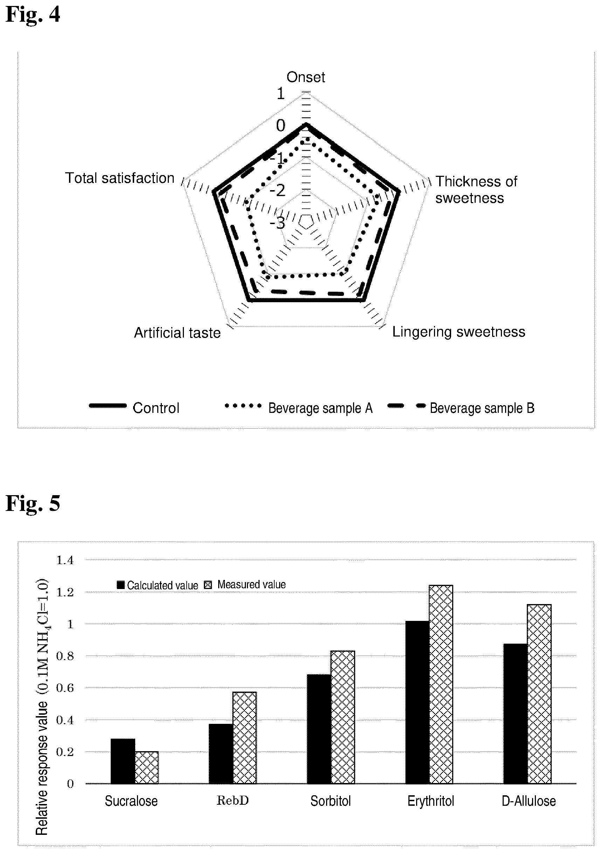

FIG. 4 collectively provides the results.

The results of the sample solutions A and B have demonstrated that addition of sodium into the beverage form still caused all the evaluation items to become closer to the taste quality of the control.

### EXAMPLE 6 Evaluation of Sweetness Enhancement Effect of Sodium using Animal Model

### Experimental Method

A mouse gustatory (chorda tympani) nerve response study was conducted to evaluate the sweetness enhancement effect of sodium. First, 8- to 16-week-old C57BL/6J mice were subjected to urethane anesthetization and the study was conducted in accordance with the protocol described in Kawai K, et al., PNAS. 2000: 97(20): 11044-9. Regarding the sweet substances added to each sample solution, erythritol and D-allulose, which are considered to induce a response through a taste-related molecule other than T1R2/T1R3, and sucralose and RebD, which are high-intensity sweet substances, were used in view of the results of Example 2. Each sample solution was prepared while each sweet substance was dissolved in pure water. The concentration of each sweet substance in each sample solution was designed so as to provide a degree of sweetness equal to that of 7 w/v% sucrose (corresponding to about Brix 7) (specifically, 130 ppm sucralose, 10.8% sorbitol, 10% erythritol, 250.9 ppm RebD (purity: 95% or more), or 10% D-allulose). In addition, 7.5 mM sodium gluconate (GluNa) (17.5 mg/100 ml in terms of sodium) was added to each sample solution. The magnitude of nerve responses 5 sec to 25 sec after initiation of tongue stimulation by the sample solution was averaged. Then, a relative value was calculated while the magnitude of such responses by 0.1 M NH₄Cl as likewise averaged was set to 1. The sweetness enhancement effect was analyzed in accordance with the analysis protocol described in Yamamoto T, et al., Chem Senses. 2009: 34(9): 809-18. Specifically, the response value of the solution containing only each sweet substance and the response value of the solution containing sodium gluconate alone were summed (to give a calculated value). This calculated value was compared to the response value (measured value) of the solution obtained by mixing them. Then, when the response value of the mixed solution exhibited a higher value (i.e., the measured value / the calculated value × 100 (%) > 100 (%)), the response was considered to be increased.

All animal experiments followed the Law for the Humane Treatment and Management of Animals and other related laws and regulations. All the experiments were conducted under a protocol approved by the internal committee for animal experiment.

### Results

FIG. 5 shows the results (n = 1). As shown in FIG. 5, it was observed for the sweet substances (RebD, sorbitol, erythritol, and D-allulose) other than sucralose that addition of sodium (here, sodium gluconate was used as the sodium source) caused an increase (120% or higher) in the chorda tympani nerve responses.

From the results of Example 2, sorbitol is considered to be a "calorie sweet substance that induces a response through a taste-related molecule other than T1R2/T1R3"; and erythritol and D-allulose are each considered to be a "non-calorie sweet substance that induces a response through a taste-related molecule other than T1R2/T1R3". Then, the sweetness brought by these sweet substances was found to be increased in the presence of sodium at a low concentration.

The results of this Example have confirmed that, like the results of human sensory evaluation by panelists, addition of low-concentration sodium caused the sweetness enhancement effect even when the animal model was used.

### EXAMPLE 7 Evaluation of Sweetness Enhancement Effect of Sodium on Various Sweet Substances

### Experimental Method

D-Allulose, which is a sweet substance that induces both a response through T1R2/T1R3 and a response through a taste-related molecule other than T1R2/T1R3, and RebD, which is a sweet substance that induces a response through T1R2/T1R3, were used at ratios designated in Table 8 below to prepare sample solutions (7-1 to 7-9). The sweetness intensity corresponded to and was fit for sucrose Brix 8%.

The sweetness intensity of the sodium gluconate-free control solution and the sweetness intensity of each sample solution were sensory-compared. In addition, the saltiness intensity of each sample solution was evaluated at the same time. The criteria were as follows.

### Sweetness Enhancement Effect

○ (2 points): Yes
× (0 points): No

### Saltiness Intensity

⊙ (3 points): No taste is sensed
○ (2 points): Some taste is sensed but cannot be identified as saltiness.
Δ (1 point): Saltiness is sensed
× (0 points): Strong saltiness is sensed

### Overall Evaluation

×, Δ, ○, and ⊙ were assigned as 0 points, 1 point, 2 points, and 3 points, respectively, and the scores of the sweetness enhancement effect and the saltiness intensity were summed up to give a total score.

Sensory-trained persons (5 to 8 subjects) were panelists who conducted evaluation in accordance with the above criteria. When the overall evaluation was 4 points or more, the effects of the present invention were considered to be exerted.

### Results

Table 8 below collectively provides the results.

**Table 8**

| Content | 7-1 | 7-2 | 7-3 | 7-4 | 7-5 | 7-6 | 7-7 | 7-8 | 7-9 |
|---|---|---|---|---|---|---|---|---|---|
| D-Allulose | 2.29 | 2.29 | 2.29 | 2.29 | 2.29 | 2.29 | 2.29 | 2.29 | 2.29 |
| RebD (ppm) | 284.2 | 284.2 | 284.2 | 284.2 | 284.2 | 284.2 | 284.2 | 284.2 | 284.2 |
| Sodium gluconate (mM) | 1 | 2.5 | 5 | 7.5 | 10 | 12.5 | 15 | 20 | 40 |
| In terms of Na content (mg/100 ml) | 2.3 | 5.75 | 11 . 5 | 17.25 | 23 | 28.75 | 34.5 | 46 | 92 |
| Energy (Kcal/100 ml) | 0 | 0 | 0 | 0 | 0 | 0 | 0 | 0 | 0 |
| Saltiness intensity | ⊙ | ⊙ | ⊙ | ⊙ | ○ | ○ | ○ | Δ | × |
| Sweetness enhancement effect | × | × | ○ | ○ | ○ | ○ | ○ | ○ | × |
| Overall evaluation | 3 | 3 | 5 | 5 | 4 | 4 | 4 | 3 | 0 |

In view of the above, even the sample solutions containing D-allulose and RebD produced results like those of Example 3.

### EXAMPLE 8 Sensory Evaluation of Taste Quality in the Presence of Sodium

### Experimental Method

D-Allulose, sucrose, glucose, fructose, RebM (purity: 94%), and/or sodium gluconate were dissolved in pure water at ratios designated in Table 9 below to prepare sample solutions A to H. Next, 8% sucrose solution was used as a control solution and the sweetness quality of each sample solution was evaluated using the evaluation items: "onset of sweetness", "thickness of sweetness", "lingering sweetness", "artificial taste", and "total satisfaction". In each evaluation item, when there was no difference from the control solution, the score was 0; and each evaluation item was scored -3 to 3. As the sweetness rose faster, the sweetness was thicker, the sweetness aftertaste disappeared more quickly, there was less artificial taste, or the satisfaction was achieved more intensely than that of the control, the score was closer to 3. As the sweetness rose slower, the sweetness was less thick, the sweetness aftertaste continued longer, there was more artificial taste, or the satisfaction was achieved less intensely than that of the control, the score was closer to -3. That is, as the score was closer to 0, each quality was closer to that of the control. Sensory-trained persons (4 subjects) were panelists who conducted evaluation. Note that the amount of sweet substances contained in each sample solution was designed, in calculation, to be equal to that of the control solution (about Brix 8).

**Table 9**

| Content | A | B | C | D | E | F | G | H | Control |
|---|---|---|---|---|---|---|---|---|---|
| D-Allulose (w/v%) | 2.29 | 2.29 | 0 | 0 | 0 | 0 | 0 | 0 | 0 |
| Sucrose (w/v%) | 0 | 0 | 1.6 | 1.6 | 0 | 0 | 0 | 0 | 8 |
| Glucose (w/v%) | 0 | 0 | 0 | 0 | 2.46 | 2.46 | 0 | 0 | 0 |
| Fructose (w/v%) | 0 | 0 | 0 | 0 | 0 | 0 | 1.1 | 1.1 | 0 |
| RebM (ppm) | 277.1 | 277.1 | 277.1 | 227.1 | 277.1 | 277.1 | 277.1 | 277.1 | 0 |
| Sodium gluconate (mM) | 0 | 5 | 0 | 5 | 0 | 5 | 0 | 5 | 0 |
| In terms of Na content (mg/100 ml) | 0 | 11.5 | 0 | 11.5 | 0 | 11.5 | 0 | 11.5 | 0 |
| Energy (Kcal/100 ml) | 0 | 0 | 6.4 | 6.4 | 9.84 | 9.84 | 4.4 | 4.4 | 32 |

### Results

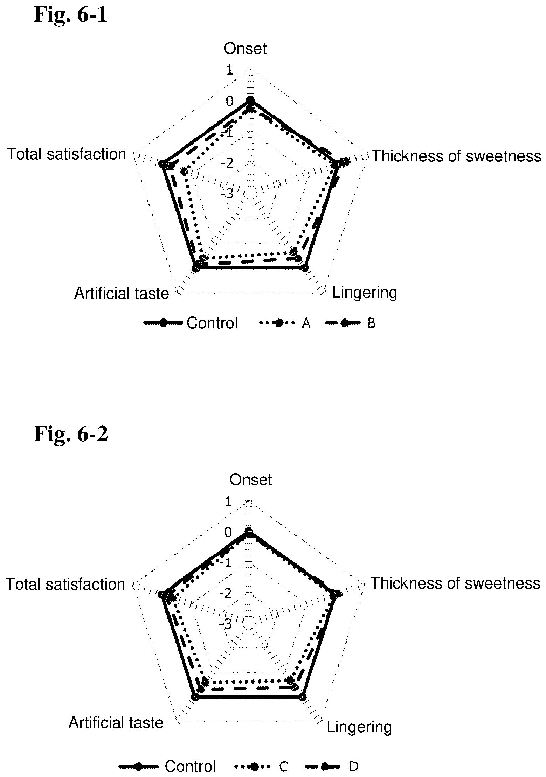

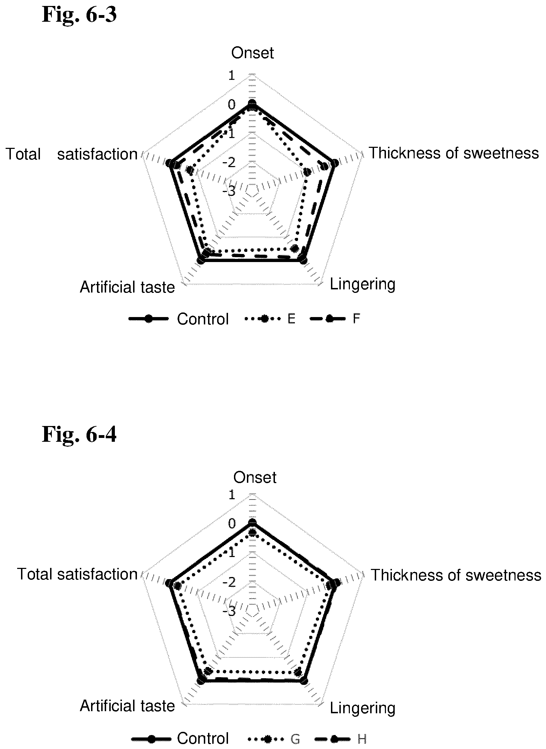

Table 10 and FIGS. 6-1 to 6-4 collectively provide the results. Table 10 shows the scores of the evaluation items of each solution indicated in FIGS. 6-1 to 6-4, the averages thereof, and the radar chart area ratios. Each area ratio was represented as a number when the control solution was set to 100.

**Table 10**

| | A | B | C | D | E | F | G | H | Control |
|---|---|---|---|---|---|---|---|---|---|
| Onset of sweetness | -0.25 | -0.25 | -0.09 | -0.09 | 0.00 | -0.13 | -0.35 | 0.00 | 0 |
| Thickness of sweetness | -0.13 | 0.25 | -0.06 | 0.09 | -1.00 | -0.38 | -0.20 | 0.05 | 0 |
| Lingering sweetness | -0.63 | -0.38 | -0.66 | -0.41 | -0.50 | -0.13 | -0.35 | 0.00 | 0 |
| Artificial taste | -0.38 | -0.13 | -0.59 | -0.31 | -0.38 | -0.25 | -0.40 | -0.10 | 0 |
| Total satisfaction | -0.75 | -0.25 | -0.38 | -0.16 | -0.75 | -0.25 | -0.30 | 0.00 | 0 |
| Evaluation items average | -0.43 | -0.15 | -0.36 | -0.18 | -0.53 | -0.23 | -0.32 | -0.01 | 0 |
| Radar chart area ratio | 73.47 | 89.97 | 77.79 | 88.65 | 67.15 | 85.49 | 79.79 | 99.33 | 100 |

### EXAMPLE 9 Testing Inhibitor of Taste-related Molecule Other Than T1R2/T1R3

### Experimental Method

As an inhibitor of a taste-related molecule other than T1R2/T1R3 was used an SGLT1 inhibitor phlorizin. Then, its effects were examined.

Sensory-trained persons (4 subjects) were panelists who conducted evaluation. Sucrose, sodium gluconate, and phlorizin were dissolved in pure water at ratios designated in Table 11 below to prepare sample solutions. In addition, a phlorizin-free solution was used as the control solution; and a spit test was conducted to evaluate each sweetness intensity by using VAS scale. The sweetness intensity of the control solution was set to 100%; and the sweetness intensity of each sample solution was calculated as a relative value (%). The above was used to examine the phlorizin-mediated sweetness-suppressing effect. In addition, the bitterness intensity of each sample solution was evaluated at the same time. When the phlorizin-derived bitterness was sensed, the score was ×; when it was not sensed, the score was ○. Note that each energy in Table 11 was calculated while the energy conversion factor of sucrose was defined as 4 (kcal/100 ml).

### Results

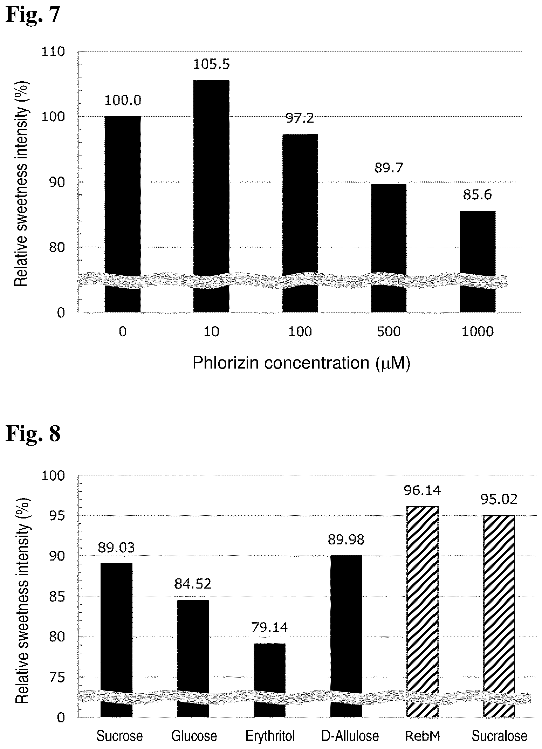

Table 11 below and FIG. 7 collectively provide the results (the average; n = 4)

**Table 11**

| Content | 9-1 | 9-2 | 9-3 | 9-4 | 9-5 |
|---|---|---|---|---|---|
| Sucrose (w/v%) | 12 | 12 | 12 | 12 | 12 |
| Sodium gluconate (mM) | 7.5 | 7.5 | 7.5 | 7.5 | 7.5 |
| In terms of Na content (mg/100 ml) | 17.25 | 17.25 | 17.25 | 17.25 | 17.25 |
| Phlorizin (µM) | 0 | 10 | 100 | 500 | 1000 |
| Energy (Kcal/100 ml) | 48 | 48 | 48 | 48 | 48 |
| Sweetness intensity | 100.0 | 105.5 | 97.2 | 89.7 | 85.6 |
| Bitterness intensity | ○ | ○ | ○ | ○ | × |

It was observed that addition of phlorizin at 500 µM or more caused a sweetness-suppressing effect of 10% or higher. Meanwhile, 1000 µM phlorizin was found to cause a phlorizin-derived bitterness sensation. The above has demonstrated that phlorizin at about 500 µM exerted a sweetness-suppressing effect without giving bitterness.

### EXAMPLE 10 Evaluation of Various Sweet Substances in the Presence of Phlorizin

### Experimental Method

Into the sample solution 9-4 (a mixed solution of 12 w/v% sucrose, 7.5 mM sodium gluconate, and 500 µM phlorizin; Brix 12; 48 kcal/100 ml) used in Example 9 was blended each sweet substance instead of sucrose so as to have an approximately equal degree of sweetness of 12 w/v% sucrose (corresponding to about Brix 12) while the known degree of sweetness of each sweet substance was used for calculation. Specifically, used was 18.46 w/v% glucose, 17.14 w/v% erythritol, 17.14 w/v% D-allulose, 456.07 ppm RebM (purity: 94%), or 200 ppm sucralose. Each sample solution was prepared while each ingredient was dissolved in pure water. Each sweetness intensity was scored by using VAS scale; the sweetness intensity of the phlorizin-free control solution was set to 100%; and a relative value (%) was then calculated.

### Results

FIG. 8 shows the results (the average; n = 3 to 8). As shown in FIG. 8, addition of phlorizin to each of sucrose, glucose, erythritol, and D-allulose caused the sweetness intensity to decrease to less than 90% of that of the control solution. By contrast, after addition of phlorizin to each of RebM and sucralose, the remaining sweetness intensity was still 95% or higher. The above has suggested that sucrose, glucose, erythritol, and D-allulose each induce a response even through SGLT1 (a taste-related molecule other than the sweet taste receptor).

### EXAMPLE 11 Evaluation of Sweetness Enhancement Effect of Sodium using Animal Model

### (1) To Examine Optimal Concentration of Sodium Gluconate for Erythritol

### Experimental Method

As sample solutions were prepared: in addition to the sample solutions used in Example 3, those containing 2.29 w/v% erythritol, 284.2 ppm RebD, and Na gluconate with a varied concentration (at 2.61 mM, 3.48 mM, 4.35 mM, 5.65 mM, 6.09 mM, 6.52 mM, or 7.87 mM; 6, 8, 10, 13, 14, 15, or 18 mg/100 ml in terms of sodium, respectively); and as a control solution was prepared a mixed solution of 2.29 w/v% erythritol and 284.2 ppm RebD. These solutions were used as in Example 6 to measure mouse gustatory (chorda tympani) nerve responses to analyze a sweetness enhancement effect.

### Results

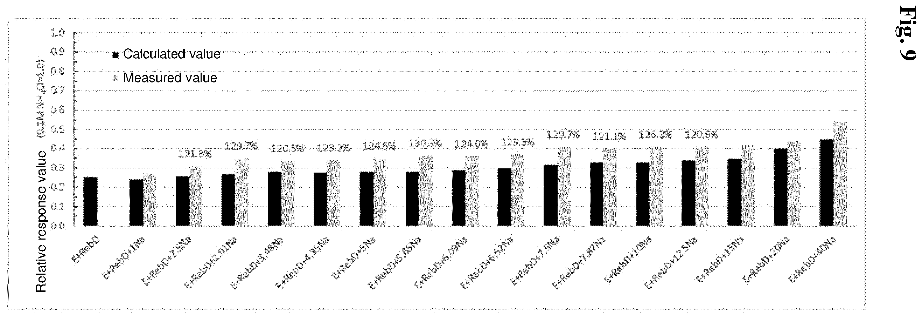

FIG. 9 shows the results (the average; n = 5). As shown in FIG. 9, when Na gluconate (GluNa) was mixed with the erythritol (E) + RebD solution, the chorda tympani nerve responses were increased apparently in most cases. When the concentration of GluNa ranged from 2.5 to 12.5 mM (5.75 to 28.75 mg/100 ml in terms of Na), each measured value was strongly increased and was 120% or higher than the corresponding calculated value (in the case of the other concentrations, these measured values were less than 120% of the corresponding calculated values). Note that the "%" over each bar in the graph indicates a value of the measured value / the calculated value × 100 (%).

### (2) To Examine Optimal Concentration of Sodium Gluconate for D-Allulose

### Experimental Method

As sample solutions were prepared: in addition to the sample solutions used in Example 3, those containing 2.29 w/v% D-allulose, 284.2 ppm RebD, and Na gluconate with a varied concentration (at 2.61 mM, 3.48 mM, 4.35 mM, 5.65 mM, 6.09 mM, 6.52 mM, or 7.87 mM; 6, 8, 10, 13, 14, 15, or 18 mg/100 ml in terms of sodium, respectively); and a control solution, namely a mixed solution of 2.29 w/v% D-allulose and 284.2 ppm RebD. These solutions were used to measure, as in the above Experiment (1), mouse chorda tympani nerve responses and analyze a sweetness enhancement effect.

### Results

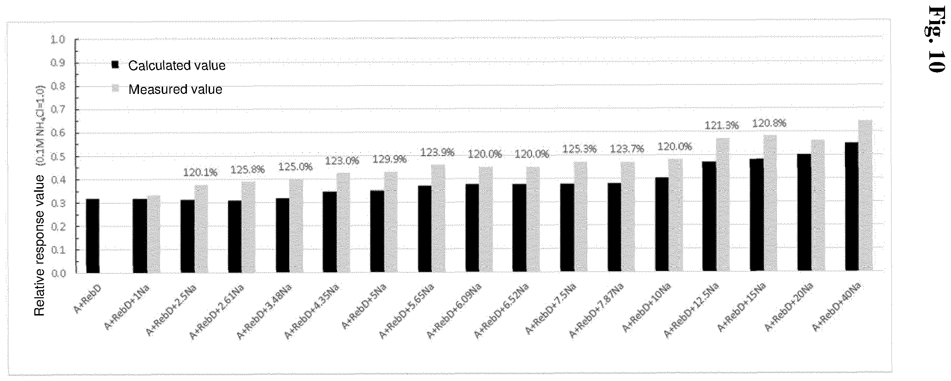

FIG. 10 shows the results (the average; n = 5). As shown in FIG. 10, when sodium gluconate (GluNa) was mixed with the D-allulose (A) + RebD solution, the chorda tympani nerve responses were increased apparently in most cases. When the concentration of GluNa ranged from 2.5 to 15.0 mM (5.75 to 34.5 mg/100 ml in terms of sodium), in particular, each measured value was strongly increased and was 120% or higher than the corresponding calculated value (in the case of the other concentrations, these measured values were less than 120% of the corresponding calculated values). Note that the "%" over each bar in the graph indicates a value of the measured value / the calculated value x 100 (%).

### EXAMPLE 12 Evaluation of Various Sweet Substances in the Presence of Inhibitor of Sweet Taste Receptor (T1R2/T1R3)

### Experimental Method

Sample solutions were prepared, including a solution in which 12 w/v% sucrose and 200 ppm lactisole were dissolved into pure water (sucrose-based Brix was about 12; 48 kcal/100 ml) and various sweet substance solutions (solutions in which each sweet substance and 200 ppm lactisole were dissolved into pure water). Each sweet substance was blended so as to have an approximately equal degree of sweetness of 12 w/v% sucrose (corresponding to about Brix 12) while the known degree of sweetness of each sweet substance was used for calculation. Specifically, the sample solutions were prepared such that 200 ppm lactisole and each of 200 ppm sucralose, 16.5 w/v% sorbitol, 17.91 w/v% D-xylose, 13 w/v% xylitol, and 17 w/v% D-ribose were dissolved in pure water. Regarding the sensory evaluation, sensory-trained persons (5 to 6 subjects) were panelists who conducted a spit test as in Example 1. The sweetness intensity of each sample solution was scored by using VAS scale. The sweetness intensity of each solution was calculated as a relative value (%) while the sweetness intensity of the sample solution (12 w/v% sucrose + 200 ppm lactisole) was set to 100%. When the value was 50% or more, the substance was considered to be a sucrose-like substance, the taste of which is close to that of sucrose; and when the value was less than 50%, the substance was considered to be a substance, the taste of which is far from that of sucrose.

### Results

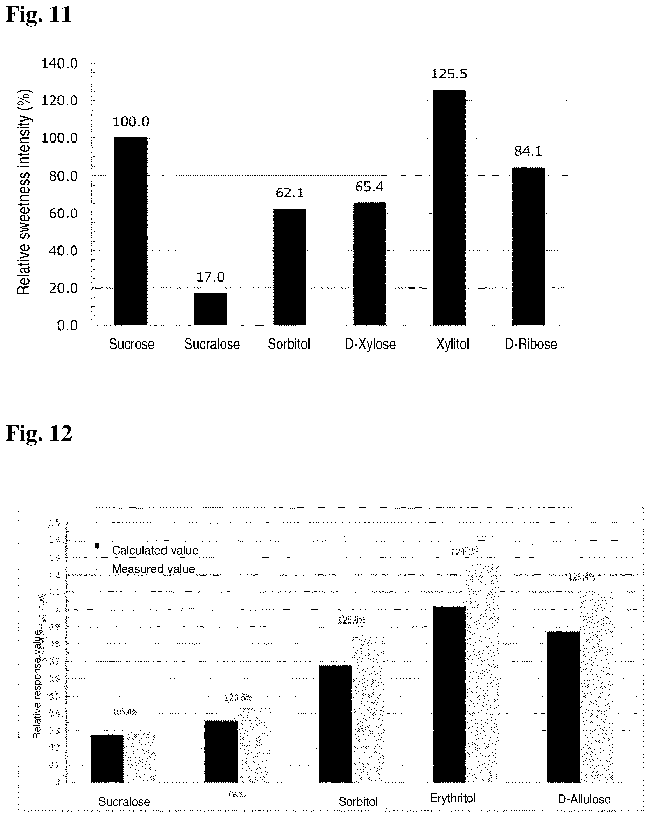

FIG. 11 shows the results (the average; n = 5 to 6). As shown in FIG. 11, when the remaining sweetness intensity of the sucrose solution in the presence of lactisole was set to 100%, the relative value for the sweetness intensity of each of sorbitol, D-xylose, xylitol, and D-ribose was equal to or more than 50%. This indicates that these sweet substances are each a sweet substance having sweetness intrinsically close to that of sucrose.

### EXAMPLE 13 Evaluation of Sweetness Enhancement Effect of Sodium using Animal Model

### Experimental Method

The same method as of Example 6 was used to evaluate (n = 2 to 5) the sweetness enhancement effect of sodium while the number of test animals was increased.

### Results

FIG. 12 shows the results. As shown in FIG. 12, substantially the same results as of Example 6 were obtained even when the number of test animals was increased.

### EXAMPLE 14 Evaluation of Sweet Substance in the Presence of Lactisole and Phlorizin

### Experimental Method

Sucrose, lactisole, and/or phlorizin were dissolved in pure water at ratios designated in Table 12 below to prepare sample solutions. Regarding the sensory evaluation, sensory-trained persons (3 subjects) were panelists who conducted a spit test as in Example 1. The sweetness intensity of each sample was scored by using VAS scale. The sweetness intensity of each solution was calculated as a relative value (%) while the sweetness intensity of the 12 w/v% sucrose solution was set to 100%.

**Table 12**

| Content | 13-1 | 13-2 | 13-3 |
|---|---|---|---|
| Sucrose (w/v%) | 12 | 12 | 12 |
| Lactisole (ppm) | 0 | 100 | 100 |
| Phlorizin (µM) | 0 | 0 | 500 |

### Results

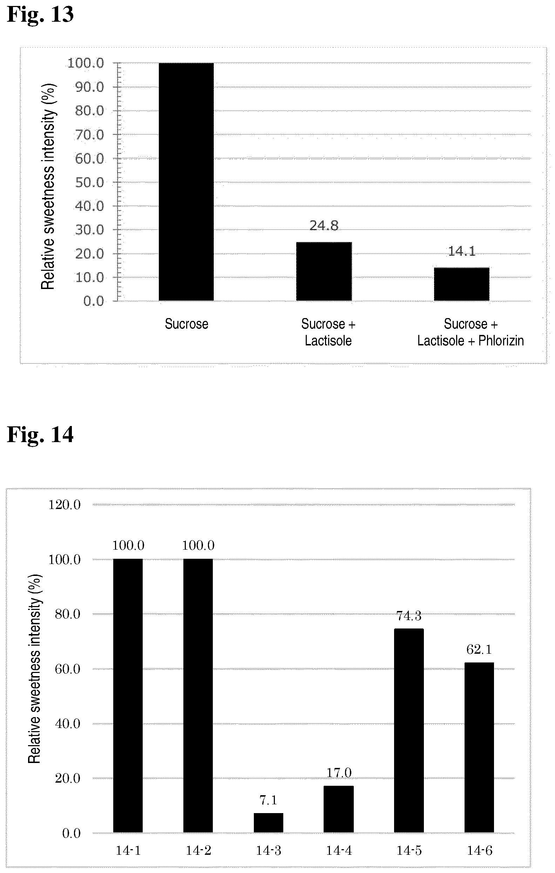

FIG. 13 shows the results (the average; n = 3). As shown in FIG. 13, addition of lactisole caused the sweetness intensity to decrease to 24.8%. Further, addition of both lactisole and phlorizin caused the total sweetness intensity to decrease to 14.1%. When compared to the case of adding lactisole alone, additional phlorizin caused the sweetness intensity to decrease by about 60%. The above has suggested an involvement of SGLT1 in a response other than the response through the sweet taste receptor.

### EXAMPLE 15 Evaluation of Sweet Substance in the Presence of Lactisole at Different Concentrations

### Experimental Method

Sucrose, sucralose or sorbitol and lactisole were dissolved in pure water at ratios designated in Table 12 below to prepare sample solutions. Regarding the sensory evaluation, sensory-trained persons (3 to 4 subjects) were panelists who conducted a spit test as in Example 1. The sweetness intensity of each sample solution was scored by using VAS scale. As for the solutions 14-3 and 14-5 wherein 100 ppm lactisole was used, a relative value (%) of the sweetness intensity was calculated while the sweetness intensity of the solution 14-1 (12 w/v% sucrose + 100 ppm lactisole) was set to 100%, and as for the solutions 14-4 and 14-6 wherein 200 ppm lactisole was used, a relative value (%) of the sweetness intensity was calculated while the sweetness intensity of the solution 14-2 (12 w/v% sucrose + 200 ppm lactisole) was set to 100%.

**Table 13**

| | 14-1 | 14-2 | 14-3 | 14-4 | 14-5 | 14-6 |
|---|---|---|---|---|---|---|
| Sucrose (w/v%) | 12 | 12 | | | | |
| Sucralose (ppm) | | | 200 | 200 | | |
| Sorbitol (w/v%) | | | | | 16.5 | 16.5 |
| Lactisole (ppm) | 100 | 200 | 100 | 200 | 100 | 200 |

### Results

FIG. 14 shows the results (the average; n = 3 to 4). As shown in FIG. 14, the trend of remaining sweetness intensity was not changed when lactisole was used at a concentration of 100 ppm or 200 ppm.

### EXAMPLE 16 Evaluation of Tagatose with Inhibitor of Sweet Taste Receptor (T1R2/T1R3)

### Experimental Method

Sucrose or D-tagatose and lactisole were dissolved in pure water at ratios designated in Table 14 below to prepare sample solutions. D-tagatose was blended so as to have an approximately equal degree of sweetness of 12 w/v% sucrose (corresponding to about Brix 12) while the known degree of sweetness of D-tagatose was used for calculation. Regarding the sensory evaluation, sensory-trained persons (4 subjects) were panelists who conducted a spit test as in Example 1. The sweetness intensity of each sample solution was scored by using VAS scale. The sweetness intensity of each solution was calculated as a relative value (%) while the sweetness intensity of the solution 15-1 (12 w/v% sucrose + 100 ppm lactisole) was set to 100%. When the value was 50% or more, the substance was considered to be a sucrose-like substance, the taste of which is close to that of sucrose; and when the value was less than 50%, the substance was considered to be a substance, the taste of which is far from that of sucrose.

### Results

Table 14 below shows the results (the average; n = 4).

**Table 14**

| | 15-1 | 15-2 |
|---|---|---|
| Sucrose (w/v%) | 12 | |
| D-tagatose (w/v%) | | 13.3 |
| Lactisole (ppm) | 100 | 100 |
| Relative sweetness intensity (%) | 100.0 | 66.2 |

When the remaining sweetness intensity of the sucrose solution in the presence of lactisole was set to 100%, the relative value for the sweetness intensity of D-tagatose was equal to or more than 50%. This indicates that D-tagatose is also a sweet substance having sweetness intrinsically close to that of sucrose.

### EXAMPLE 17 Sensory Evaluation of Taste Quality in the Presence of Sodium

### Experimental Method

Combinations of various sweet substances were dissolved in pure water at ratios designated in Table 15 below to prepare sample solutions 15-1 to 15-8. Next, 8% sucrose solution was used as a control solution and the sweetness quality of each sample solution was evaluated in the same manner as Example 4. Sensory-trained persons (3 to 7 subjects) were panelists who conducted evaluation. Note that the amount of sweet substances contained in each sample solution was designed, in calculation, to be equal to that of the control solution (about Brix 8).

**Table 15**

| | 15-1 | 15-2 | 15-3 | 15-4 | 15-5 | 15-6 | 15-7 | 15-8 | Control |
|---|---|---|---|---|---|---|---|---|---|
| Tagatose (w/v%) | 1.78 | 1.78 | 0 | 0 | 0 | 0 | 0 | 0 | 0 |
| D-allulose (w/v%) | 0 | 0 | 0 | 0 | 1.14 | 1.14 | 0 | 0 | 0 |
| Erythritol (w/v%) | 0 | 0 | 0 | 0 | 1.14 | 1.14 | 0.714 | 0.714 | 0 |
| Sucrose (w/v%) | 0 | 0 | 1 | 1 | 0 | 0 | 0.5 | 0.5 | 8 |
| Glucose (w/v%) | 0 | 0 | 3.5 | 3.5 | 0 | 0 | 0 | 0 | 0 |
| Fructose (w/v%) | 0 | 0 | 0 | 0 | 0 | 0 | 0.40 | 0.40 | 0 |
| MogV(ppm) | 0 | 0 | 0 | 0 | 74.16 | 74.16 | 74.16 | 74.16 | 0 |
| RebD(ppm) | 284.2 | 284.2 | 0 | 0 | 106.57 | 106.57 | 106.57 | 106.57 | 0 |
| RebM (ppm) | 0 | 0 | 161.5 | 161.5 | 86.58 | 86.58 | 86.58 | 86.58 | 0 |
| Thaumatin (ppm) | 0 | 0 | 5 | 5 | 0 | 0 | 0 | 0 | 0 |
| Sodium gluconate (mM) | 0 | 5 | 0 | 5 | 0 | 5 | 0 | 5 | 0 |
| Sodium content (mg/100 ml) | 0 | 11.5 | 0 | 11.5 | 0 | 11.5 | 0 | 11.5 | 0 |
| Energy (Kcal/100 ml) | 3.56 | 3.56 | 18 | 18 | 0 | 0 | 3.6 | 3.6 | 32 |

### Results

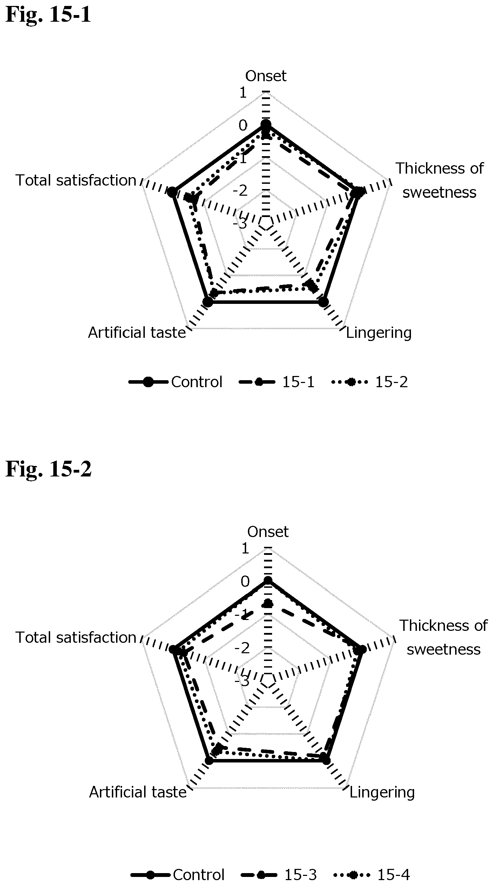

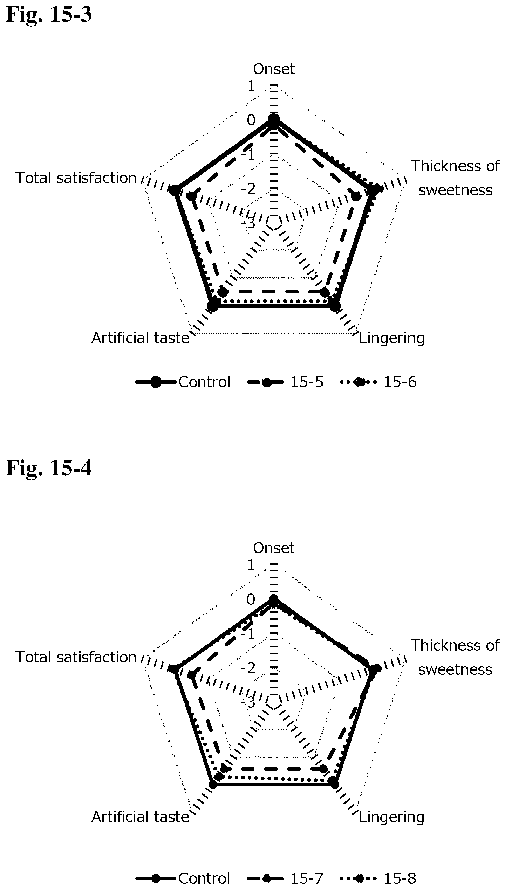

FIGS. 15-1 to 15-4 and Table 16 collectively provide the results. Table 16 shows the scores of the evaluation items of each solution indicated in FIGS. 15-1 to 15-4, the averages thereof, and the radar chart area ratios. Each area ratio was represented as a number when the control solution was set to 100.

**Table 16**

| | 15-1 | 15-2 | 15-3 | 15-4 | 15-5 | 15-6 | 15-7 | 15-8 | Control |
|---|---|---|---|---|---|---|---|---|---|
| Onset of sweetness | -0.33 | -0.17 | -0.67 | 0.00 | -0.17 | 0.00 | -0.14 | -0.17 | 0 |
| Thickness of sweetness | -0.17 | 0.08 | 0.00 | -0.17 | -0.50 | 0.17 | 0.14 | 0.07 | 0 |
| Lingering sweetness | -0.67 | -0.50 | -0.17 | 0.00 | -0.50 | -0.17 | -0.57 | -0.14 | 0 |
| Artificial taste | -0.33 | -0.33 | -0.50 | -0.33 | -0.50 | -0.17 | -0.57 | -0.29 | 0 |
| Total satisfaction | -0.67 | -0.50 | -0.33 | -0.17 | -0.50 | 0.00 | -0.50 | 0.07 | 0 |
| Evaluation items average | -0.43 | -0.28 | -0.33 | -0.13 | -0.43 | -0.03 | -0.33 | -0.09 | 0 |
| Radar chart area ratio | 72.96 | 81.91 | 78.83 | 91.23 | 73.15 | 97.78 | 79.39 | 93.94 | 100 |

The above results demonstrate that the taste quality of every combination of sweet substances became closer to that of sucrose.

## Claims

1. A food or beverage comprising:
(a) a sweet substance that induces a response through a taste-related molecule other than the sweet taste receptor T1R2/T1R3;
(b) a sodium source; and
(c) a naturally occurring high-intensity sweet substance having a good taste quality,
wherein the amount of ingredient (b) is 11.5 to 46 mg/100 ml in terms of sodium and the amount of ingredient (c) is at a sweetness threshold or more.

2. The food or beverage according to claim 1, wherein the taste-related molecule other than the sweet taste receptor T1R2/T1R3 is selected from GLUTs, SGLTs and Kir6.1/SUR1 complex.

3. The food or beverage according to claim 1 or 2, wherein the ingredient (a) is a non-caloric sweetener.

4. The food or beverage according to claim 3, wherein the non-caloric sweetener is selected from non-caloric hexoses, pentoses, tetroses, polysaccharides, a terminal sugar of which is aldose or ketose, sugar alcohols, and combinations thereof.

5. The food or beverage according to claim 4, wherein the non-caloric sweetener is selected from erythritol, D-allulose, sorbitol, D-xylose, xylitol, D-ribose, D-tagatose and combinations thereof.

6. The food or beverage according to claim 1 or 2, wherein ingredient (a) is a caloric sweetener.

7. The food or beverage according to claim 5, wherein the caloric sweetener is selected from sucrose, glucose, fructose and combinations thereof.

8. The food or beverage according to any one of claims 1 to 7, wherein the ingredient (c) is selected from rebaudioside D, rebaudioside M, neohesperidin dihydrochalcone, glycyrrhizin, thaumatin, monellin, a mogroside, rubusoside, curculin, mabinlin, brazzein, pentadin, phyllodulcin, hernandulcin, miraculin, a sweet component contained in *Siraitia grosvenorii* plant, a sweet component contained in *Glycyrrhiza glabra* plant, a sweet component contained in *Rubus suavissimus S. Lee* plant, a sweet component contained in *Hydrangea macrophylla var. thunbergii* plant, a sweet component contained in *Sclerochiton ilicifolius* plant, a sweet component contained in *Thaumataococcus daniellii Benth* plant, a sweet component contained in *Dioscoreophyllum volkensii* plant, a sweet component contained in *Curculigo latifolia* plant, a sweet component contained in *Richadella dulcifica* plant, a sweet component contained in *Pentadiplandra brazzeana* plant, a sweet component contained in *Capparis masaikai* plant, a sweet component contained in *Lippia dulcis* plant, derivatives thereof, and combinations thereof.

9. The food or beverage according to any one of claims 1 to 5 and 8, wherein the total energy thereof is 0 to 5 Kcal/100 ml.

10. The food or beverage according to any one of claims 1, 2, and 6 to 8, wherein the total energy TE thereof is 0 < TE ≤ 24 Kcal/100 ml.

11. The food or beverage according to any one of claims 1 to 10, wherein the amount ratio between ingredient (c) and ingredient (a) is 1:100000 to 1:5.

12. The food or beverage according to any one of claims 1 to 10, wherein a blending ratio of ingredient (a) to the whole food or beverage is 0.5 to 10% and a blending ratio of ingredient (c) to the whole food or beverage is 20 to 550 ppm.

13. The food or beverage according to any one of claims 1 to 12, wherein ingredient (a) comprises at least one sweet substance selected from glucose, sucrose, fructose, erythritol, D-allulose, sorbitol, D-xylose, xylitol, D-tagatose and D-ribose; and ingredient (c) comprises at least one sweet substance selected from rebaudioside D, rebaudioside M and mogroside V.

14. A method of screening for a sweet substance, comprising the step of evaluating a taste response mediated by a candidate substance in the presence of an inhibitor of a sweet taste receptor T1R2/T1R3 or an inhibitor of a taste-related molecule other than the sweet taste receptor T1R2/T1R3.

15. Method according to claim 14, wherein the taste-related molecule is selected from GLUTs, SGLTs and Kir6.1/SUR1 complex; and the inhibitors are selected from lactisole, gymnemic acid, phlorizin, phloretin, fasentin, STF31, WZB117, BAY-876, cytochalasin B, sotagliflozin, ipragliflozin, empagliflozin, canagliflozin, dapagliflozin, sergliflozin, tofogliflozin and luseogliflozin.
